# EUROPEAN PATENT SPECIFICATION

(11) **EP 3 736 114 B1**
(45) Date of publication and mention of the grant of the patent: **12.07.2023**
(21) Application number: 20183517.0
(22) Date of filing: 08.10.2015
(51) Int. Cl.: B29C 65/22, B65B 7/28, B65B 51/10, B29C 65/74, B29C 65/78, B29C 69/00, B65B 7/16, B65B 31/02, B29C 65/38

(54) **APPARATUS AND PROCESS FOR PACKAGING A PRODUCT**
VORRICHTUNG UND VERFAHREN ZUM VERPACKEN EINES PRODUKTS
APPAREIL ET PROCÉDÉ POUR LE CONDITIONNEMENT D'UN PRODUIT

(30) Priority: 10.10.2014 EP 14188562
(43) Date of publication of application: 11.11.2020
(62) Divisional of application: 15781329.6
(73) Proprietor: Cryovac, LLC, Charlotte, NC 28208 (US)
(72) Inventor: RIZZI, Jvanohe, I-20025 Legnano (MI) (IT); CHIODINI, Sergio, I-20087 Robecco sul Naviglio (MI) (IT); CAPITANI, Stefano, I-20152 Milano (IT)
(74) Representative: PGA S.p.A., Milano, Succursale di Lugano

(56) References cited:
- EP-A1- 2 905 233
- WO-A1-2013/153104
- GB-A- 2 023 491
- US-A- 4 356 955

## Description

### Technical field

The present invention relates to an apparatus and to a process for packaging of a product. In accordance with certain aspects, the invention relates to an apparatus and process for packaging a product under a controlled atmosphere or under vacuum. In accordance with other aspects the invention relates to an apparatus and process for skin packaging of a product. In particular, the apparatus and process according to the invention adopt an innovative heater for the heat sealing of plastic films.

### Background art

Plastic containers are commonly used for the packaging of food and for a wide variety of other items wherein a plastic film forming a skin or a lid is bonded to the container, e.g. by the application of heat, or wherein a plastic film is wrapped around the item(s) to be packages and then closed by heat sealing.

One method of bonding the lid to the tray involves use of a laminated plastic lid having a layer of metal foil: a power supply provides an electrical current to a nearby induction coil which induces an electrical current into the metal foil to develop heat which melts portions of the lid and container and fuses the lid to the container lip. For example, EP0469296 discloses an induction sealing assembly using a single turn coil to seal a plastic lid a plastic container. The assembly includes a nest having a recess for holding a container to be sealed, and a movable sealing head for holding a lid or foil membrane and for positioning the lid relative to an opening in the container. Means are provided to secure a portion of the sealing head against a portion of the nest to form an air-tight chamber between a lower portion of the sealing head and an upper portion of the nest. The induction sealing assembly uses a vacuum source and a source of inert gas to flush air from the container prior to sealing. An induction coil mounted in the sealing head induces a heating electrical current in the lid to seal the lid to the container.

In order to package products, in particular food products, vacuum packages have been developed in the past.

Among the known vacuum packaging processes, vacuum skin packaging is commonly employed for packaging food products such as fresh and frozen meat and fish, cheese, processed meat, ready meals and the like. Vacuum skin packaging is described for instance in FR 1 258 357, FR 1 286 018, AU 3 491 504, US RE 30 009, US 3 574 642, US 3 681 092, US 3 713 849, US 4 055 672, and US 5 346 735.

Vacuum skin packaging is basically a thermoforming process. In particular, the product is typically placed on a rigid or semi-rigid support (such as a tray, a bowl or a cup). The support with the product placed thereon is put in a vacuum chamber, where a film of thermoplastic material, held by vacuum in a position above the product placed on the support, is heated to soften it. The space between the support and the film is then evacuated and finally vacuum above the film is released to cause the film to drape down all around the product and seal to the surface of the support not covered by the product, thus forming a tight skin around the product and on the support.

US 2007/0022717 discloses a machine for gastight packaging an object using a film material. The machine has a lower tool for supporting two trays and an upper tool having cutting devices housed inside the upper tool and facing the lower tool. A film is interposed between the upper tool and the lower tool. The upper and lower tools are first closed the one against the other and then the film is cut to the size of the peripheral rims of the trays by the cutting devices operative inside the upper tool. Sealing tools heat seal the cut regions of the film to the peripheral rim of the tray. A vacuum is situated in the surrounding region of the tray to cause deep-drawing of the film. This reference also mentions that the same device can be used for sealing trays with films that are not deep drawn to form a skin over the product.

US 2005/0257501 discloses a machine for packaging a product arranged in a tray. The machine has a lower tool for supporting the tray and an upper tool with a cutting device. During operation, the film is clamped along an edge surrounding the tray and is deformed by the upper tool in a direction extending away the product. The space surrounding the product is then evacuated, the film and the edge of the tray are sealed and the film is then cut by the cutting device.

WO2011/012652 shows an apparatus for packaging a product in a tray. The machine comprises a first film transfer plate configured for holding a film sheet, heating the film sheet, bringing the film sheet to a position above a tray with the product arranged thereon and air tightly fixing the film sheet to the tray. A second film transfer plate is also present. As for the first film transfer plate also the second film transfer plate is configured for holding a film sheet, heating the film sheet, bringing the film sheet to a position above a tray with the product arranged thereon and air tightly fixing the film sheet to the tray. During a first operating step of the machine, the first film transfer plate holds a first film sheet and heats the first film sheet, while the second film transfer plate releases a second film sheet thereby allowing the second sheet to be drawn into a first tray; and during a second operating step of the machine, the second film transfer plate holds a third film sheet and heats the third film sheet, while the first film transfer plate releases the first film sheet thereby allowing the first film sheet to be drawn into a second tray. The machine further comprises a rotating cylinder suitable for rotating about its axis X, the first film transfer plate and the second film transfer plate being connected to the rotating cylinder so that, when the rotating cylinder rotates about its axis X, the positions of the first film transfer plate and the second film transfer plate are exchanged. A vacuum arrangement allows removing air from within the tray underneath the film sheet (positioned either by the first or by the second film transfer plate) through the at least one hole present in the tray. The film transfer plates are configured to release the film sheet thereby allowing the film sheet to be drawn into the tray while the vacuum arrangement is removing air from within the tray.

WO8500339 discloses a packaging apparatus where a tray is hosted in a lower tool seat and where the upper tool comprises a heating head, which is in a single heated body. The heating head has a peripheral protruding portion acting on a peripheral band of a film portion of a film to heat seal said peripheral portion to a corresponding horizontal rim of the tray. A central portion of the heating head is covered by insulating material in the form of a plate. The sealing can be performed by way of an impulse sealing technique or by other sealing techniques.

GB958602 shows a packaging apparatus having an impulse heating system to warm a peripheral heater acting on a film peripheral band to heat seal this latter.

WO2013/153104A1 discloses a sealing device with a mold having a first heating area and second heating area extending inside the first heating area, wherein each heating area is independently controllable and is formed by plurality of LEDs.

GB 2023491A discloses a platen having a single electric heater 20.

US 4,356,955 discloses a platen including an annular surface adapted to heat seal a piece of film to the lip of a cup, and a central projection which is hotter than the annular surface to cause greater shrinkage in a central portion than in the surrounding portion of the sealed piece of film.

Although, at least some the above described solutions have been adopted with satisfaction, it remains a need to further improve control of the heating of the plastic film during heat sealing.

Thus, it is an object of the invention to render available a process and an apparatus for heat sealing portions of a plastic film, e.g. to a support hosting a product or to other plastic films or film portions, wherein at least during a heat sealing phase the control of heat fed to the heating surfaces active on the film is improved.

It is a further object to conceive a process and apparatus capable of reducing energy consumption while efficiently providing the heat required for heat sealing.

Additionally is an object of the invention an apparatus and process where heat sealing may efficiently take place even with thermosensitive films, such as heat shrinkable films.

It is an auxiliary object of the invention conceiving a process and an apparatus which can operate both for skin packaging and for modified atmosphere packaging.

### Summary of the invention

One or more of the objects specified above are substantially achieved by a process and by an apparatus according to any one of the appended claims.

### Brief description of the drawings

The present invention will become clearer by reading the following detailed description, given by way of example and not of limitation, to be read with reference to the accompanying drawings, wherein:
- Figure 1 is a schematic side view layout of an apparatus according to aspects of the invention wherein a film is provided from a film roll and pre-cut into film sheets outside with respect to a packaging assembly where the pre-cut film sheets are heat sealed to a support, e.g. in the form of a tray;
- Figure 1A is a schematic side view layout of an apparatus according to aspects of the invention wherein a film is provided from a film roll and fed to a packaging assembly where the film is heat sealed to a support, e.g. in the form of a tray, and cut into discrete film sheets either immediately before heat sealing or after film sealing;
- Figure 2 is a schematic front elevation view relating to a first embodiment of a packaging assembly, which may be present in a packaging apparatus of the type shown figure 1A, according to aspects of the invention;
- Figures 3-11 are schematic front elevation views of the first embodiment of the packaging assembly of figure 2 representing consecutive phases of a packaging process. The apparatus and process according to these figures may - for instance - be used for heat sealing a lid onto a tray with either a modified atmosphere in the tray or with regular atmosphere being left in the tray;
- Figure 12 is a diagram indicating, on a first axis, the steps of a packaging process followed by the apparatus of figure 1A when using the packaging assembly of figures 2-11 and indicating, on a second axis, the time in seconds, wherein in the diagram area the time intervals for each packaging process step are represented with gray patterned areas;
- Figure 13 is a schematic front elevation view relating to a second embodiment of a packaging assembly, which may be present in a packaging apparatus of the type shown figure 1A, according to aspects of the invention;
- Figures 14-21 are schematic front elevation views of the second embodiment of the packaging assembly of figure 13 representing consecutive phases of a packaging process. The apparatus and process according to these figures may - for instance - be used for heat sealing a lid onto a tray with either a modified atmosphere in the tray or with regular atmosphere being left in the tray;
- Figure 22 is a diagram indicating, on a first axis, the steps of a packaging process followed by the apparatus of figure 1A when using the packaging assembly of figures 13-21 and indicating, on a second axis, the time in seconds, wherein in the diagram area the time intervals for each packaging process step are represented with gray patterned areas;
- Figure 23 is a schematic front elevation view relating to a third embodiment of a packaging assembly, which may be present in a packaging apparatus of the type shown figure 1A, according to aspects of the invention. In this figure the packaging assembly includes two upper tools which can be pivotally operated; alternatively it is possible using a packaging assembly having only one upper tool and a transfer device for moving the pre-cut film sheets into the packaging assembly as shown in figure 1;
- Figures 24-30 are schematic front elevation views of the third embodiment of the packaging assembly of figure 23 representing consecutive phases of a packaging process. The apparatus and process according to these figures may - for instance - be used for heat sealing a lid onto a tray with either a modified atmosphere in the tray or with regular atmosphere being left in the tray;
- Figure 31 is a diagram indicating, on a first axis, the steps of a packaging process followed by the apparatus of figure 1 when using the packaging assembly of figures 23-30 and indicating, on a second axis, the time in seconds, wherein in the diagram area the time intervals for each packaging process step are represented with gray patterned areas;
- Figure 32 is a perspective view of a first alternative heating head according to aspects of the invention;
- Figure 32A represents a first option of the structure of a first conductive element, in interrupted cross section taken according to section plane A-A of figure 32;
- Figure 32B represents a second option of the structure of a first conductive element, in interrupted cross section taken according to section plane A-A of figure 32;
- Figure 33 is a perspective view of a second alternative heating head according to aspects of the invention;
- Figure 33A represents a first option of the structure of a second conductive element, in interrupted cross section according to section plane C-C of figure 33;
- Figure 33B represents a second option of the structure of a second conductive element, in interrupted cross section according to section plane C-C of figure 33;
- Figure 34 is a perspective view of a third alternative heating head according to aspects of the invention;
- Figure 34A represents a structure of a first conductive element, in interrupted cross section taken according to section plane D-D of figure 34;
- Figure 34B represents a structure of a second conductive element, in interrupted cross section taken according to section plane E-E of figure 34;
   Note figures 32 to 34 (and thus the cross sections of figures 32A, 32B, 33A, 33B, 34A, 34B) are represented upside down compared to the operating condition of the components shown therein.
- Figure 35 is a schematic view of a supply unit and control device for control of energy, in particular electric energy, fed to the heater or heaters according to aspects of the invention;
- Figure 36 is a perspective view of a heating bar according to aspects of the invention which may be used in the apparatus of figures 37 and 38;
- Figure 37 is a schematic side view layout of a further apparatus according to aspects of the invention; and
- Figure 38 represents a structure of a heater of the apparatus of figure 37 according to aspects of the invention.

### Definitions and conventions

It should be noted that in the present detailed description corresponding parts shown in the various figures are indicated with the same reference numeral through the figures. Note that the figures are not in scale and thus the parts and components shown therein are schematic representations.

Although certain aspects of the invention may find application for packaging a product into a packaging solely formed of one or more plastic films, the following description will mainly refer to packaging of a product positioned on a support 4 to which a plastic film is heat sealed. Note the product may be a food product or not.

As used herein support 4 means either a substantially flat element onto which a product is placed, or a container of the type having a base wall 4a, a side wall 4b and a top rim 4c radially emerging from the side wall 4b, the container defining a volume into which the product is positioned.

The tray or supports 4 may have a rectangular shape or any other suitable shape, such as round, square, elliptical etcetera, and may be formed either while the packaging process takes place, e.g. at a thermoforming station of the packaging apparatus, or they may be previously manufactured and then fed to the packaging apparatus.

Also note that the aspects of the invention described and claimed herein are applicable to an apparatus or to a process using pre-made trays and to so called 'thermo-forming processes or machines' that is to apparatus and processes where the support or tray is thermoformed online starting from roll of plastic.

### Carbon structure

As used herein carbon structure refers to a structure having electrically conductive capability.

The electrically conductive carbon structure includes (or is exclusively formed of) one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

It is to be noted that the electrically conductive elements (first and/or second) described herein may be formed by an electrically conductive carbon structure completely formed in one or more of the carbon allotropes disclosed above.

For example, the first and/or second electrically conductive element may be exclusively formed in graphite, or may be exclusively formed in one single graphene layer, or may be exclusively formed in a plurality of mutually overlapping graphene layers, or may be exclusively formed in a fullerene structure of carbon nanotubes, or may be formed in a fullerene structure of carbon nano-fibers, or may be exclusively formed by a combination of one or more of the mentioned carbon allotropes.

According to a further variant the electrically conductive carbon structure may comprise a structure formed by carbon filaments which are adjacently in contact to each other to form a conductive body or by carbon filaments embedded in a plastic resin matrix: in this latter case the carbon filaments may be adjacently placed and electrically connected to each other at prescribed sections such as at ends thereof.

Depending upon its specific structure and on the technology available to the manufacturer, the carbon structure may be applied to a support to form a heater in various manners: for instance a band or a layer or filament of carbon structure may be glued to a support; or a band or layer or filament may be formed from particles deposited on a support (e.g., sprayed or painted), or the carbon structure in any of the above structures could be embedded into a resin matrix during manufacture (e.g, embedded in a reinforced resin matrix).

### The trays

When the support takes the form of a tray it may be made of a single layer or, preferably, of a multi-layer polymeric material.

In case of a single layer material suitable polymers are for instance polystyrene, polypropylene, polyesters, high density polyethylene, poly(lactic acid), PVC and the like, either foamed or solid.

Preferably the tray 4 is provided with gas barrier properties. As used herein such term refers to a film or sheet of material which has an oxygen transmission rate of less than 200 cm3 /m2-day-bar, less than 150 cm3 /m2-day-bar, less than 100 cm3 /m2-day-bar as measured according to ASTM D-3985 at 23°C and 0% relative humidity.

Suitable materials for gas barrier monolayer thermoplastic trays 4 are for instance polyesters, polyamides and the like.

In case the tray 4 is made of a multi-layer material, suitable polymers are for instance ethylene homo- and co-polymers, propylene homo- and co-polymers, polyamides, polystyrene, polyesters, poly(lactic acid), PVC and the like. Part of the multi-layer material can be solid and part can be foamed.

For example, the tray 4 may comprises at least one layer of a foamed polymeric material chosen from the group consisting of polystyrene, polypropylene, polyesters and the like.

The multi-layer material may be produced either by co-extrusion of all the layers using co-extrusion techniques or by glue- or heat-lamination of, for instance, a rigid foamed or solid substrate with a thin film, usually called "liner".

The thin film may be laminated either on the side of the tray 4 in contact with the product P or on the side facing away from the product P or on both sides. In the latter case the films laminated on the two sides of the tray 4 may be the same or different. A layer of an oxygen barrier material, for instance (ethylene-co-vinyl alcohol) copolymer, is optionally present to increase the shelf-life of the packaged product P.

Gas barrier polymers that may be employed for the gas barrier layer are PVDC, EVOH, polyamides, polyesters and blends thereof. The thickness of the gas barrier layer will be set in order to provide the tray with an oxygen transmission rate suitable for the specific packaged product.

The tray may also comprise a heat sealable layer. Generally, the heat-sealable layer will be selected among the polyolefins, such as ethylene homo- or co-polymers, propylene homo- or co-polymers, ethylene/vinyl acetate copolymers, ionomers, and the homo- and co-polyesters, e.g. PETG, a glycol-modified polyethylene terephthalate. Additional layers, such as adhesive layers, to better adhere the gas-barrier layer to the adjacent layers, may be present in the gas barrier material for the tray and are preferably present depending in particular on the specific resins used for the gas barrier layer.

In case of a multilayer material used to form the tray 4, part of this structure may be foamed and part may be unfoamed. For instance, the tray 4 may comprise (from the outermost layer to the innermost food-contact layer) one or more structural layers, typically of a material such as foam polystyrene, foam polyester or foam polypropylene, or a cast sheet of e.g. polypropylene, polystyrene, poly(vinyl chloride), polyester or cardboard; a gas barrier layer and a heat-sealable layer.

The tray 4 may be obtained from a sheet of foamed polymeric material having a film comprising at least one oxygen barrier layer and at least one surface sealing layer laminated onto the side facing the packaged product, so that the surface sealing layer of the film is the food contact layer the tray. A second film, either barrier or non-barrier, may be laminated on the outer surface of the tray.

Specific tray 4 formulations are used for food products which require heating in conventional or microwave oven before consumption. The surface of the container in contact with the product, i.e. the surface involved in the formation of the seal with the lidding film, comprises a polyester resin. For instance the container can be made of a cardboard coated with a polyester or it can be integrally made of a polyester resin. Examples of suitable containers for the package of the invention are CPET, APET or APET/CPET containers. Such container can be either foamed or not-foamed.

Trays 4 used for lidding or skin applications containing foamed parts, have a total thickness lower than 8 mm, and for instance may be comprised between 0.5 mm and 7.0 mm and more frequently between 1.0 mm and 6.0 mm.

In case of rigid tray not containing foamed parts, the total thickness of the single-layer or multi-layer thermoplastic material is preferably lower than 2 mm, and for instance may be comprised between 0.1 mm and 1.2 mm and more frequently between 0.2 mm and 1.0 mm.

### The supports

The supports may be made with the same materials and structure disclosed for the trays

### The film or film material applicable to trays or supports

The film or film material 18 is applied to the tray 4 to form a lid onto the tray (e.g. for MAP - modified atmosphere packaging) or a skin associated to the tray or support and matching the contour of the product.

The film for skin applications may be made of a flexible multi-layer material comprising at least a first outer heat-sealable layer, an optional gas barrier layer and a second outer heat-resistant layer. The outer heat-sealable layer may comprise a polymer capable of welding to the inner surface of the supports carrying the products to be packaged, such as for instance ethylene homo- or co-polymers, like LDPE, ethylene/alpha-olefin copolymers, ethylene/acrylic acid copolymers, ethylene/methacrylic acid copolymers, and ethylene/vinyl acetate copolymers, ionomers, co-polyesters, e.g. PETG. The optional gas barrier layer preferably comprises oxygen impermeable resins like PVDC, EVOH, polyamides and blends of EVOH and polyamides. The outer heat-resistant layer may be made of ethylene homo- or copolymers, ethylene/cyclic-olefin copolymers, such as ethylene/norbornene copolymers, propylene homo- or co-polymers, ionomers, (co)polyesters, (co)polyamides. The film may also comprise other layers such as adhesive layers or bulk layers to increase thickness of the film and improve its abuse and deep drawn properties. Particularly used bulk layers are ionomers, ethylene/vinyl acetate copolymers, polyamides and polyesters. In all the film layers, the polymer components may contain appropriate amounts of additives normally included in such compositions. Some of these additives are preferably included in the outer layers or in one of the outer layers, while some others are preferably added to inner layers. These additives include slip and anti- block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents and the like additives known to those skilled in the art of packaging films.

One or more layers of the film can be cross- linked to improve the strength of the film and/or its heat resistance. Cross-linking may be achieved by using chemical additives or by subjecting the film layers to an energetic radiation treatment. The films for skin packaging are typically manufactured in order to show low shrink when heated during the packaging cycle. Those films usually shrink less than 15% at 160°C, more frequently lower than 10%, even more frequently lower than 8% in both the longitudinal and transversal direction (ASTM D2732). The films usually have a thickness comprised between 20 microns and 200 microns, more frequently between 40 and 180 microns and even more frequently between 50 microns and 150 microns.

The skin packages are usually "easy-to-open", i.e. they are easily openable by manually pulling apart the two webs, normally starting from a point like a corner of the package where the upper web has purposely not been sealed to the support. To achieve this feature, either the film or the tray can be provided with a suitable composition, allowing easy opening of the package, as known in the art. Typically, the sealant composition and/or the composition of the adjacent layer of the tray and/or the film are adjusted in order to achieve the easy opening feature.

Various mechanisms can occur while opening an easy-to-open package.

In the first one ("peelable easy opening") the package is opened by separating the film and the tray at the seal interface.

In the second mechanism ("adhesive failure") the opening of the package is achieved through an initial breakage through the thickness of one of the sealing layers followed by delamination of this layer from the underlying support or film.

The third system is based on the "cohesive failure" mechanism: the easy opening feature is achieved by internal rupture of a seal layer that, during opening of the package, breaks along a plane parallel to the layer itself.

Specific blends are known in the art to obtain such opening mechanisms, ensure the peeling of the film from the tray surface, such as those described in EP1084186.

On the other hand, in case the film 18 is used for creating a lid on the tray 4, the film material may be obtained by co-extrusion or lamination processes. Lid films may have a symmetrical or asymmetrical structure and can be monolayer or multilayer.

The multilayer films have at least 2, more frequently at least 5, even more frequently at least 7 layers. The total thickness of the film may vary frequently from 3 to 100 micron, in particular from 5 to 50 micron, even more frequently from 10 to 30 micron.

The films may be optionally cross-linked. Cross-linking may be carried out by irradiation with high energy electrons at a suitable dosage level as known in the art. The lid films described above may be heat shrinkable or heat-set. The heat shrinkable films typically show free shrink value at 120°C measured according to ASTM D2732 in the range of from 2 to 80%, more frequently from 5 to 60%, even more frequently from 10 to 40% in both the longitudinal and transverse direction. The heat-set films usually have free shrink values lower than 10% at 120°C, preferably lower than 5% in both the longitudinal and transversal direction (ASTM D 2732). Lid films usually comprise at least a heat sealable layer and an outer skin layer, which is generally made up of heat resistant polymers or polyolefin. The sealing layer typically comprises a heat-sealable polyolefin which in turn comprises a single polyolefin or a blend of two or more polyolefins such as polyethylene or polypropylene or a blend thereof. The sealing layer can be further provided with antifog properties by incorporating one or more antifog additives into its composition or by coating or spraying one or more antifog additives onto the surface of the sealing layer by technical means well known in the art. The sealing layer may further comprise one or more plasticisers. The skin layer may comprises polyesters, polyamides or polyolefin. In some structures, a blend of polyamide and polyester can advantageously be used for the skin layer. In some cases, the lid films comprise a barrier layer. Barrier films typically have an OTR (evaluated at 23°C and 0 % R.H. according to ASTM D-3985) below 100 cm³/(m²·day·atm) and more frequently below 80 cm³/(m²·day·atm). The barrier layer is usually made of a thermoplastic resin selected among a saponified or hydrolyzed product of ethylene-vinyl acetate copolymer (EVOH), an amorphous polyamide and a vinyl-vinylidene chloride and their admixtures. Some materials comprise an EVOH barrier layer, sandwiched between two polyamide layers. The skin layer typically comprises polyesters, polyamides or polyolefin.

In some packaging applications, the lid films do not comprise any barrier layer. Such films usually comprise one or more polyolefin are herein defined.

Non-barrier films typically have an OTR (evaluated at 23°C and 0 % R.H. according to ASTM D-3985) from 100 cm³/(m²·day·atm) up to 10000 cm³/(m²·day·atm), more typically up to 6000 cm³/(m²·day·atm).

Peculiar compositions polyester-based are those used for tray lidding of ready-meals packages. For these films, the polyester resins can make up at least 50%, 60%, 70%, 80%, 90% by weight of the film. These films are typically used in combination with polyester-based supports.

For instance the container can be made of a cardboard coated with a polyester or it can be integrally made of a polyester resin. Examples of suitable containers for the package are CPET, APET or APET/CPET containers, either foamed or not-foamed.

Usually, biaxially oriented PET are used as the lid film due to its high thermal stability at standard food heating/cooking temperatures. Often biaxially oriented polyester films are heat-set, i.e. non-heat-shrinkable. To improve the heat-sealability of the PET lidding film to the container a heat-sealable layer of a lower melting material is usually provided on the film. The heat-sealable layer may be coextruded with the PET base layer (as disclosed in EP-A- 1 ,529,797 and WO2007/093495) or it may be solvent- or extrusion-coated over the base film (as disclosed in US 2,762,720 and EP-A- 1 ,252,008).

Particularly in the case of fresh red meat packages, twin lidding film comprising an inner, oxygen-permeable, and an outer, oxygen-impermeable, lidding film are advantageously used. The combination of these two films significantly prevents the meat discoloration also when the packaged meat extends upwardly with respect to the height of the tray walls, which is the most critical situation in barrier packaging of fresh meat.

These films are described for example in EP1848635 and EP0690012.

The lid film can be monolayer. Typical composition of monolayer films comprise polyesters as herein defined and their blends or polyolefins as herein defined and their blends.

In all the film layers herein described, the polymer components may contain appropriate amounts of additives normally included in such compositions. Some of these additives are preferably included in the outer layers or in one of the outer layers, while some others are preferably added to inner layers. These additives include slip and anti- block agents such as talc, waxes, silica, and the like, antioxidants, stabilizers, plasticizers, fillers, pigments and dyes, cross-linking inhibitors, cross-linking enhancers, UV absorbers, odor absorbers, oxygen scavengers, bactericides, antistatic agents, anti-fog agents or compositions, and the like additives known to those skilled in the art of packaging films.

The films suitable for lidding application can advantageously be perforated, in order to allow the packaged food to breath.

Those films may be perforated by using different technologies available in the art, through laser or mechanical means such as rolls provided with several needles.

The number of perforations per unit area of the film and their dimensions affect the gas permeability of the film.

Microperforated films are usually characterized by OTR value (evaluated at 23°C and 0 % R.H. according to ASTM D-3985) from 2500 cm³/(m²·day·atm) up to 1000000 cm³/(m²·day·atm).

Macroperforated films are usually characterized by OTR (evaluated at 23°C and 0 % R.H. according to ASTM D-3985) higher than 1000000 cm³/(m²·day·atm).

Furthermore, the films herein described for lidding applications can be formulated to provide strong or peelable sealing onto the support. A method of measuring the force of a peelable seal, herein referred to as "peel force" is described in ASTM F-88-00. Acceptable peel force values fare in the range from 100 g/25 mm to 850 g/25 mm, from 150 g/25 mm to 800 g/25 mm, from 200 g/25 mm to 700 g/25 mm.

The desired seal strength is achieved specifically designing the tray and the lid formulations.

In general, one or more layers of the lid film can be printed, in order to provide useful information to the consumer, a pleasing image and/or trademark or other advertising information to enhance the retail sale of the packaged product. The film may be printed by any suitable method, such as rotary screen, gravure or flexographic techniques mas known in the art.

### Definitions and conventions concerning materials

PVDC is any vinylidene chloride copolymers wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

As used herein, the term EVOH includes saponified or hydrolyzed ethylene-vinyl acetate copolymers, and refers to ethylene/vinyl alcohol copolymers having an ethylene comonomer content preferably comprised from about 28 to about 48 mole %, more preferably, from about 32 to about 44 mole % ethylene, and even more preferably, and a saponification degree of at least 85%, preferably at least 90%.

The term "polyamides" as used herein is intended to refer to both homo- and co- or ter-polyamides. This term specifically includes aliphatic polyamides or co-polyamides, e.g., polyamide 6, polyamide 11, polyamide 12, polyamide 66, polyamide 69, polyamide 610, polyamide 612, copolyamide 6/9, copolyamide 6/10, copolyamide 6/12, copolyamide 6/66, copolyamide 6/69, aromatic and partially aromatic polyamides or co-polyamides, such as polyamide 6I, polyamide 6I/6T, polyamide MXD6, polyamide MXD6/MXDI, and blends thereof.

As used herein, the term "copolymer" refers to a polymer derived from two or more types of monomers, and includes terpolymers. Ethylene homopolymers include high density polyethylene (HDPE) and low density polyethylene (LDPE). Ethylene copolymers include ethylene/alpha-olefin copolymers and ethylene/unsaturated ester copolymers. Ethylene/alpha-olefin copolymers generally include copolymers of ethylene and one or more comonomers selected from alpha-olefins having from 3 to 20 carbon atoms, such as 1-butene, 1-pentene, 1-hexene, 1-octene, 4-methyl-1-pentene and the like.

Ethylene/alpha-olefin copolymers generally have a density in the range of from about 0.86 to about 0.94 g/cm3. The term linear low density polyethylene (LLDPE) is generally understood to include that group of ethylene/alpha-olefin copolymers which fall into the density range of about 0.915 to about 0.94 g/cm3 and particularly about 0.915 to about 0.925 g/cm3. Sometimes linear polyethylene in the density range from about 0.926 to about 0.94 g/cm3 is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Another useful ethylene copolymer is an ethylene/unsaturated ester copolymer, which is the copolymer of ethylene and one or more unsaturated ester monomers. Useful unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms.

Ionomers are copolymers of an ethylene and an unsaturated monocarboxylic acid having the carboxylic acid neutralized by a metal ion, such as zinc or, preferably, sodium.

Useful propylene copolymers include propylene/ethylene copolymers, which are copolymers of propylene and ethylene having a majority weight percent content of propylene, and propylene/ethylene/butene terpolymers, which are copolymers of propylene, ethylene and 1-butene.

As used herein, the term "polyolefin" refers to any polymerized olefin, which can be linear, branched, cyclic, aliphatic, aromatic, substituted, or unsubstituted. More specifically, included in the term polyolefin are homo-polymers of olefin, co-polymers of olefin, co-polymers of an olefin and an non-olefinic co-monomer co-polymerizable with the olefin, such as vinyl monomers, modified polymers thereof, and the like. Specific examples include polyethylene homo-polymer, polypropylene homo-polymer, polybutene homo-polymer, ethylene- alpha -olefin co-polymer, propylene- alpha -olefin co-polymer, butene- alpha -olefin co-polymer, ethylene-unsaturated ester co-polymer, ethylene-unsaturated acid co-polymer, (e.g. ethylene-ethyl acrylate co-polymer, ethylene-butyl acrylate co-polymer, ethylene-methyl acrylate co-polymer, ethylene-acrylic acid co-polymer, and ethylene-methacrylic acid co-polymer), ethylene-vinyl acetate copolymer, ionomer resin, polymethylpentene, etc.

The term " polyester" is used herein to refer to both homo-and co- polyesters, wherein homo-polyesters are defined as polymers obtained from the condensation of one dicarboxylic acid with one diol and co- polyesters are defined as polymers obtained from the condensation of one or more dicarboxylic acids with one or more diols. Suitable polyester resins are, for instance, polyesters of ethylene glycol and terephthalic acid, i.e. poly(ethylene terephthalate) (PET). Preference is given to polyesters which contain ethylene units and include, based on the dicarboxylate units, at least 90 mol %, more preferably at least 95 mol %, of terephthalate units. The remaining monomer units are selected from other dicarboxylic acids or diols. Suitable other aromatic dicarboxylic acids are preferably isophthalic acid, phthalic acid, 2,5-, 2,6- or 2,7-naphthalenedicarboxylic acid. Of the cycloaliphatic dicarboxylic acids, mention should be made of cyclohexanedicarboxylic acids (in particular cyclohexane-1 ,4-dicarboxylic acid). Of the aliphatic dicarboxylic acids, the (C3-Ci9)alkanedioic acids are particularly suitable, in particular succinic acid, sebacic acid, adipic acid, azelaic acid, suberic acid or pimelic acid. Suitable diols are, for example aliphatic diols such as ethylene glycol, diethylene glycol, triethylene glycol, propylene glycol, 1 ,3-butane diol, 1 ,4- butane diol, 1 ,5-pentane diol, 2,2-dimethyl-1 ,3-propane diol, neopentyl glycol and 1 ,6-hexane diol, and cycloaliphatic diols such as 1 ,4- cyclohexanedimethanol and 1 ,4-cyclohexane diol, optionally heteroatom- containing diols having one or more rings.

Co-polyester resins derived from one or more dicarboxylic acid(s) or their lower alkyl (up to 14 carbon atoms) diesters with one or more glycol(s), particularly an aliphatic or cycloaliphatic glycol may also be used as the polyester resins for the base film. Suitable dicarboxylic acids include aromatic dicarboxylic acids such as terephthalic acid, isophthalic acid, phthalic acid, or 2,5-, 2,6- or 2,7-naphthalenedicarboxylic acid, and aliphatic dicarboxylic acids such as succinic acid, sebacic acid, adipic acid, azelaic acid, suberic acid or pimelic acid. Suitable glycol(s) include aliphatic diols such as ethylene glycol, diethylene glycol, triethylene glycol, propylene glycol, 1 ,3-butane diol, 1 ,4-butane diol, 1 ,5-pentane diol, 2,2- dimethyl-1 ,3-propane diol, neopentyl glycol and 1 ,6-hexane diol, and cycloaliphatic diols such as 1 ,4-cyclohexanedimethanol and 1 ,4- cyclohexane diol. Examples of such copolyesters are (i) copolyesters of azelaic acid and terephthalic acid with an aliphatic glycol, preferably ethylene glycol; (ii) copolyesters of adipic acid and terephthalic acid with an aliphatic glycol, preferably ethylene glycol; and (iii) copolyesters of sebacic acid and terephthalic acid with an aliphatic glycol, preferably butylene glycol; (iv) co-polyesters of ethylene glycol, terephthalic acid and isophthalic acid. Suitable amorphous co-polyesters are those derived from an aliphatic diol and a cycloaliphatic diol with one or more, dicarboxylic acid(s), preferably an aromatic dicarboxylic acid. Typical amorphous copolyesters include co-polyesters of terephthalic acid with an aliphatic diol and a cycloaliphatic diol, especially ethylene glycol and 1 ,4-cyclohexanedimethanol.

### Detailed description

### First embodiment of the apparatus 1

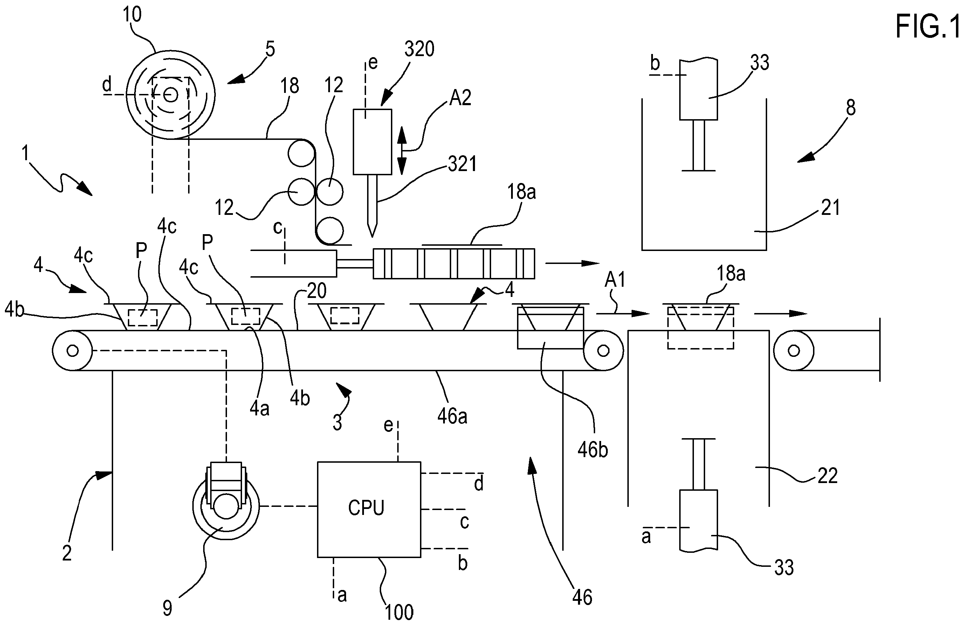

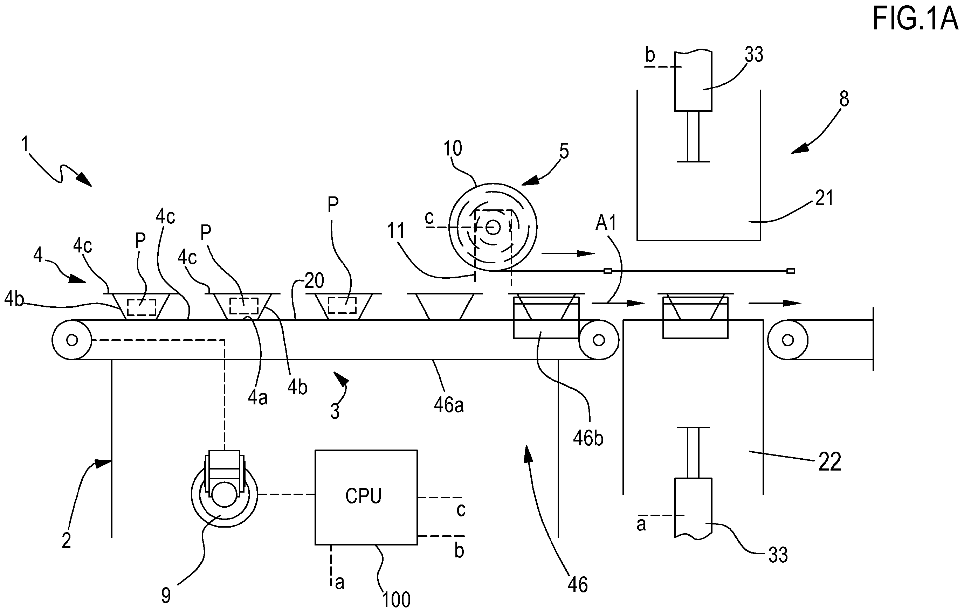

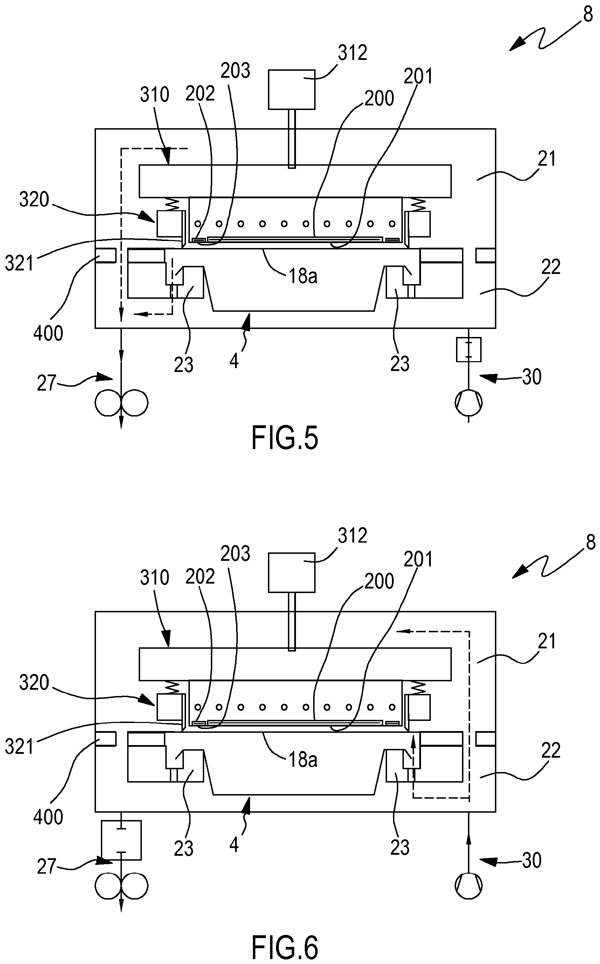

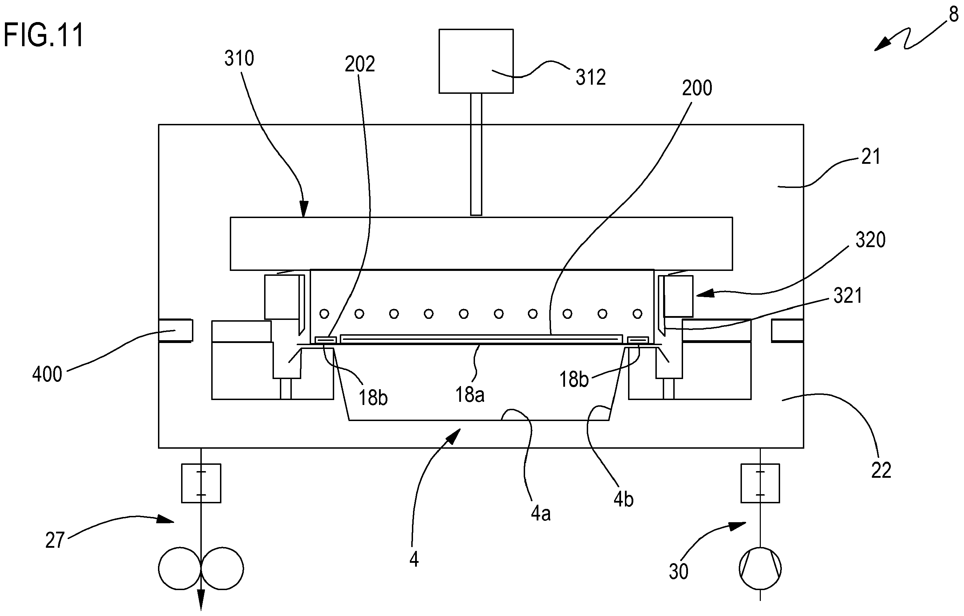

Reference is made to figures 1A and 2-12. In particular figure 1A shows an apparatus 1 for packaging of a product P arranged in a tray 4. The apparatus 1 is adapted for modified atmosphere packaging, where a plastic film 18 is applied to the top rim 4c of a tray 4 after a modified gas atmosphere has been created inside the support 4, and/or for vacuum skin packaging of the product P, where a thin film of plastic material is draped down on the product and intimately adheres to a top rim and to the inner surface of the support as well as to the product surface thus leaving a minimum, if any, amount of air within the packaging. The apparatus 1 may also be used in case a film sheet applied to a tray or support and neither vacuum nor modified atmosphere is created.

The apparatus 1 comprises a frame 2, a transport assembly 3 for displacing the tray 4, a film driving assembly 5, and a packaging assembly 8.

The tray 4 shown in the enclosed figures presents a base wall 4a, a side wall 4b emerging from the base wall and delimiting a space where a product P can be housed, and a top rim 4c radially protruding from the side wall 4b: in the example shown the top rim 4c has a horizontal flat portion defining an optimal sealing surface for tightly fixing a plastic film.

The frame 2 defines a base body of the apparatus 1 and serves to carry and support various parts of the apparatus 1 as herein described.

The transport assembly 3 comprises a displacement plane 20 (which may be a physical plane where the trays or support are lying and slide or an ideal plane along which the trays are guided e.g. by means of railways or guides). The plane 20 is defined on a top area of the frame and a conveyor 46 is arranged in correspondence of the sliding plane 20. In the example shown, the transport assembly 3 is carried by, e.g. fixed to, the frame 2 so that the sliding plane 20 is substantially horizontal and the conveyor 46 moves the trays or supports 4 according to the horizontal direction indicated by the arrow A1 shown in Figure 1. The transport assembly 3 arranged on the frame 2 is configured for displacing the support or tray 4 along a predefined path from a loading station, where supports or trays 4 which may already be filled with the respective product(s) P are positioned, to the packaging assembly 8 where a film 18 is tightly fixed to each support or tray 4, as it will be explained here below in detail. The conveyor 46 displaces the trays, e.g. a prefixed number of tray per time, inside the packaging assembly 8 in proper position for receiving the film 18. For instance, a control unit 100 (which will be further described herein after) may control the conveyor 46 to displace a prefixed number of trays or supports 4 per time from a region outside the packaging assembly, to a region inside the packaging assembly where the tray or trays are in vertical alignment to respective film portions 18a of the film 18. The conveyor may for instance include a first transfer device 46a (such as the belt shown in figure 1A) configured for bringing the trays in close proximity to the packaging assembly and a second transfer device 46b adapted to pick one or more of said trays and bring them into the packaging station. The second transfer device may for instance include arms acting on the sides of the trays or supports such as to pick the supports from the first transfer device, bring them into the packaging station and then return to the first transfer devise to pick a new set of trays or supports 4. Alternatively, the conveyor 46 may include pushers (e.g. in the form of bars extending transverse to said direction A1) acting on the trays and pushing the trays inside the packaging assembly. The pushers may be moved by chains or belts and may be moved into the packaging assembly to properly position a number of trays, and then be retracted from the packaging assembly, once the trays have reached their proper position inside this latter. According to a further alternative, the conveyor 46 may include housings (e.g. in the form of plates provided with cavities for receiving a number of trays) which are moved along said direction A1 and which are moving inside the packaging station together with the supports or trays 4: according to this last alternative the housings are properly shaped in order to be hosted inside the packaging station during the application of the film to the tray 4.

Note that the products P may be positioned on the support or tray 4 either upstream the loading station or in any location between the loading station and the packaging assembly 8. The transport assembly 3 further comprises a motor 9, e.g. a stepping motor unit, for operating the conveyor belt 46 with step-by-step movement.

The film driving assembly 5 may comprise a film roll 10 which supplies the continuous film 18. The film driving assembly 5 may further comprise an arm 11 (represented in dashed lines in figure 1A) fixed to the frame 2 and suitable for supporting the roll 10. The film 18 of the film roll 10 may be made as disclosed above depending upon the specific need. Note the continuous film 18 may be fed from the film driving assembly 5 to the proper position inside the packaging assembly 8 with any known means, for instance using driving rollers or driving mechanisms acting upstream and/or downstream the packaging assembly, or using transport devices acting on the longitudinal borders of the film 18, or combinations of the above means or any other suitable device.

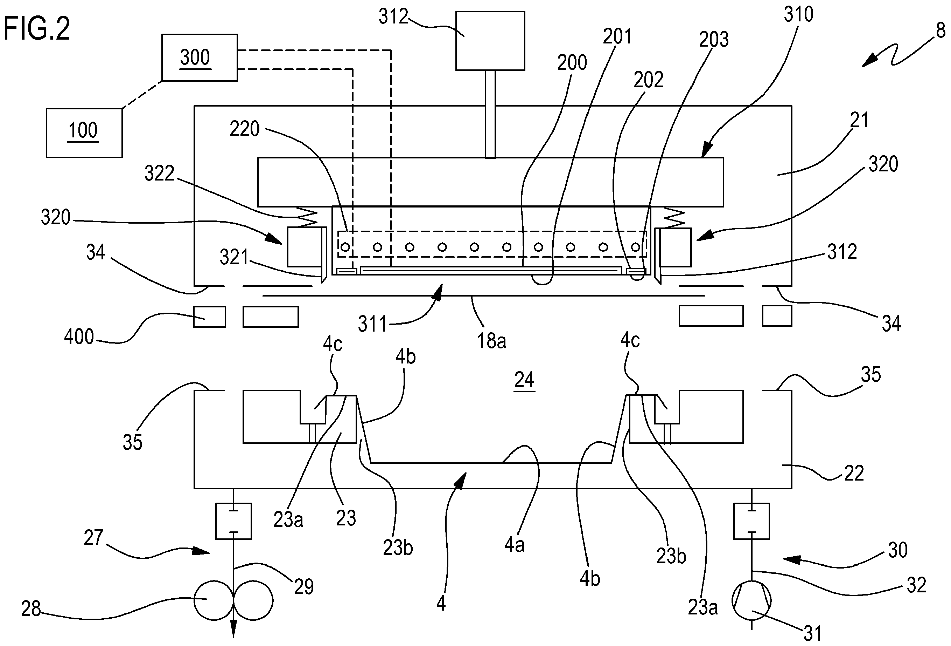

The apparatus packaging assembly 8 is configured for tightly fixing the film sheets 18 to said supports 4; the packaging assembly 8 includes a lower tool 22 and an upper tool 21. As better visible from figure 2, the lower tool 22 has a number of inner walls 23 defining a prefixed number of seats 23b. In an embodiment the lower tool 22 is provided with multiple seats 23b each for hosting a corresponding support 4; the upper tool 21 is configured for holding an appropriate film portion 18a of the film 18 sufficient for closing the trays positioned in said seat or seats 23b.

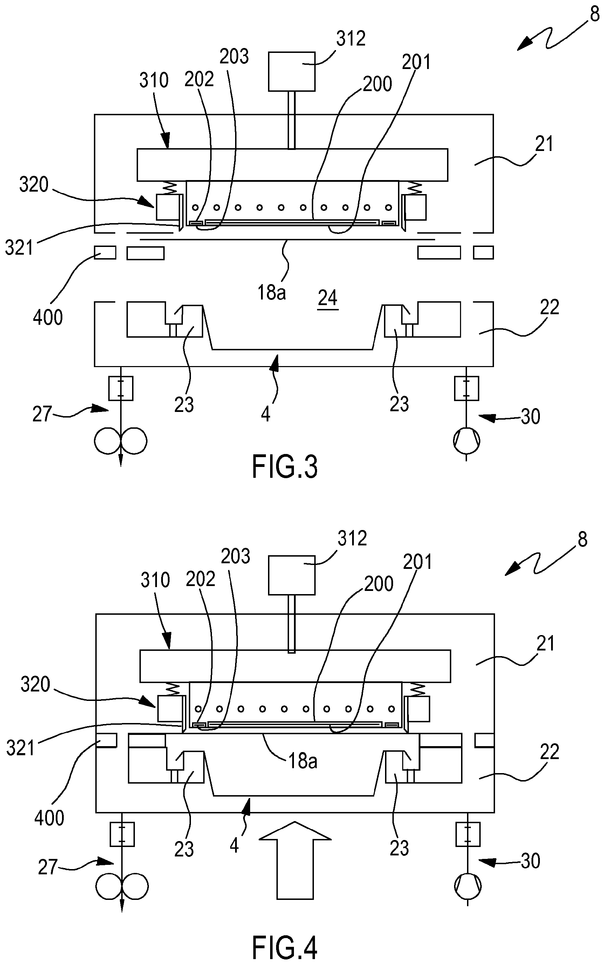

Each of seats 23b is configured for receiving one support 4. For instance in the example of figures 2-11 the seat 23b is peripherally delimited by inner wall 23 and the support or tray 4 is received within the seat 23b such that the top rim 4c may rest above the end surface 23a of the inner wall 23. The upper tool 21 faces the lower tool 22 and is configured for holding a film portion 18a of film 18 just above the respective tray 4. As shown in figures 2-11 the upper and lower tools 21, 22 cooperate to define a packaging chamber 24: in a first operating condition of the packaging assembly 8 - shown e.g. in figures 2 and 3 - the upper and lower tools 21 and 22 are space apart and the packaging chamber 24 is open thereby allowing film 18 to move inside of the packaging chamber 24 and a film portion 18a of film 18 just above the respective tray 4. In a second operating condition of the packaging assembly 8 the packaging chamber 24 is closed, in certain cases hermetically closed, with respect to an atmosphere outside the apparatus 1, such that the film portion 18a may be heat sealed at least to the top rim 4c of the tray 4.

Note that by hermetically closed it is meant that the packaging chamber 24 cannot freely communicate with the atmosphere outside the same chamber as gas may be supplied or withdrawn from the chamber only via supply or discharge channels under the control of the apparatus 1.

In order to open and close the packaging chamber, the apparatus 1 has a main actuator 33 (see figure 1A) active on at least one of said upper and lower tool 21, 22 under the control of control device 100; in practice the main actuator 33 may include a piston (the piston may be replaced by any other kind of electric, pneumatic or hydraulic linear actuator) configured for lifting and lowering the one or both tools 22 along a direction transverse to said horizontal direction A1 between said first operating condition (figure 3), where the upper tool 21 is spaced apart from the lower tool 22 and said packaging chamber 24 is open to receive one or more of said film portions 18a, and said second operating condition (figure 4), where a closure surface 34 of the upper tool 21 tightly abuts against a closure surface 35 of the lower tool 22 (or against an abutting surface of an insert member 400) to hermetically close said packaging chamber 24 with respect to an atmosphere outside the apparatus; at said closure surfaces 34 and 35 a gasket or other element for facilitating a gas tight closure may be positioned.

The upper tool 21 comprises an inner heater 200 carried by the upper tool such as to face the seat 23b and having an heating surface 201 configured to heat at least a part of said film portion 18a, and a peripheral heater 202 carried by the upper tool 21 such as to face the same seat 23b and positioned radially outside with respect to the inner heater 201. The peripheral heater 202 basically surrounds the inner heater 200 and is aligned with surface 23a so that a heating surface 203 of the peripheral heater 201 is capable - when brought into contact with the film 18 - to heat seal this latter to the tray 4: in particular, the upper tool 21 is configured to bring the heating surface 203 of the peripheral heater 202 in correspondence of rim 4c of tray 4 located in seat 23b, so that at least a peripheral region 18b of said film portion 18a overlapping rim 4c may be heat bonded to this latter.

As it may be seen from figure 2, the heating surface 203 of said peripheral heater 202 has an annular shape. Note that by annular shape it is intended a shape of closed form which may be circular, elliptic, rectangular or any other closed shape. In the specific embodiment disclosed the closed shape of the heating surface 203 copies the shape of the top surface of the rim 4c of the tray 4 or copies the shape of the top surface 23a of inner wall 23.

As shown in figure 2, the heating surface 203 of the peripheral heater 202 and surrounds - and in particular completely encircles - the heating surface 201 of the inner heater 200, such that when the upper and lower tools are in said second operating position, the peripheral heater 202 is configured to heat a peripheral region or band 18b of said film portion 18a while the inner heater 200 is configured to heat at least a part of an inner zone of the same film portion 18a located radially inside the peripheral region 18b.

Going in further detail and again with reference to figure 2, both the heating surface of the peripheral heater and the heating surface of the inner heater may take a flat conformation in order to perfectly match the shape of the top rim 4c of the tray. Note that when the first and second tools 21 and 22 (upper and lower tools) are in the second operating position, an actuator, such as auxiliary actuator 312 brought by upper tool 21 and controlled by control device 100, may be operated to bring the heating surface against the mentioned peripheral band of the film portion 18a, with the top rim 4c being pressed between said peripheral band of film portion 18a and the top surface 23a.

In the embodiment shown in figure 2, when the upper and lower tools are in said second operating position, the heating surface 203 of the peripheral heater 202 is coplanar to the heating surface 201 of the inner heater 200, such that both surfaces contact at the same time the respective parts of the film portion 18a.

Alternatively, the heating surface 201 of the inner heater 200 may be slightly (e.g. from 1 to 20 mm) indented with respect to the heating surface 203 of the peripheral heater 202, such that when the heating surface of the peripheral heater contacts a top surface of the film portion, the heating surface of the inner heater is spaced apart by a prefixed distance from the top surface of the same film portion.

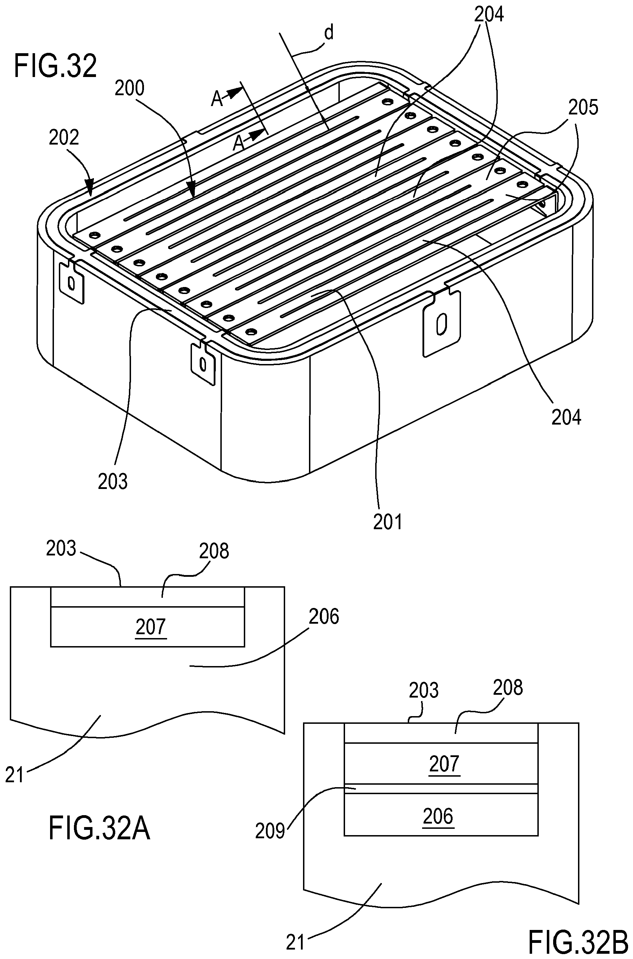

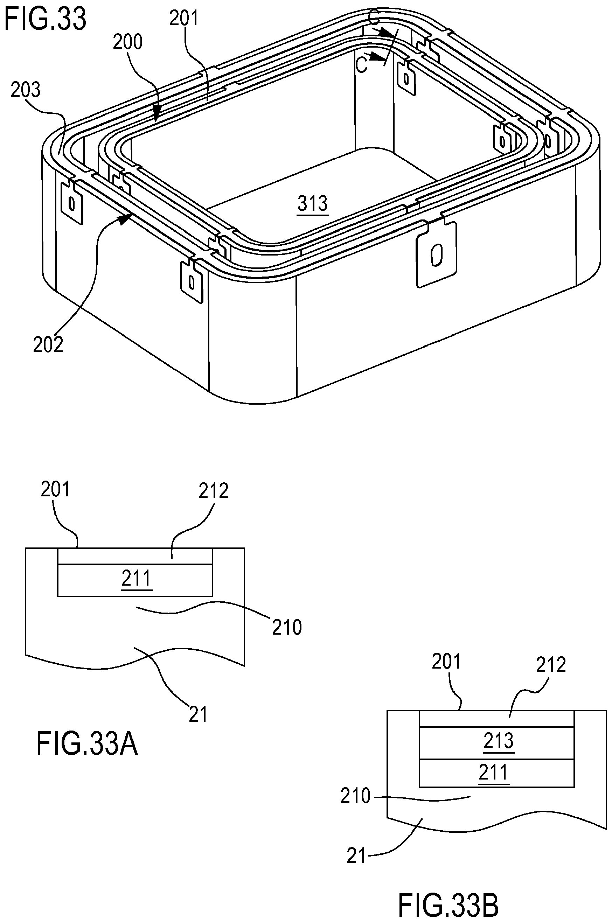

Referring now to figures 32 and 33 which show heating heads usable as part of the upper tool 21 of the apparatus according to the first embodiment, it is shown that the upper tool 21 may include a heating head with a inner heater 200 and a peripheral heater 202 wherein the heating surface 201 of the inner heater 200 is located at a radial distance 'd' from the heating surface 203 of the peripheral heater 202 and extends in an area surrounded by the heating surface of the peripheral heater 202: in other words the heating surface of the inner heater 200 is not in contact with the heating surface of the peripheral heater 202. The two heating surfaces and the peripheral heater and inner heater are kept separate and thermally insulated the one from the other.

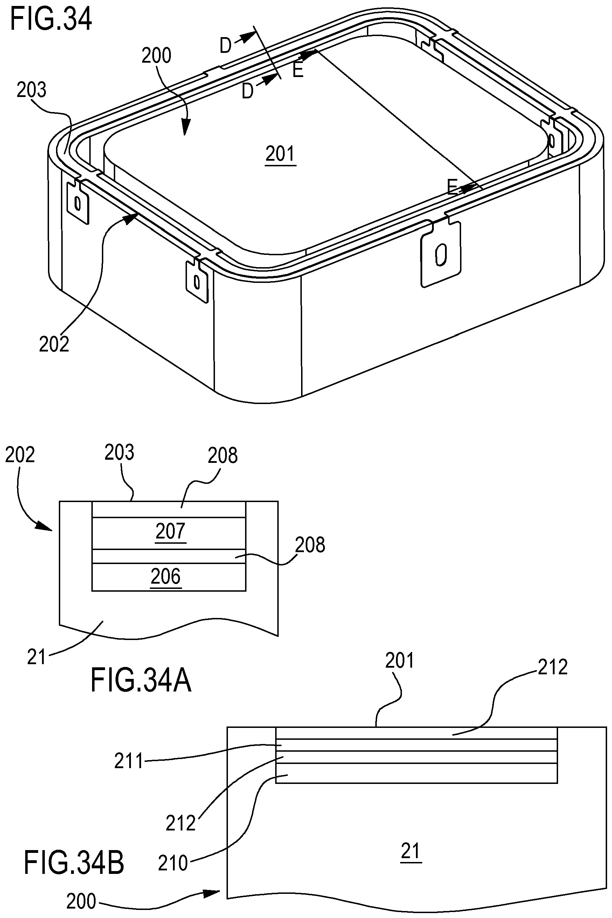

In figure 33 it is shown that the heating surface 201 of the inner heater 200 may be a heating surface of annular shape, while in figure 34 it is shown that the heating surface 201 of the inner heater may be a continuous heating surface delimited by a single closed contour line: in the example of figure 34 the heating surface 201 is rectangular, but of course it can be of any suitable shape (which typically depends from the shape of the tray) such as discoidal or polygonal or circular, or elliptical or polygonal with rounded corners, etc.. In the case of figure 34, however, the continuous heating surface is designed to occupy substantially all or a majority (more than 50% preferably more than 70%) of the ideal planar area surrounded by the heating surface of the peripheral heater. Finally, in the example of figure 32 the heating surface 201of the inner heater 200 is a heating surface including a plurality of parallel spaced apart bands 204 connected at ends thereof, e.g. by transverse bands or by transvers connecting portions 205, such as to define a meander shape.

In a further aspect, the peripheral heater 202 comprises a first electrically conductive element extending along the heating surface of the peripheral heater: the first electrically conductive element is shaped as the peripheral heater heating surface and conveys heat to the heating surface 203 by virtue of the increase of temperature caused in the first electrically conductive element caused by passage of electric current. Thus the first electric conductive element is an annular element, optionally an electrically conductive annular flat element. The first electric conductive element may be housed inside the peripheral heater body or may basically form the peripheral heater itself.

On its turn, the inner heater 200 comprises a second electrically conductive element extending along the heating surface of the inner heater: the second electrically conductive element is shaped as the inner heater heating surface and conveys heat to the heating surface 203 by virtue of the increase of temperature caused in the second electrically conductive element caused by passage of electric current. The second electric conductive element may be housed inside the inner heater body or may basically form the inner heater itself. The second conductive element may therefore be:
an electrically conductive annular element, optionally an electrically conductive annular flat element,
an electrically conductive continuous plate,
an electrically conductive meander element, optionally an electrically conductive flat meander element.

Going in a further structural detail, the first and second electrically conductive elements may take various alternative designs.

In a first option (fig. 32A), the first electrically conductive element comprises:
- a supporting substrate 206 carried by or integral with the upper tool 21,
- a metallic or carbon structure (e.g., in the form of a plurality of overlapping graphene layers or one of the above described forms) conductive band 207 fixed to the supporting substrate, and
- an optional protective layer 208 covering the metallic or carbon structure conductive band and defining the heating surface of the peripheral heater,

In a second option (fig. 32B), the first electrically conductive element comprises:
- a supporting substrate 206 carried by or integral with the upper tool,
- an insulating layer 209 in contact with the supporting substrate,
- a conductive layer 207 in the form of a metal-glass mixture defining a conductive band in contact with the insulating layer, and
- a protective layer 208 covering the conductive layer and defining the heating surface;

Note that the first electrically conductive element of the heating head shown in figure 33 may present the structure described above for the first electrically conductive element of the heating head shown in figure 32 and thus figures 32A and 32B may also reflect the structure of the cross section taken along plane B-B of figure 33 in correspondence of the peripheral heater.

As to the second electrically conductive element, it may comprise in a first option (fig. 33A):
- a supporting substrate 210 carried by or integral with the upper tool 21,
- a metallic or carbon structure (e.g., in the form of a plurality of overlapping graphene layers or in one of the forms described above) conductive structure 211 selected in group of: a band, a plate and a meander, said metallic or carbon structure being fixed to the supporting substrate, and
- an optional protective layer 212 covering the metallic or carbon conductive structure and defining the heating surface of the peripheral heater.

Alternatively, according to a second option (fig. 33B), the second electrically conductive element, may comprise:
- a supporting substrate 210 carried by or integral the upper tool, an insulating layer 213 in contact with the supporting substrate, a conductive structure 211 in the form of a metal glass mixture layer taking the shape of a band, a plate or a meander, said conductive structure 211 being in contact with the insulating layer, and a protective layer 212 covering the conductive layer and defining the heating surface.

According to an alternative, which is shown in figures 34, 34A and 34B, the first electrically conductive element comprises an electrically conductive layer in the form of carbon structure 207, a structural supporting substrate 206 carrying the carbon structure and at least one protective layer 208 covering the carbon structure on a side opposite that of the structural substrate. The substrate may be fixed to the upper tool or to a heating head associated to the upper tool.

The carbon structure may optionally be sandwiched between two opposite protective layers 208, wherein the protective layer opposite the structural substrate defines the heating surface of said peripheral heater.

In particular, the carbon structure of the first electrically conductive element includes (or is exclusively formed of) one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

The carbon structure is of flat elongated (i.e. having a plane of main development) conformation (e.g. annular as shown in figures 32-34). The carbon structure of the first electrically conductive element of the peripheral heater may have a cross section with thickness of at least 5 µm: for instance the cross section thickness may be between 5 and 300 µm, optionally between 10 and 200. The cross section width may be at least 2mm, more optionally at least 5mm. The average electric resistivity may be higher than 5 Ω•mm²/m, optionally comprised between 15 and 25 Ω•mm²/m.

The second electrically conductive element shown in figures 34, 34B comprises a structural substrate 210 carrying a respective carbon structure 211 and at least one protective layer 212 covering the carbon structure on a side opposite that of the structural substrate; optionally the carbon structure of the second electrically conductive element is sandwiched between two opposite protective layers 212, wherein the protective layer opposite the structural substrate 210 defines the heating surface 201 of said inner heater; also the carbon structure of the second electrically conductive element includes (or is exclusively formed of) one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

Furthermore the carbon structure may be of flat elongated conformation; the carbon structure of the second electrically conductive element of the inner heater may have a cross section with thickness of at least 5 µm: for instance the cross section thickness may be between 5 and 300 µm, optionally between 10 and 200. The cross section width may be at least 3mm, more optionally at least 5mm. even more optionally of at least 10 mm, and an average electric resistivity higher than 2 Ω•mm²/m, more optionally higher than 5 Ω•mm²/m.

The apparatus 1 also includes a supply unit 300 configured to control energy supplied to said peripheral heater and to said inner heater; in the example shown the supply unit is an electric supply unit connected with controlled by a control device or control unite 100. In accordance with aspects of the invention, the control device 100 is configured to act on the supply unit and configured for commanding the supply unit 300 and control a supply of electric energy to the peripheral heater 202 independently from a supply of electric energy to the inner heater 200.

In further detail, the control device 100 is configured to command the supply unit to execute a heating cycle including the following steps:
increasing a temperature of the heating surface of the peripheral heater to a first temperature, keeping the heating surface of the peripheral heater 202 at least at the first temperature for a first discrete time interval, reducing the temperature of the heating surface of the peripheral heater 202 below said first temperature,
increasing a temperature of the heating surface of the inner heater 200 to a second temperature different from the first temperature, keeping the heating surface of the inner heater 200 at least at the second temperature for a second discrete time interval, reducing the temperature of the heating surface of the inner heater below said second temperature.

In the first embodiment herein described energy is transferred to the peripheral heater 202 by applying a voltage to the first electrically conductive element, while energy is transferred to the inner heater by applying an electric voltage to the second electrically conductive element.

Thus, the control device 100 is configured to command the supply unit 300 to execute a heating cycle including the following steps:
applying an electric voltage to the first electrically conductive element to cause the increase in temperature of the heating surface of the peripheral heater to the first temperature,
maintaining said electric voltage for keeping the heating surface of the peripheral heater at least at the first temperature for a first discrete time interval,
reducing or nullifying the voltage applied to the electrically conductive element for reducing the temperature of the heating surface of the heater below said first temperature,
applying an electric voltage to the second electrically conductive element to cause the increase of the temperature of the heating surface of the inner heater to the second temperature different from the first temperature,
maintaining said electric voltage applied to the second electrically conductive element for keeping the heating surface of the inner heater at least at the second temperature for a second discrete time interval,
reducing or nullifying the voltage applied to the second electrically conductive for reducing the temperature of the heating surface of the inner heater below said second temperature.

The control device 100 is configured to command the supply unit to consecutively repeat execution of said heating cycle a plurality of times. In practice each time a film portion 18a has to be fixed to the respective tray or trays (or support) a heating cycle takes place: during each of said consecutive heating cycles at least one of said film portions 18a being heat sealed to at least one respective support or tray.

In detail, said control device 100 - during each heating cycle - is configured for controlling the supply unit 300 to supply energy to the peripheral heater 202 only during a discrete time period followed by a time period when no energy is supplied to the peripheral heater 202 for causing the increase and keeping of the heating surface of the peripheral heater 202 at least at the first temperature for the first discrete time interval, and for causing a subsequent reduction of the temperature of the heating surface of the peripheral heater 202 below said first temperature.

In a similar manner control device 100 - during each heating cycle - is configured for controlling the supply unit to supply energy to the inner heater 200 only during a discrete time period followed by a time period when no energy is supplied to the inner heater for causing the increase and keeping of the heating surface of the inner heater at least at the second temperature for the second discrete time interval, and for causing a subsequent reduction of the temperature of the heating surface of the inner heater below said second temperature.

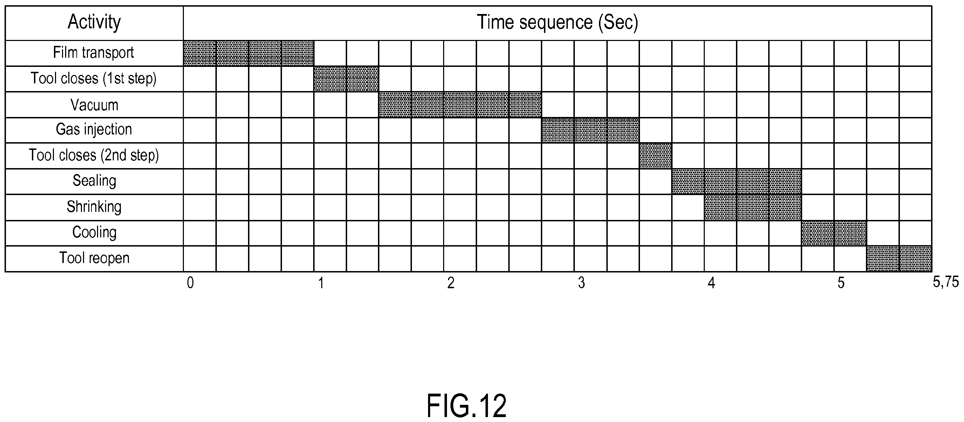

The heating cycle may be configured such that the second temperature is inferior with respect to the first temperature. For example: said first temperature may be comprised in the range between 150 °C and 300 °C, while said second temperature is comprised in the range between 180 °C and 240 °C, more optionally between 200 °C and 220 ° C. Furthermore, the first discrete time period has a duration comprised between 0,2 and 5 seconds, in particular between 0,5 and 1,5 seconds, and the second discrete time period has a duration comprised between 0,2 and 5 seconds, in particular between 0,5 and 1,5 seconds. Figure 12, which relates to a case where a heat-shrinkable film is used, shows that the first temperature is kept for 1 second while the second temperature is kept of ¾ of a second.

In accordance with a further aspect, each heating cycle is configured such that the increasing of the temperature of the heating surface of the inner heater 200 to a second temperature starts after the increasing of the temperature of the peripheral heater 202 to the first temperature (in figure 12 it is shown that the heat shrinking, i.e. the heating of the inner heater to the second temperature, starts 0,25 seconds after the heating of the peripheral heater to the first temperature). In other words, the start of the second discrete time interval may be slightly delayed with respect to the start of said first time interval in order to avoid (when using heat-shrinkable film) to cause slippage of the peripheral film portion to be sealed to the rim 4c. As shown in figure 12, the whole duration of said first discrete time interval may be longer than the duration of said second discrete time interval.

The apparatus 1 may also include a cooling circuit 220 (fig. 2) associated to the upper tool 21 and configured to cool said inner heater 200 and said peripheral heater 202; the cooling circuit is controlled by the control device 100 which is further configured to cause circulation of a cooling fluid (water or oil or other fluid) in said cooling circuit (in figure 2 the cooling circuit 220 is schematically shown above the heaters 200 and 202) and for regulating a cooling fluid temperature to a temperature significantly below both said first and second temperature and thus assist in obtaining a sharp reduction of the heating surfaces of the peripheral and inner heaters after said first and second time intervals.

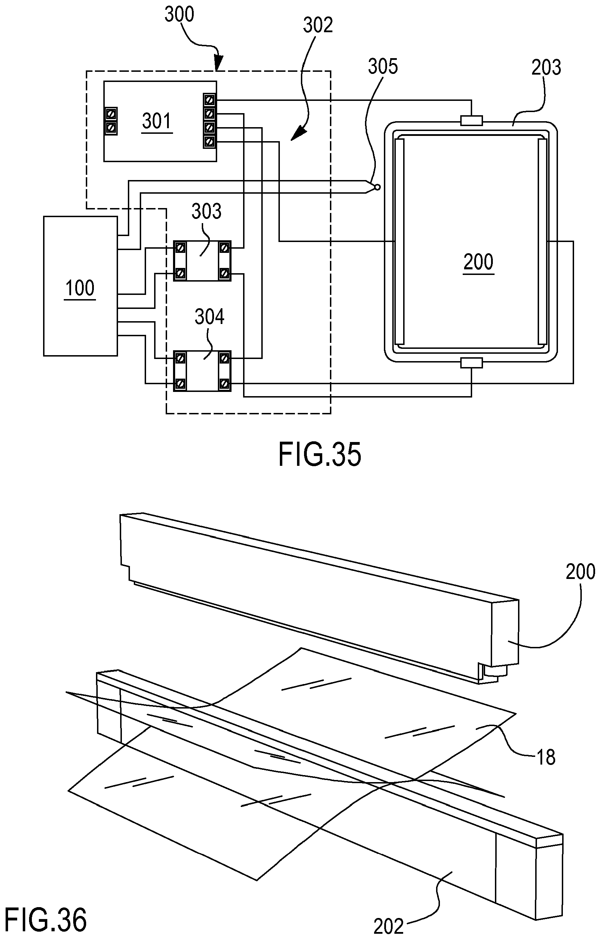

As shown in figure 35, which schematically shows a possible structure of the supply unit 300 and control device 100 for control of electric energy fed to the heater or heaters; the supply unit is an electric supply unit and comprises:
- at least one impulse transformer 301,
- at least one electric circuitry 302 connecting the impulse transformer to the first electrically conductive element of the peripheral heater 202 and to the second electrically conductive element of the inner heater 200.

In particular, the electric circuitry may include two relays 303 and 304 (for example SSR type relays), each relay being electrically interposed between the impulse transformer and the respective one of said first and second electrically conductive elements and being controlled by the control device 100 in order to apply to the first and second electrically conductive elements the appropriate voltages and thus obtaining the heating cycle described above.

Alternatively, the supply unit 300 may include a dedicated transformer for each conductive element (alternative not shown), namely at least a first impulse transformer and a first electric circuitry connecting the first impulse transformer to the first electrically conductive element, and at least a second impulse transformer and a second electric circuitry (not shown) connecting the second impulse transformer to the second electric impedance.

In both cases the control device 100 is configured to act on the electric supply unit 300 to independently supply electric current at a predetermined voltage to the first and, respectively, second electrically conductive elements.

In a further aspect, again shown in figure 35, the apparatus, and particularly the packaging assembly 8, may include a first temperature sensor 305 configured for detecting a temperature of the heating surface of the peripheral heater 202 and emitting a corresponding first temperature signal correlated to the detected temperature, and an optional second temperature sensor (not shown) for detecting a temperature of the heating surface of the inner heater and emitting a corresponding second temperature signal correlated to the detected temperature. Note that the first and second temperature sensor may be contact temperature sensors or a contactless temperature sensors (e.g. IR sensors). Also note that presence of the first/second temperature sensor may not be necessary and temperature of the heating surfaces may be calculated based on the measured electric resistance of the first/second electrically conductive element.

If one or more of said temperature sensors are present, the control device 100 is connected to said first temperature sensor 305, and optionally to said second temperature sensor, and is configured for receiving the first temperature signal and controlling the supply unit to supply of energy to the peripheral heater 202 based on said first temperature signal and on a desired value for said first temperature, and optionally for receiving said second temperature signal and controlling the supply unit to supply of energy to the inner heater based on said second temperature signal and on a desired value for said second temperature. This allows an active control of the temperatures and thus an efficient delivery of the sealing operation and - where applicable - of the shrinking effect.

In an alternative the temperature or temperatures of the heating element(s) may be deducted from electric measures; thus the presence of the first temperature sensor may not be necessary, and temperature of the heating surface may be calculated based on the measured electric resistance of the first electrically conductive element.

For instance a first electric sensor may be used, electrically connected or connectable to the carbon structure of the peripheral heater and configured for detecting an electric parameter of said carbon structure and emitting a corresponding electric parameter signal, the electric parameter comprising one of
- an electric impedance of a prefixed segment of said carbon structure,
- an electric current flowing through said prefixed segment of carbon structure when a prefixed electric voltage is applied at ends of said prefixed segment,
- an electric voltage detected at ends of the prefixed segment when a prefixed electric current is imposed to flow through said prefixed segment.

The control device would in this case be connected to said first electric sensor, and configured for receiving said electric parameter signal and controlling the supply unit to supply electric energy to the electrically conductive element of the peripheral heater, optionally by regulating voltage applied to the electrically conductive element and/or duration of application of said voltage, based on said electric parameter signal and on a desired value for a temperature of the heating surface of the heater.

Note the control device may also be configured for receiving said electric parameter signal and calculate a value of real temperature of the carbon structure of the peripheral heater based on:
a value of said electric parameter and
a calibration curve or calibration table stored in the control device and relating values of the electric parameter with corresponding values of the temperature of the carbon structure.

Additionally the control device may be configured to control the supply unit to supply electric energy to the electrically conductive element of the peripheral, optionally by regulating voltage applied to the electrically conductive element and/or duration of application of said voltage, based on said calculated value of the real temperature and on the desired value for the temperature of the heating surface of the heater (e.g. based on the difference or the ratio between said calculated value of the real temperature and on the desired value for the temperature of the heating surface of the heater).

Analogously, the presence of the second temperature sensor may not be necessary, and temperature of the heating surface may be calculated based on the measured electric resistance of the second electrically conductive element. For instance a second electric sensor may be used, electrically connected or connectable to the carbon structure of the inner heater and configured for detecting an electric parameter of said carbon structure and emitting a corresponding electric parameter signal, the electric parameter comprising one of
- an electric impedance of a prefixed segment of said carbon structure,
- an electric current flowing through said prefixed segment of carbon structure when a prefixed electric voltage is applied at ends of said prefixed segment,
- an electric voltage detected at ends of the prefixed segment when a prefixed electric current is imposed to flow through said prefixed segment.

The control device would in this case be connected to said second electric sensor, and is configured for receiving said electric parameter signal and controlling the supply unit to supply electric energy to the electrically conductive element of the inner heater, optionally by regulating voltage applied to the electrically conductive element and/or duration of application of said voltage, based on said electric parameter signal and on a desired value for a temperature of the heating surface of the heater.

Note the control device may also be configured for receiving said electric parameter signal and calculate a value of real temperature of the carbon structure of the inner heater based on:
a value of said electric parameter and
a calibration curve or calibration table stored in the control device and relating values of the electric parameter with corresponding values of the temperature of the carbon structure.

Additionally, the control device may be configured to control the supply unit to supply electric energy to the electrically conductive element of the inner heater, optionally by regulating voltage applied to the electrically conductive element and/or duration of application of said voltage, based on said calculated value of the real temperature, on the desired value for the temperature of the heating surface of the heater (e.g. based on the difference or the ratio between said calculated value of the real temperature and on the desired value for the temperature of the heating surface of the heater).

In the first embodiment of figure 2, the upper tool 21 comprises a heating head 310 having a respective active surface 311. In this case the heating head 310 may be mounted for vertical motion relative to the upper tool 21, under the action of an auxiliary actuator 312 associated to the packaging assembly and controlled by control device 100. In this embodiment, the peripheral heater 202 and the inner heater 200 are both carried by said heating head and the heating head is configured to take a film sealing position, preferably in correspondence of said second operating condition of the upper 21 and lower tools 22: at said film sealing position at least the heating surface of the peripheral heater 202 is configured to press against a corresponding top surface of said film portion 18a which is pressed against rim 4c on its turn pressed against top surface 23a. This, together with the activation of the heating cycle which is synchronized with the movement of the upper tool and heating head, allows heat sealing of the film portion 18a to the underlying at least one support.

While the heating head is at said heat sealing position, the heating surface of said inner heater is configured to contact or be placed at a prefixed distance from the top surface of said film portion 18a, such as to properly heat the central zone of said film portion.

The control device 100 is configured for controlling the packaging assembly such that - during each said heating cycle
- the heating head keeps said film sealing position and thereby keeps the peripheral portion 202 of the film portion 18a against the top rim 4c, at least during said first discrete time interval, preferably until after expiration of said first discrete time interval. The control device 100 may also be further configured for controlling the packaging assembly such that
- during each said heating cycle - the heating head keeps said film sealing position until after expiration of said first and second discrete time intervals.

Note that depending upon the needs, the heating surface of the inner heater 200 and the heating surface of the peripheral heater 202 may take different shape. As already mentioned, the heating surface of the inner heater 200 and the heating surface of the peripheral heater 202 may have both annular shape and form part of said active surface of the head, with the heating surface of the peripheral heater located at a radial distance from and surrounding the heating surface of the inner heater: in this case as shown in figure 35, in a position radially internal to the heating surface of the inner heater 200, the heating head may presents a central recess of fixed volume which - when the upper and lower tools are in said second operating condition - extends vertically away from the lower tool to define a space where at least a part of a product located on a support positioned in one of said seats is receivable.

Alternatively, the heating surface of the peripheral heater 202 and the heating surface of the inner heater 200 lay in a common plane with and forming part of said active surface of the heating head with the heating surface of the peripheral heater 202 located at a radial distance from and surrounding the heating surface of the inner heater 200 (see figures 2 and 32). Alternatively, the heating head may be in at least two relatively movable bodies: a central body carrying the inner heater 200 and a peripheral body carrying the peripheral heater 202 and surrounding the central body, with the peripheral body and the central body being configured to be relatively movable to form the central recess 313. In this case, the volume of the recess is determined by the relative position of the peripheral body with respect to the central body, said central recess being positioned such that - when the upper and lower tools 21, 22 are in said second operating condition - it extends vertically away from the lower tool 22 to define a space where at least a part of a product located on a support is receivable.

It is also to be noted that the heating head may include means (e.g. means for generating a vacuum, or mechanical pincers, or other) configured to be operative in correspondence of said active surface for holding one or more of said film portions in contact with the active surface when the film portion has reached the proper position above the respective support or tray 4; alternatively or in addition, the apparatus may include retention means (such as pincers or other retaining means) configured to act on longitudinal opposite borders of said film to hold one or more of said film portions 18a in a position aligned with the heating head and with said one or more seats.

Finally, in the first embodiment, the upper tool 21 carries a film cutting unit 320, which is thus hosted inside chamber 24 of the packaging assembly 8, configured to be active on the continuous film 18 and configured for at least transversally cutting the continuous film: as shown in figure 2 the cutting unit 230 may be positioned peripherally outside the peripheral heater 202 and may be pushed towards the film portion 18a (e.g. under the action of pushing elements 322 including one or more of elastic springs or pneumatic actuators or hydraulic actuators) or positioned relative to the active surface of the heating head 311 such that when the upper tool 21 is lowered and the heating head moved towards the lower tool 22. A cutting tool 321 of the cutting unit 320 touches the film portion 18a top surface before the heating surfaces of the peripheral and inner heaters contact the same film portion 18a top surface. Note that insert 400 may be interposed between the upper and lower tools 21 and 22 to avoid that the cutting tool interferes with the tray rim 4c and to keep the film portion 18a in proper position during cutting.

The apparatus 1 control unit 100 which is also connected to the transport assembly 3, to the film driving assembly 5, and to the packaging assembly 8 is configured for synchronizing the conveyor 46 such that movement of a prefixed number of trays or supports 4 from a region outside the packaging chamber 24 to a region inside the packaging chamber 24 as well as the movement of the film 18 is caused to take place when the packaging chamber 24 is open while the packaging chamber 24 is closed only once said prefixed number of trays or supports 4 and the respective film portions 18a are in proper position relative to the upper tool 21.

The apparatus 1 may also comprise a vacuum arrangement 27 connected to the packaging chamber 24 and configured for removing gas from inside said packaging chamber; the vacuum arrangement comprises at least one vacuum pump 28 and at least one evacuation pipe 29 connecting the inside of said chamber 24 to the vacuum pump; the control unit 100 controls the vacuum pump 28 to withdraw gas from said packaging chamber 24 at least when the packaging assembly is in said second operating condition, i.e. with said packaging chamber hermetically closed.

The apparatus 1 may also or may alternatively include a controlled atmosphere arrangement 30 connected to the packaging chamber 24 and configured for injecting a gas stream into said packaging chamber; the controlled atmosphere arrangement comprises at least one injection device including an injection pump and/or one injection valve 31 acting on at least one injection pipe 32 connecting the inside of said chamber to the a source of gas (not shown) which may be located remotely from the apparatus 1; the control unit 100 may be configured to control opening and closing of the injection valve (or activation of the injection pump) 31 to inject said stream of gas at least when the packaging assembly 8 is in said second operating condition, i.e. with said packaging chamber 24 hermetically closed. The control unit 100 may also be configured to control the composition of the modified atmosphere generated inside the chamber 24. For instance the control unit 100 may regulate the composition of the gas stream injected into the packaging chamber. The gas mixtures injected into the packaging chamber to generate a modified atmosphere may vary depending upon the nature of product P. In general modified atmosphere mixtures include a volumetric quantity of one or more of N₂, O₂ and CO₂ which is different from the quantity of these same gases as present in the atmosphere at 20°C and sea level (1 atmosphere pressure). If product P is a produce such as meat, poultry, fish, cheese, bakery or pasta the following gas mixtures may be used (quantities are expressed in volume percentages at 20°C, 1atm of pressure):

| | |
|---|---|
| - Red meats, Poultry skinless: | O₂=70%, CO₂=30% |
| - Poultry with skin on, Cheese, Pasta, Bakery products: | CO₂=50%, N₂=50% |
| - Fish | CO₂=70%, N₂=30% or CO₂=40%, N₂=30%, O₂%=30 |
| - Processed meat | CO₂=30%, N₂=70% |

According to one aspect the control unit 100 may be configured to control said injection pump or said injection valve 31 to start injecting said stream of gas either after a prefixed delay from activation of said vacuum pump 28 or after a prefixed level of vacuum has been reached inside said packaging chamber 24. In a further aspect the control unit 100 may cause the start of the injecting of said stream of gas for creating a modified atmosphere while said vacuum pump 28 is still active so as to shorten the time for creating the modified atmosphere. Moreover as it is preferable to avoid having very strong vacuum in the packaging chamber 24 and at the same time it is desirable to ensure a proper atmosphere inside the chamber it is advantageous stopping the vacuum pump after opening the gas injection. In this way pressure inside the chamber never goes below a desired value. During the overlap the gas injected is mixed with residual air and continuing to pull vacuum the mix air-modified atmosphere continues to be removed so that the amount of initial air is decreased.

According to a further aspect, it is noted that the control unit 100 is configured to control said injection pump 31 such that gas flow is not injected at a too high speed which may damage the firm holding of the cut film by the upper tool. Control unit 100 may control gas injection at a gas pressure set below a limit to prevent film detachment from or film mis-positioning in correspondence of upper tool 21 (injection pressure is kept between 1.3 and 4.0 bar optionally or between 1.5 and 3.0 bars).

Although the apparatus 1 may have one or both the vacuum arrangement 27 and the controlled atmosphere arrangement 30, it is to be understood that the control unit 100 of the apparatus 1 may also be configured to tightly engage the film sheets 18 to the trays without activating the vacuum arrangement or the controlled atmosphere arrangement and thus leaving the normal environment atmosphere within the tray. This may be for instance the case for nonperishable products. In a simpler version the apparatus 1 may be designed without vacuum arrangement and without modified atmosphere arrangement.

After the above structural description of the first embodiment of apparatus 1 here below operation of the first embodiment is disclosed. The operation takes place under control of control device 100 and achieves a process of packaging a product in a tray. In this case the described process allows packaging under modified atmosphere. In any case the apparatus 1 is also capable of making a skin packaging of the product. Moreover, the apparatus 1 may be used for applying a lid to a tray and thus packaging in normal ambient atmosphere.

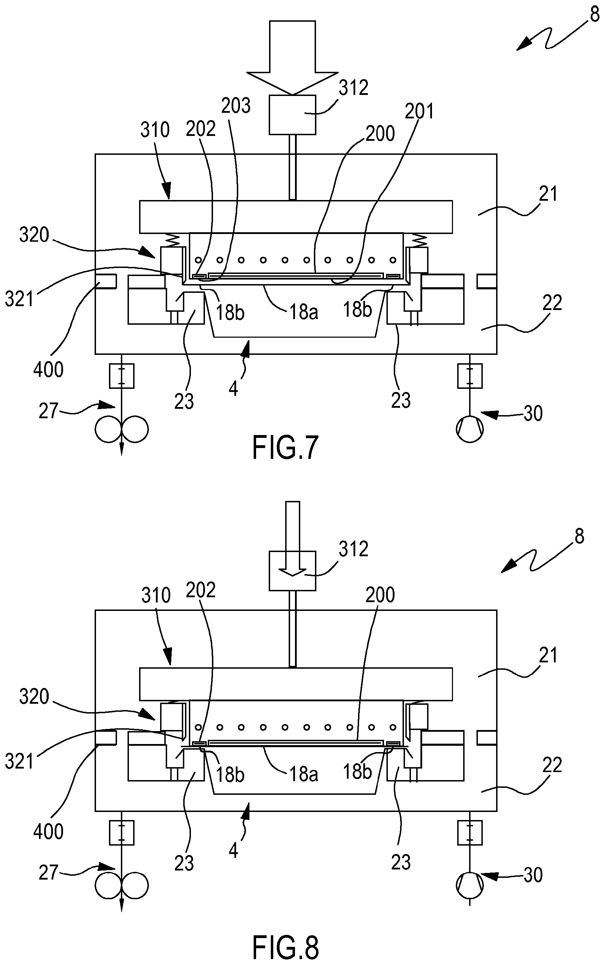

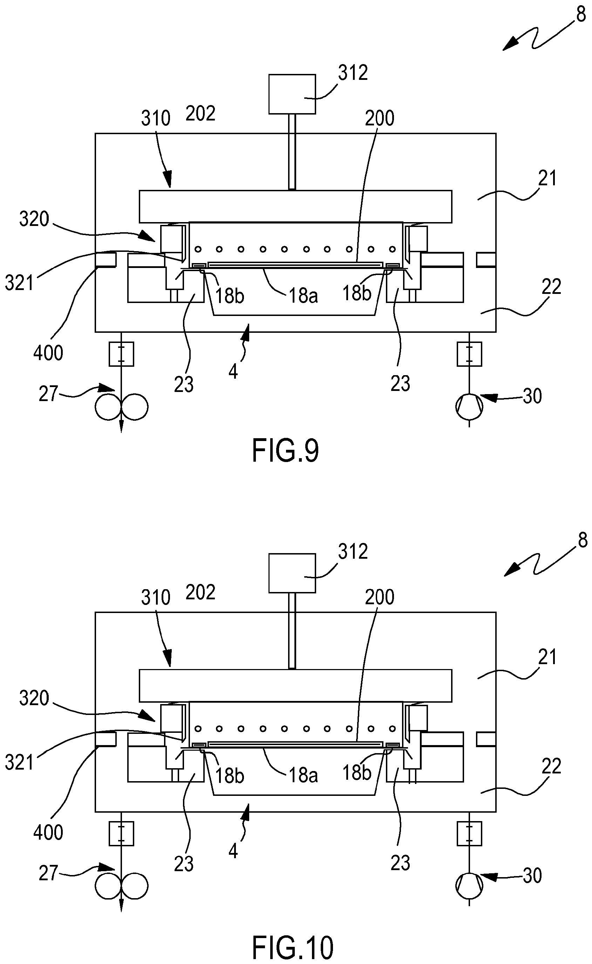

Once the chamber 24 has been closed, and after operation of the vacuum and/or controlled atmosphere arrangement (figures 4 to 6), the control device 100 is configured to act on auxiliary actuator 312 to impose a further vertical movement to the cutting unit 320 (figure 7) of the heating head, which reaches the surface of the film after cut of film portion 18a from the remaining of film 18 (figure 8). At this point, the peripheral border 18b of film portion 18a is trapped between the peripheral heating element and the rim 4c of the tray positioned into seat 4. Thus, the control device 100 may start the heating cycle as described above bringing the heating surface of the peripheral heater 202 at the first temperature for a short time interval sufficient for heat sealing the peripheral border 18b to the rim 4c. in case a shrinkable film is being used the control device 100 also brings the temperature of the inner heater 200 to the second temperature for a short time interval sufficient to obtain a controlled heat shrinking of the film portion covering the tray mouth which thus takes a perfectly controlled flat shape. Figures 9 and 10 show schematically that first the peripheral heater is brought to the first temperature (peripheral heater shaded) and then (figure (10) also the inner heater is brought to the second temperature (heaters both shaded). Once the heating cycle is completed both heaters may be cooled (interrupting supply of energy to the heaters and optionally circulating cooling fluid in cooling circuit 220 (figure 10).

Then the control device 100 opens the packaging chamber 24 the tray with applied film to proceed downstream the packaging assembly. The cycle may then be repeated.

### Second embodiment of the apparatus 1

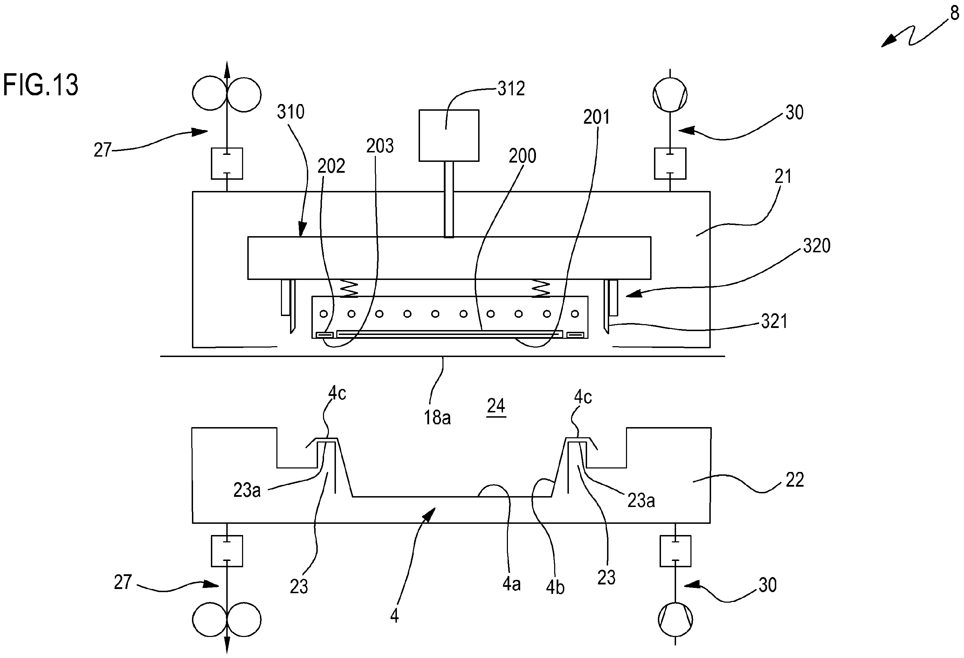

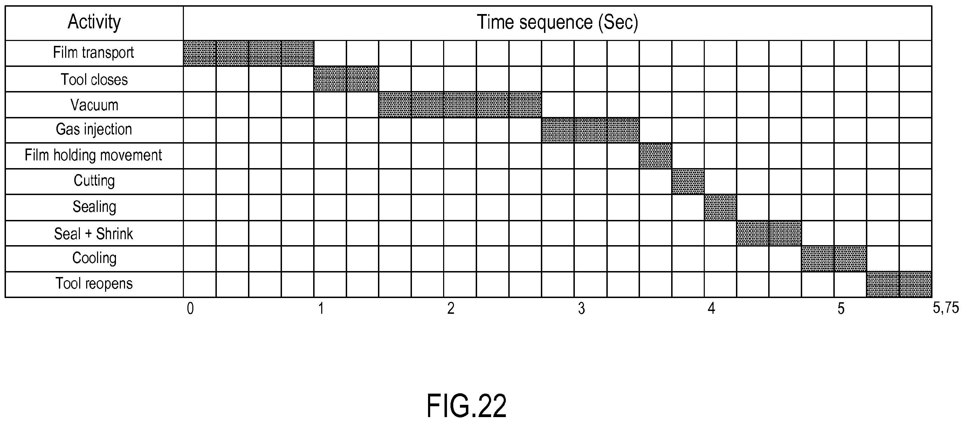

Reference is made to figures 1A and 13-22. The structure of the second embodiment is the same as that of the first embodiment a part from the following differences which concern the packaging assembly 8. Thus, the above description made for the first embodiment (with the same reference numerals) also applies for the second embodiment and is not repeated. Also the aspects described above (see first embodiment) in connection with figures 32, 33, 34, 32A, 32B, 33A, 33B may be used in connection with this second embodiment.

As mentioned, the only differences between the first and second embodiment concern the packaging assembly which has a heating head 310 mounted to the upper tool 21 such that - when the upper and lower tools are in the second operating condition - the active surface 311 of the heating head and thus the heating surface of the peripheral heater 202 and the heating surface of the inner heater 200 touch the film before the cutting tool of the cutting device 320 may touch the film top surface. For instance, the cutting device may be fixed to the heating head in a position peripherally outside the peripheral heater 202 and leaving the cutting tool 321 retracted with respect to the heating surfaces 203 and 201 of the peripheral and inner heaters 200 and 202, which may be carried by an intermediate body 500 mounted to the heating head 310 for vertical motion under the action of pushing elements (which may be in the form of one or more elastic springs, pneumatic actuators or hydraulic actuators) configured for pushing the heaters towards the film portion 18a such that when the upper tool is lowered and the heating head moved towards the lower tool, the cutting tool 321 of the cutting unit touches the film portion top surface after the heating surfaces contact the same film portion top surface.

In this embodiment insert 400 may not be present.

Finally, the second embodiment may include a vacuum arrangement 27 associated to both the upper and the lower tools 20 and 21 and a controlled atmosphere arrangement 30 also associated to both the upper and the lower tools 21 and 22.

Operation of the second embodiment is as follows. The operation takes place under control of control device 100 and achieves a process of packaging a product in a tray. In this case the described process allows packaging under modified atmosphere. In any case the apparatus 1 is also capable of making a skin packaging of the product. Moreover, the apparatus 1 may be used for applying a lid to a tray and thus packaging in normal ambient atmosphere.

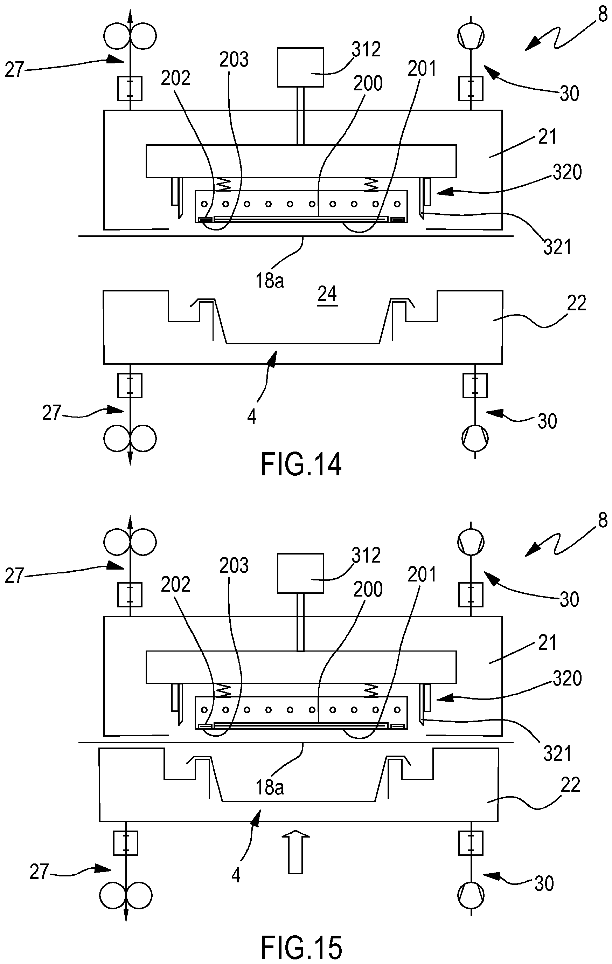

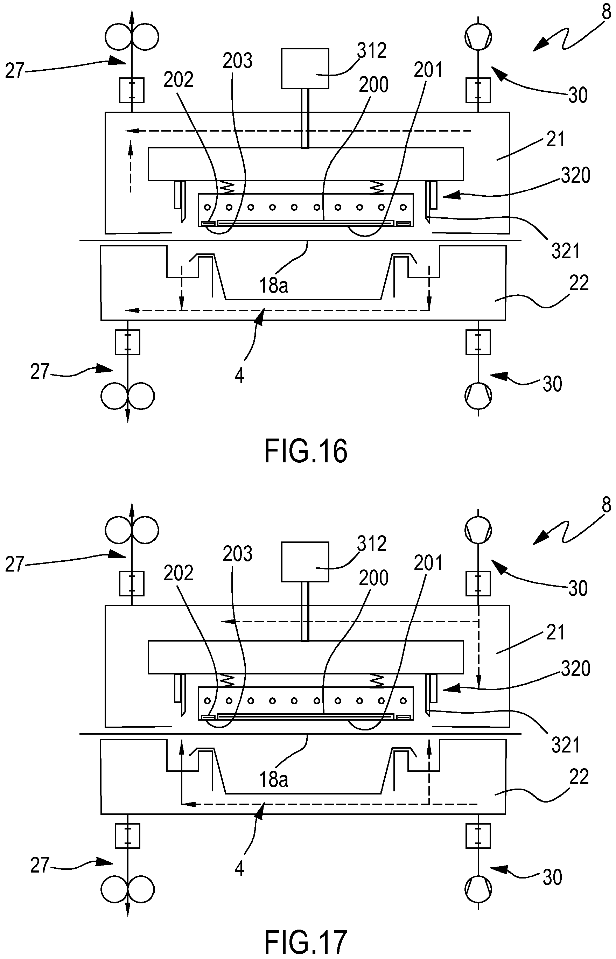

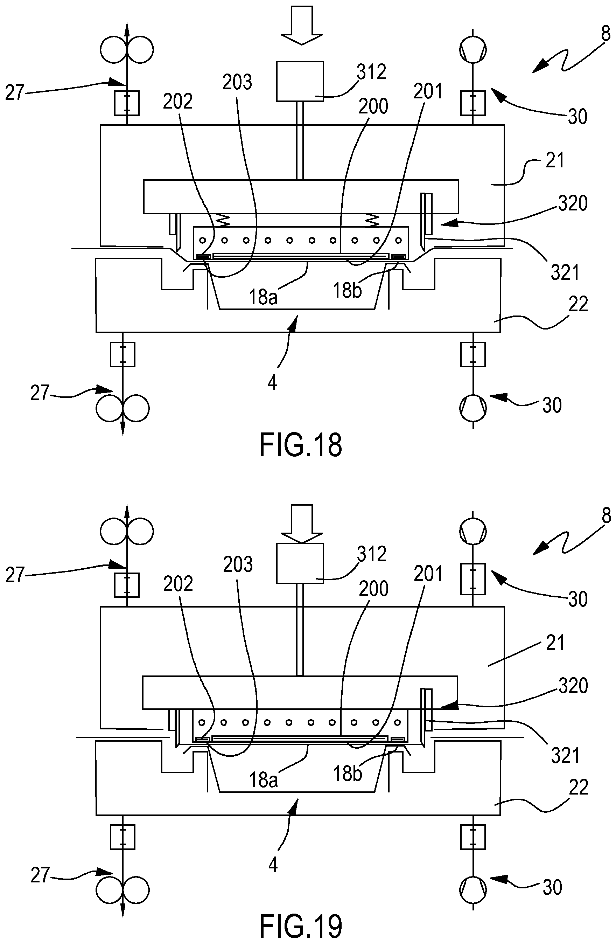

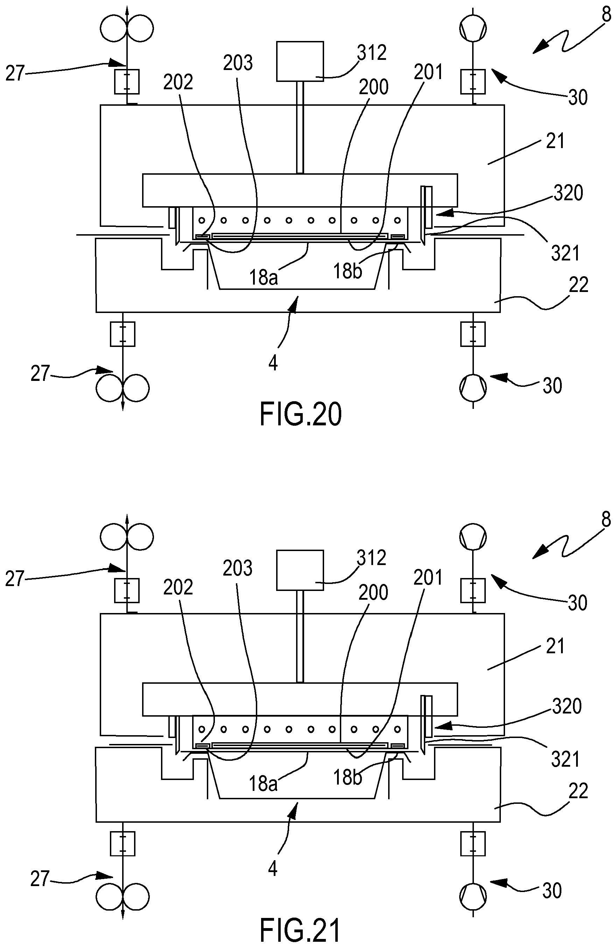

Once the chamber 24 has been closed (moving from the configuration of fig. 14 to that of fig. 15), and after operation of the vacuum and/or controlled atmosphere arrangements (figure 16 shows formation of vacuum and figure 17 creation of controlled atmosphere), the control device 100 is configured to act on auxiliary actuator 312 to impose a further vertical movement to the heating head 310 and thus bring the heating surfaces of inner and outer heater in contact with film 18 (figure 18). At this point, the peripheral region 18b of film portion 18a is trapped between the peripheral heating element 202 heating surface and the rim 4c of the tray positioned into seat 4. Then a further movement of the heating head e.g. operated by auxiliary actuator 312 brings the cutting unit 320 (figure 19) to bring the cutting tool 321 against film 18 and thus cut the film portion 18a. Then, or substantially contemporaneously with the cutting (note however that the heating cycle may also start as soon as one of the heaters contacts the film), the control device 100 may start the heating cycle as described above bringing the heating surface of the peripheral heater 202 at the first temperature for a short time interval sufficient for heat sealing the peripheral border 18b to the rim 4c. in case a shrinkable film is being used the control device 100 also brings the temperature of the inner heater to the second temperature for a short time interval sufficient to obtain a controlled heat shrinking of the film portion covering the tray mouth which thus takes a perfectly controlled flat shape. Figures 19 and 20 show schematically that first the peripheral heater is brought to the first temperature (peripheral heater shaded in figure 19) and then (figure 20) also the inner heater 200 is brought to the second temperature (heaters both shaded). Once the heating cycle is completed both heaters may be cooled (interrupting supply of energy to the heaters and optionally circulating cooling fluid in cooling circuit 220 (figure 21). Then the control device 100 opens the packaging chamber 24 the tray with applied film to proceed downstream the packaging assembly. The cycle may then be repeated.

### Third embodiment of the apparatus 1

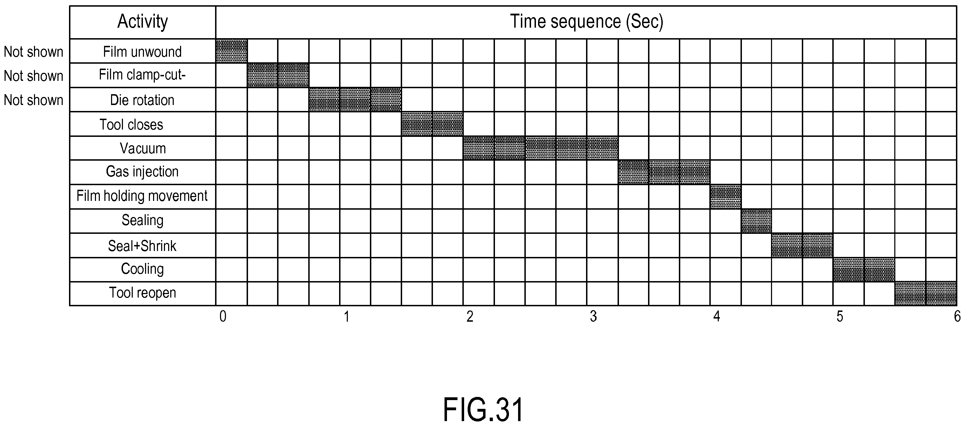

Reference is made to figures 1 and 23-31. The structure of the third embodiment is similar to that of the first embodiment a part from the following differences. Thus, for sake of conciseness only the aspects and components of this second embodiment differing from those of the first embodiment will be described: the above description made for the first embodiment with reference to components with the same reference numerals also applies for the third embodiment and is not repeated. Also the aspects described above (see first embodiment) in connection with figures 32, 33, 34, 32A, 32B, 33A, 33B may be used in connection with this third embodiment.

The apparatus 1 is adapted for vacuum skin packaging of the product P, where a thin film of plastic material, such as film sheet 18 described below, is draped down on the product P and intimately adheres to a top rim 4c and to the inner surface of the support 4 as well as to the product surface thus leaving a minimum, if any, amount of air within the packaging. The apparatus 1 may however also be used in case a film sheet 18 is applied to a tray or support with modified atmosphere previously created in the tray. The apparatus 1 may also be used for packaging of products on flat supports.

The frame 2 defines a base body of the apparatus 1 and serves to carry and support various parts of the apparatus 1 as herein described. The transport assembly 3 for the trays 4 is analogous to that of the first embodiment.

The film driving assembly 5 includes a film roll 10 which supplies a continuous film 18. The film supplying assembly 5 may further comprise an arm 11 (represented in dashed lines in figure 1) fixed to the frame 2 and suitable for supporting the roll 10. Further, the film supplying assembly 5 may comprise film punching devices (not show as per se known) configured essentially to provide the correct profile to the film edges to match, when transversally cut by cutting unit 320, the shape of the tray 4 mouth with rounded corners. The punching devices may also help to keep an unrolled portion of film pulled from the film roll 10 aligned according to a prefixed direction. The film 18 driving assembly 5 also comprises pinch rollers 12 and/or other means for pulling the film from the roll 10 and properly position it at the cutting station, in correspondence of the film cutting unit 320 (for instance said means may comprise pincers acting on the side of the film and/or pincers acting on the front edge of the film and configured to pull the film). The film rolled on the film roll 10 may be made and have the structure disclosed in the above section dedicated to the film, depending upon the specific need.

The apparatus 1 of the third embodiment is designed for cutting a continuous film 18 into discrete film portions 18a at a location (a cutting station where cutting unit 320 operates) spaced from and positioned outside packaging assembly 8 and for then transporting the cut film portion into the packaging assembly 8, where the film portions 18a are bonded to the respective supports or trays 4. The apparatus 1 comprises a device for transferring the cut film sheet or sheets from the cutting station to a position above the tray inside the packaging assembly; however, how the cut film sheet is transported to the packaging assembly and above the respective tray or support is not relevant: non-limiting examples of suitable transfer devices are provided herein below.

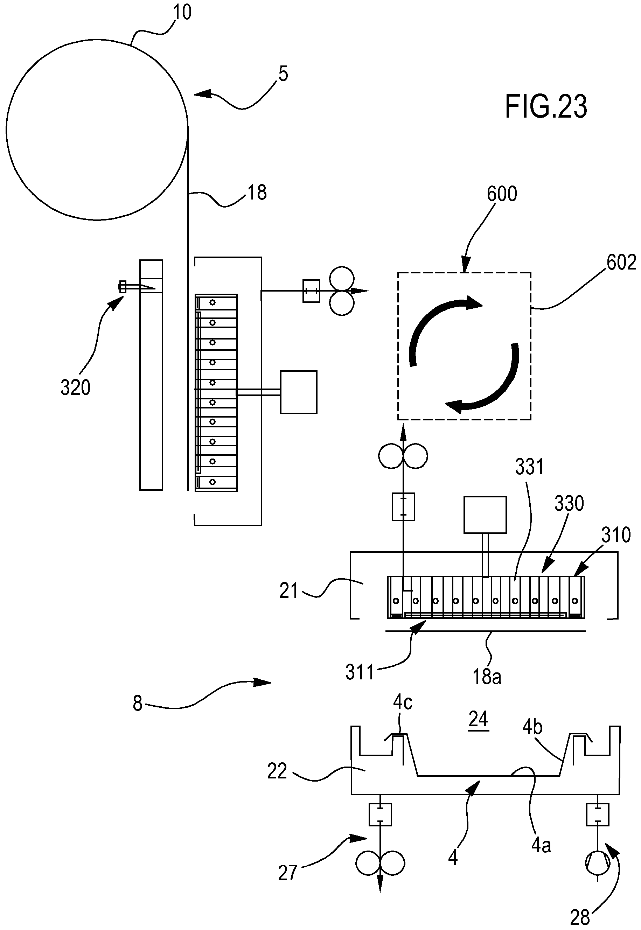

The film cutting unit 320 may be located at the cutting station (see figure 1 and figure 23). The cutting unit 320 comprises a cutting tool 321 with a blade and a blade piston. This piston may be replaced by any other kind of electric, pneumatic or hydraulic linear actuator. The blade piston is preferably fixed to the frame 2 and is connected to the cutting tool 321 so as to push and pull it in a direction transverse to the unrolled portion of the film 18, as indicated by the double arrow A2 shown in Figure 1. Note that the film 18 may be unrolled in a vertical direction with the cutting tool moving horizontally.

The packaging assembly 8, includes a lower tool 22 and an upper tool 21. The lower tool 22 comprises a prefixed number of seats 23 for receiving said one or more supports 4, while the upper tool 21 is configured for holding at least the cut film sheet(s). The upper tool and the lower tool are configured to be movable the one relative to the other between at least a first operating condition, where the lower tool and the upper tool are spaced apart and allow positioning of the one or more supports 4 at said seats 23, and a second operating condition, where the lower tool and the upper tool are approached the one against the other such as to define or contribute to define a packaging chamber 24. in one aspect, the packaging chamber 24 may be hermetically closed with respect to the outside atmosphere, meaning that the packaging chamber 24 may be brought to a condition where it cannot freely communicate with the atmosphere outside the same chamber and gas may only be supplied or withdrawn from the chamber via appropriate supply or discharge channels under the control of the apparatus 1.

As schematically shown in figures 1 and 23, the cut film portions 18a may be moved into the packaging chamber 24 of the assembly 8 by means of a transfer device. The transfer device may be of any suitable kind.

For instance, in accordance with a 1^{st} possible alternative - the transfer device 600 may include a transfer mechanism 601 (figure 1) acting on the cut film sheet(s) may be used for transporting the cut film sheet from the cutting station where the cutting assembly cuts the film portions 18a into the packaging assembly 8 and then leaving the packaging assembly 8.

Alternatively, the transfer device may include a displacement mechanism 602 (figure 23) configured to move the upper tool 21 from the packaging assembly 8 to the position outside where the cutting unit effects the cutting of the film sheets; in this way the upper tool 21 is allowed to pick the cut film portion(s) 18a and return to the packaging assembly 8 in alignment with the lower tool 22, thereby bringing the cut film portion(s) 18a into the packaging chamber 24 and above the trays. Note that other ways could be envisaged for transfer of a pre-cut film sheet or sheets inside the packaging assembly 8, without departing from the scope of the invention: in practice any solution adapted to pick the film sheet and transfer it into the packaging assembly may be suitable.

Finally, as to the packaging assembly 8, the upper tool 21 does not need any cutting unit 320 and the heating head has a respective active surface configured for receiving the film portion 18a and particularly of said cut film sheet. Holding means 330 are associated to the head 310 and are configured for attracting the film portion or film sheet 18a towards the active surface 311. The holding means 330 may comprises a plurality of suction apertures 331 leading to the active surface, at least one vacuum source, e.g. comprising a vacuum pump controlled by the control device 100 and connected to the suction apertures 331, and at least one selector valve, also controlled by the control device 100, selectively connecting said suction apertures either to said vacuum source or to a vent line. The control unit 100 may be configured to activate the holding means by switching the selector valve to a position where the valve connects the suction apertures to the vacuum source thereby causing suction of gas through the apertures. Alternatively, two valves may be used which may selectively be opened and closed to determine a fluid connection between said apertures either to the vacuum source or to the vent line. Note that in addition or in alternative to vacuum source the holding means 330 may include one or more of the following:
- mechanical holders, such as pincers, clamps or the like,
- adhesive systems, for instance comprising adhesive portions associated to the active surface 311,
- heating systems, for instance comprising heatable portions - controlled by control device 100 - associated to the holding means for causing heating of the active surface and thus of the film sheet 18 in order to increase stickiness of the film sheet to the active surface,
- electric systems, for instance the active surface may be charged with a polarity different from that typical of the plastic sheet 18.

Although the apparatus 1 may have one or both the vacuum arrangement 27 and the controlled atmosphere arrangement 30, it is to be understood that the control unit 100 of the apparatus 1 may also be configured to tightly engage the film portions 18a to the trays without activating the vacuum arrangement or the controlled atmosphere arrangement and thus leaving the normal environment atmosphere within the tray. This may be for instance the case for nonperishable products. Thus in a version, the apparatus 1 may be designed without vacuum arrangement and without modified atmosphere arrangement.

Operation of the third embodiment is as follows. The operation takes place under control of control device 100 and achieves a process of packaging a product in a tray. In this case the described process allows skin packaging under modified atmosphere. In any case the apparatus 1 is also capable of making a skin packaging of the product. Moreover, the apparatus 1 may be used for applying a lid to a tray and thus packaging in normal ambient atmosphere.

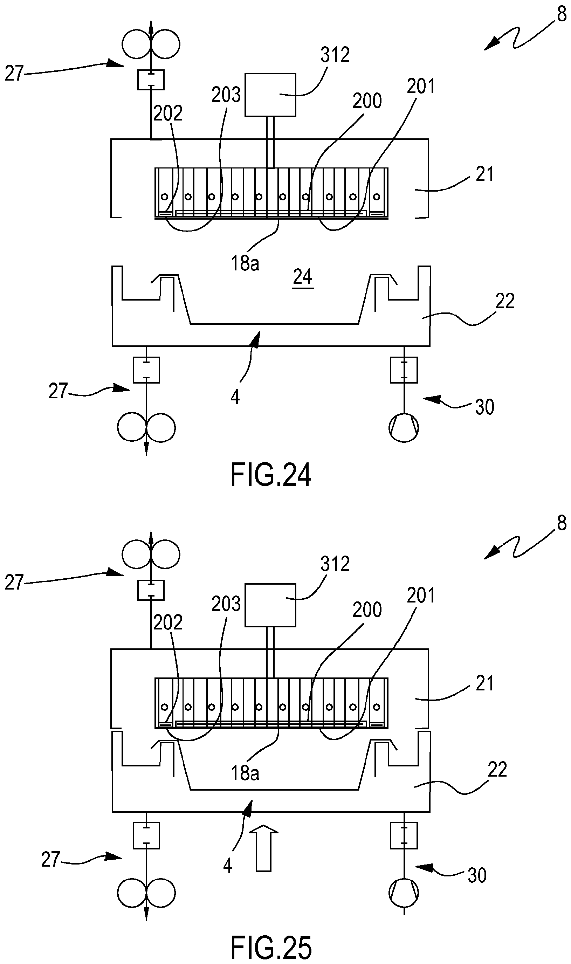

First at cutting station the cutting unit 320 cuts a film portion 18a in the form of a discrete film sheet from continuous film 18. Then either the upper tool 21 moves to the packaging station and picks up the cut film sheet or the cut film sheet is moved into the packaging assembly by transfer device 600. in this latter case the upper tool 21 picks the cut film portion and the transfer device leaves the packaging chamber 24 (fig. 24). Then, the upper and lower tools are aligned (if necessary) and moved from the first to the second operating condition (see figures 24 and 25), with the film portion 18a kept against the active surface of the heating head by the holding means 330 of the heating head 310 (and thus also against the heating surfaces of the inner and peripheral heaters): preferably the film 18a is maintained at a distance from the top surface of the rim 4c.

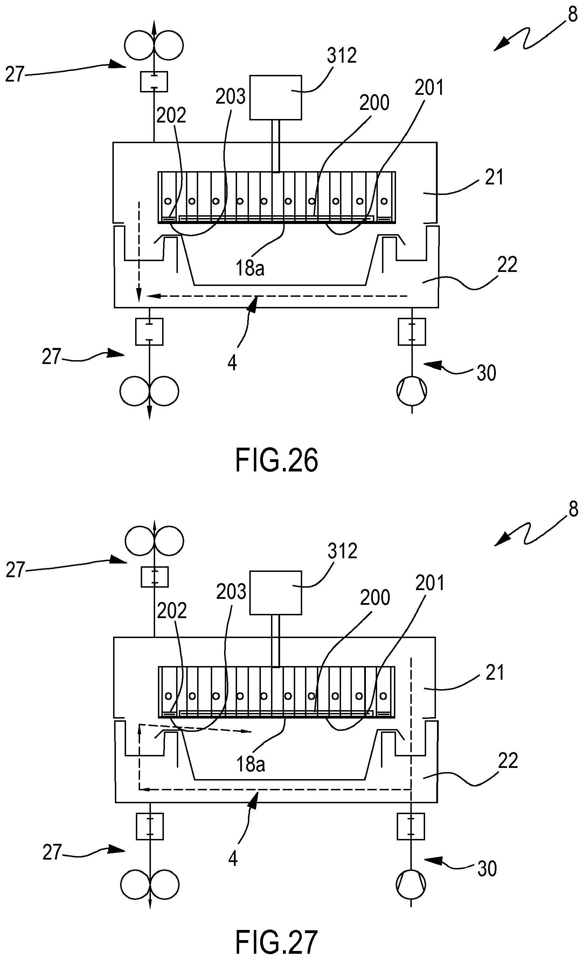

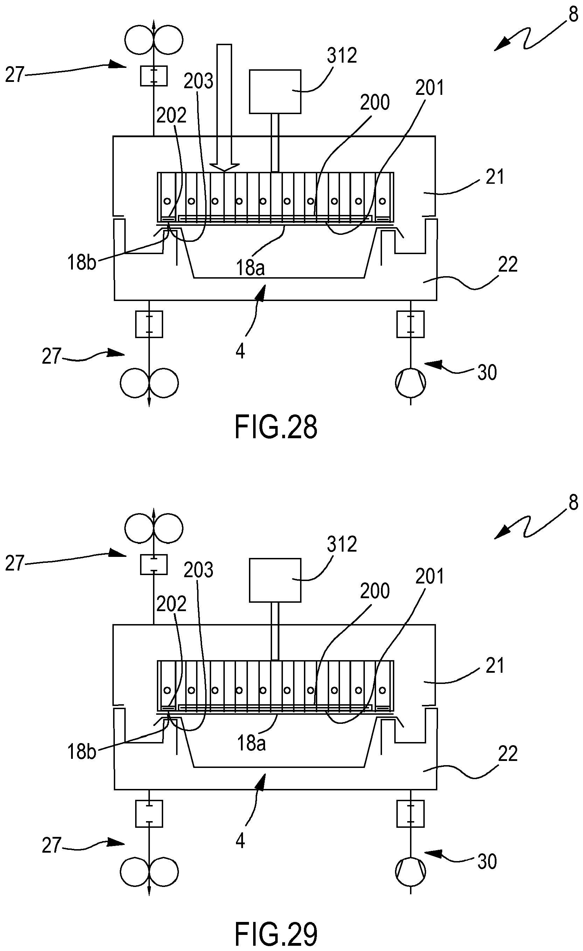

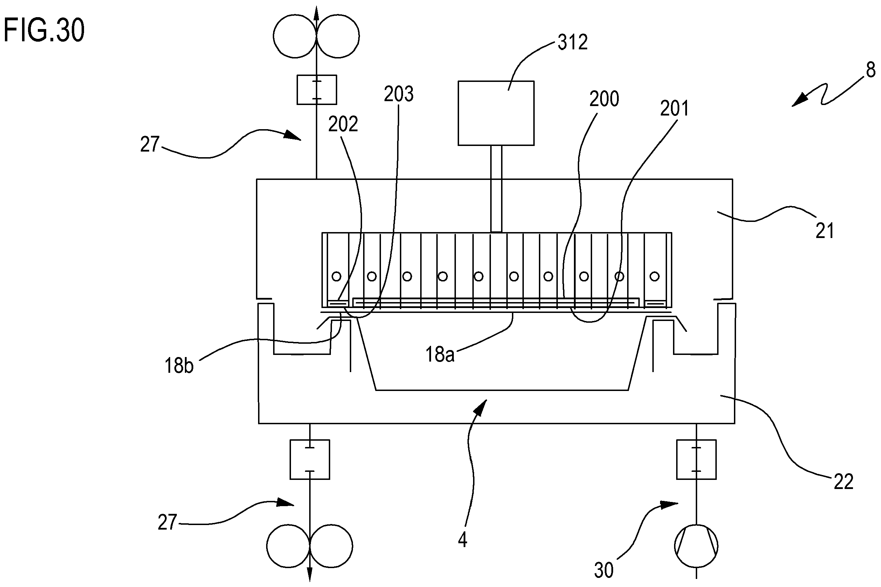

Once the chamber 24 has been closed (configuration of fig. 25), and after operation of the vacuum and/or controlled atmosphere arrangements (figure 26 shows formation of vacuum and figure 27 creation of controlled atmosphere), the control device 100 is configured to act on auxiliary actuator 312 to impose a further vertical movement to the heating head 310 and thus bring the heating surfaces of inner and outer heater carrying the cut film portion 18a towards the surface 23a such that with film portion 18a (and in detail a peripheral border 18b of film sheet 18a) is pressed against the top surface of rim 4c (figure 28). At this point, the peripheral region 18b of film portion 18a is trapped between the peripheral heating element 202 heating surface and the rim 4c of the tray positioned into seat 4. Then, the control device 100 may start the heating cycle as described above bringing the heating surface of the peripheral heater at the first temperature for a short time interval sufficient for heat sealing the peripheral region 18b to the rim 4c. in case a shrinkable film is being used the control device 100 also brings the temperature of the inner heater to the second temperature for a short time interval sufficient to obtain a controlled heat shrinking of the film portion covering the tray mouth which thus takes a perfectly controlled flat shape. Figures 29 and 20 show schematically that first the peripheral heater is brought to the first temperature (peripheral heater shaded in figure 29) and then (figure 30) also the inner heater is brought to the second temperature (heaters both shaded). Once the heating cycle is completed both heaters may be cooled (interrupting supply of energy to the heaters and optionally circulating cooling fluid in cooling circuit 220. Then the control device 100 opens the packaging chamber 24 the tray with applied film to proceed downstream the packaging assembly. The cycle may then be repeated.

### Fourth embodiment

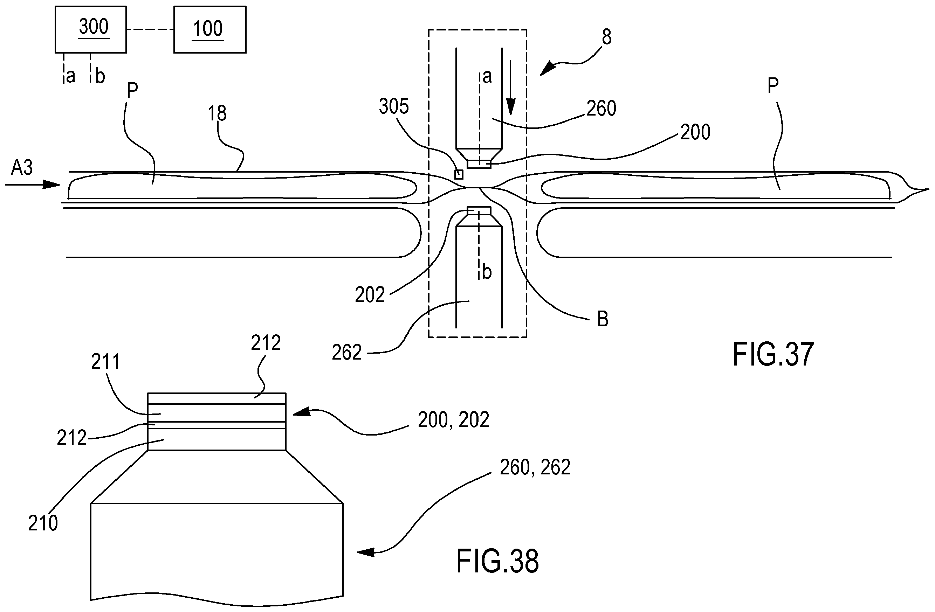

A fourth embodiment shown with reference to figures 36 and 37 relates to a packaging apparatus 1 comprising a packaging assembly 8 configured for receiving a product P to be packaged and at least one film 18 for packaging the product P, a heater 202 (in the example of figure 37, two opposed heaters 200, 202 carried by respective heating bars 260 and 262 are shown - of course a solution with a single heater is also possible) associated to the packaging assembly and having a heating surface configured to heat seal one or more parts of said film. In practice the heating surfaces of each heater 200, 202 are flat and straight bands acting each on a respective film 18 or film portion to heat seal the two film portions along a heat seal band. For instance the two film portions visible in figures 36 and 37 may be part of a same tubular film 18 which - once crosswise seal bands are formed - create a film package around product P.

The heater 200, 202 comprises at least one electric conductive element; a supply unit 300 is connected to the electric conductive element of the heater and configured to supply electric energy to said heater by causing an electric current flow through said electric conductive element. According to an aspect of the invention, the electrically conductive element comprises an electrically conductive carbon structure 211 of the type described above, namely comprising (or exclusively formed of) one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

More in detail, the electrically conductive element comprises a structural substrate 210 carrying the carbon structure 211 and at least one protective layer 212 covering the carbon structure on a side opposite that of the structural substrate 210. in the embodiment shown, said carbon structure 211 is optionally sandwiched between two opposite protective layers, the protective layer opposite the structural substrate defining the heating surface of said heater.

The carbon structure may be of flat elongated conformation having a cross section with thickness of at least 5 µm and a width of at least 2 mm, optionally having a cross section with thickness of at least 10 µm and a width of at least 5 mm.

The carbon structure preferably presents an average electric resistivity higher than 5 Ω•mm²/m, optionally comprised between 15 and 25 Ω·mm²/m.

Control device 100 acts on supply unit 300 connected to the conductive carbon structures 211. The control device 100 is configured for commanding the supply unit and control a supply of electric energy to the heater.

The control device 100 is in particular configured to command the supply unit 300 to execute a heating cycle including the following steps:
applying an electric voltage to the electrically conductive element to cause the increase in temperature of the heating surface of the heater (or heaters) to a first temperature,
maintaining said electric voltage for keeping the heating surface of the heater at least at the first temperature for a first discrete time interval,
reducing or nullifying the voltage applied to the electrically conductive element for reducing the temperature of the heating surface of the heater below said first temperature.

The first discrete time period has a duration comprised between 0,2 and 5 seconds, in particular between 0,5 and 1,5 seconds, and the electric voltage is maintained applied to the electrically conductive element for a time period substantially equal to the first discrete time period.

The first temperature may be comprised in the range between 150 °C and 300 °C, while said second temperature is comprised in the range between 180 °C and 240 °C, more optionally between 200 °C and 220 °C. Analogous to the previously described embodiments, the electric supply unit 300 comprises at least one impulse transformer configured to generate voltage pulses of a duration comprised 0,2 and 5 seconds (in particular between 0,5 and 1,5 seconds), at least one electric circuitry connecting the impulse transformer to the electrically conductive element: the control device 100 is configured to act on the supply unit 300 to supply electric current at a predetermined voltage and for a predetermined time period to said electrically conductive element such as to keep the heating surface of the heater at least at the first temperature for a first discrete time interval sufficient to form the heat-seal band and then supply of electric energy is interrupted (or substantially reduced) until the subsequent heat cycle for forming the next heat-seal band.

A first temperature sensor 305 may be provided configured for detecting a temperature of the heating surface of the heater and emitting a corresponding first temperature signal correlated to the detected temperature. The control device 100 is connected to said first temperature sensor, and is configured for receiving said first temperature signal and controlling the supply unit to supply of electric energy to the electrically conductive element, optionally by regulating voltage applied to the electrically conductive element and/or duration of application of said voltage, based on said first temperature signal and on a desired value for said first temperature. Note that the first temperature sensor may be a contact temperature sensor or a contactless temperature sensor (e.g. an IR sensor). Also note that presence of the first temperature sensor may not be necessary and temperature of the heating surface may be calculated based on the measured electric resistance of the first electrically conductive element as already discussed for the previous embodiments

Operation of the fourth embodiment is as follows. The operation takes place under control of control device 100 and achieves a process of packaging a product within a film packaging.

First a tubular film is formed in a conventional manner (e.g. by extrusion or by longitudinally bonding two opposite longitudinal edges of a flat film). Then a product P is positioned inside the cavity formed by the tubular film. Then the assembly formed by film and product is moved to the packaging assembly 8 along direction of arrow A3 in figure 37. At regular intervals before and after product P a transvers seal band B - which is substantially transversal to direction of movement A3 - is formed. Each transfer heat seal band B is formed by bringing the heaters 200, 202 one against the other or alternatively by bringing a single heater 200 against the surface of the film this latter being supported at the opposite side by a supporting bar or other supporting element. Once one or both the heaters contact the film and close one against the other two opposite film portions to be sealed, the heating cycle described above may be initiated. Once the seal is formed the heating cycle is interrupted, the tubular film is advanced by a prefixed length and a new seal is formed as described above at a distance from the previous seal thus closing and sealing a film package around a product P.

### Control device of apparatus 1

The apparatus according to the invention has of at least one control unit.

The control unit 100 may comprise a digital processor (CPU) with memory (or memories), an analogical type circuit, or a combination of one or more digital processing units with one or more analogical processing circuits. In the present description and in the claims it is indicated that the control unit 100 is "configured" or "programmed" to execute certain steps: this may be achieved in practice by any means which allow configuring or programming the control unit. For instance, in case of a control unit 100 comprising one or more CPUs, one or more programs are stored in an appropriate memory: the program or programs containing instructions which, when executed by the control unit, cause the control unit 100 to execute the steps described and/or claimed in connection with the control unit. Alternatively, if the control unit 100 is of an analogical type, then the circuitry of the control unit is designed to include circuitry configured, in use, to process electric signals such as to execute the control unit steps herein disclosed.

In general terms the control unit 100 acts on and controls the transport assembly 3, the film cutting unit 320, the transfer device 46, the packaging assembly 8 and particularly the upper and/or lower tools 21, 22, the vacuum arrangement, the controlled atmosphere arrangement. In particular, the control unit 100 may be configured for controlling execution of the processes claimed in the attached claims, of the processes described in the summary section and of the operations described in the above detailed description.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

The specific nature of the actuators described is exemplificative and alternative types of actuators may be used provided the type of motion imposed to the mobile parts on which said actuators are operating is the same.

Also note that although the described embodiments show a single packaging assembly, multiple packaging assemblies may be used in parallel in order to optimize productivity.

### Technical effects and advantages

The above described and the claimed aspects of the invention achieve technical effects and advantages which are briefly summarized herein below.

The possibility to control in an independent manner the peripheral 202 and the inner heater 200, for instance under the control of control device 100 and supply unit 300, allows to have an accurate control of the heating surfaces temperature both in term of location where temperatures are increased and in term of duration of the temperature increase. This leads to the possibility to use any kind of film, namely also films of the heat-shrinkable type or films which may undergo thermal distortion, thus insuring the possibility to achieve packaging having a substantially perfect aesthetic appearance.

Furthermore, even when using highly shrinkable heat-shrinkable films, the process and apparatus according to the invention allow a an accurate control of the thermic profile in correspondence of the heating surfaces thus leading to a corresponding accurate control of the extent of shrink imposed onto the processed films, minimizing uncontrolled deformation in the film and transmission of forces to the tray which may cause tray distortion.

Additionally the control of the temperature of the heating surfaces of the peripheral 202 and inner heater 200 such that the surfaces are brought to the respective first and second temperatures for very short and defined time intervals allows to timely delay transmission of heat to the peripheral region 18b of a film portion 18a with respect to the transmission of heat to the central area of a film portion 18a. Thus, assuming to have to seal a film portion 18a to the top of a tray 4, it is possible to first star the heat sealing of the peripheral region 18b of the film portion 18a to the top rim 4c of the tray 4 and then initiate the heating of the central zone of the film portion (which may shrink or undergo thermal stresses) without transferring tangential forces (i.e. forces directed parallel to the top surface of the tray rim) which may compromise the heat bonding between film 18a and rim 4c, and transfer undesired stresses to the tray wall. Furthermore, it is possible according to aspects of the invention sharply reducing temperature of the heating surfaces in particular of the heating surface of the peripheral heater 202 while the same heating surface of the peripheral heater is still in contact with and exerts pressure on the film abutting against the tray rim, with the consequence that the bonding may effectively take place before bonding pressure is released thus obtaining a heat bonding without flaws and still keeping extremely short the overall time for completing the bonding cycle.

Moreover, the accurate control of the heating surfaces and the reduced time period during which said heating surfaces are kept at high temperatures, avoids dispersion of heat and undesired transmission of heat to other components. In particular the cutting device and the blades associated to the cutting device remain substantially cold thus avoiding problems of sticking, inefficient cutting and the like.

It should also be noted that the possibility to provide heat basically on demand, i.e. only when the execution of the bonding takes place, leads to significant saving of energy.

When the aspects of the invention are implemented using heaters provided with electrically conductive elements in graphene layers the above effects are furthermore enhanced as conductive elements in graphene layers have shown very little thermal inertia (and thus may be rapidly heated and cooled requiring less electric power and thus less energy from the supply unit), substantially no elongation or distortion even when brought to temperatures in the range of 200-250 °C (thus resulting in simple to execute structures and in reliable heaters). The absence of thermal elongation also leads to the perfect planarity of the graphene structures during the entire heating process with consequent perfect planarity of the heating surfaces and improved efficiency during heat bonding of the film.

## Claims

1. A packaging apparatus comprising:
a packaging assembly (8) configured for receiving at least one support (4) and for tightly fixing a film (18) to the support, the packaging assembly (8) including:
- a lower tool (22) defining a prefixed number of seats configured for receiving said at least one support (4) with a product to be packaged,
- an upper tool (21) facing and cooperating with the lower tool (22),
said upper tool (21) and lower tool (22) being relatively movable at least between a first operating condition, where the upper tool (21) and lower tool (22) are spaced apart the one from the other and allow positioning of at least one film portion (18a) of said film (18) above one or more of said at least one supports, and a second operating condition, where the upper tool (21) and lower tool (22) are approached to one another and allow heat sealing of said film portion (18a) to the at least one support (4) located at said one or more seats,
- an inner heater (200) carried by the upper tool (21) and having an heating surface configured to heat at least a part of said film portion,
- a peripheral heater (202) carried by the upper tool (21) and positioned radially outside with respect to the inner heater, the peripheral heater (202) having an heating surface configured to heat seal to the at least one support (4) at least a peripheral region of said film portion;
a supply unit (300) configured to control energy supplied to said peripheral heater (202) and to said inner heater; and
a control device (100) acting on the supply unit (300) and configured for commanding the supply unit (300) and control a supply of energy to the peripheral heater (202) independently from a supply of energy to the inner heater (200);
wherein said control device (100) is further configured to command the supply unit (300) to execute a heating cycle including the following steps:
increasing a temperature of the heating surface of the peripheral heater (202) to a first temperature, keeping the heating surface of the peripheral heater (202) at least at the first temperature for a first discrete time interval, reducing the temperature of the heating surface of the peripheral heater (202) below said first temperature,
increasing a temperature of the heating surface of the inner heater (200) to a second temperature, keeping the heating surface of the inner heater (200) at least at the second temperature for a second discrete time interval, reducing the temperature of the heating surface of the inner heater (200) below said second temperature; optionally wherein the first temperature is different from the second temperature;
yet further wherein said control device (100) is further configured to command the supply unit (300) to consecutively repeat execution of said heating cycle a plurality of times, during each of said consecutive heating cycles at least one of said film portions being heat sealed to at least one respective support.

2. A packaging apparatus according to claim 1, wherein said control device (100) is configured for controlling the supply unit (300) such that - during each heating cycle - the supply unit (300) supplies energy to the peripheral heater (202) only during a discrete time period followed by a time period when no energy is supplied to the peripheral heater (202) for causing the increase and keeping of the heating surface of the peripheral heater (202) at least at the first temperature for the first discrete time interval, and for causing a subsequent reduction of the temperature of the heating surface of the peripheral heater (202) below said first temperature;
and/or
wherein said control device (100) is configured for controlling the supply unit (300) such that - during each heating cycle - the supply unit (300) supplies energy to the inner heater (200) only during a discrete time period followed by a time period when no energy is supplied to the inner heater (200) for causing the increase and keeping of the heating surface of the inner heater (200) at least at the second temperature for the second discrete time interval, and for causing a subsequent reduction of the temperature of the heating surface of the inner heater (200) below said second temperature.

3. A packaging apparatus according to claim 1 or 2, wherein the heating cycle is configured such that the second temperature is inferior with respect to the first temperature;
wherein said first temperature is comprised between 150°C and 300°C, optionally wherein said first temperature is comprised between 180-240°C, more optionally wherein said first temperature is comprised between 200-220°C; and wherein said second temperature is comprised between 150°C and 300°C, optionally wherein said second temperature is comprised between 180-240°C, more optionally wherein said second temperature is comprised between 200-220°C.

4. A packaging apparatus according to any one of claims 1-3, wherein the first discrete time period has a duration comprised between 0,2 and 5 seconds, in particular between 0,5 and 1,5 seconds; and
wherein the second discrete time period has a duration comprised between 0,2 and 5 seconds, in particular between 0,5 and 1,5 seconds.

5. A packaging apparatus according to any one of claims 1-4, wherein the control device (100) is configured to command the supply unit (300) to sharply increase the temperature of the heating surface of the peripheral heater (202) from a respective baseline temperature to the first temperature, by sharply increasing it is meant increasing said temperature of the heating surface of the peripheral heater (202) with a temperature increase rate over time higher than 1°C/millisecond, optionally higher than 5°C/millisecond; and/or
wherein the control device (100) is configured to command the supply unit (300) to sharply increase the temperature of the heating surface of the inner heater (200) from a respective baseline temperature to the second temperature; by sharply increasing it is meant increasing said temperature of the heating surface of the inner heater (200) with a temperature increase rate over time higher than 1 °C/millisecond, optionally higher than 5°C/millisecond;
optionally wherein each heating cycle is configured such that the increasing of the temperature of the heating surface of the inner heater (200) to a second temperature starts after the increasing of the temperature of the peripheral heater (202) to the first temperature, the start of said second discrete time interval being delayed with respect to the start of said first time interval;
more optionally wherein the duration of said first discrete time interval is longer than the duration of said second discrete time interval.

6. A packaging apparatus according to any one of the preceding claims wherein:
- the heating surface of said peripheral heater (202) has an annular shape and surrounds the heating surface of the inner heater, and
- when the upper and lower tools are in said second operating position, the peripheral heater (202) is configured to heat a peripheral band of said film portion (18a) while the inner heater (200) is configured to heat at least a part of an inner zone of the same film portion (18a) located radially inside the peripheral band; optionally wherein both the heating surface of the peripheral heater (202) and the heating surface of the inner heater (200) are flat;
wherein at least when the upper and lower tools are in said second operating position, the heating surface of the inner heater (200) is coplanar to the heating surface of the peripheral heater (202) or indented with respect to the heating surface of the peripheral heater (202) such that when the heating surface of the peripheral heater (202) contacts a top surface of the film portion, the heating surface of the inner heater (200) is spaced apart by a prefixed distance from the top surface of the same film portion; in particular the indent being a slight indent of the order of 1 to 10 mm.

7. A packaging apparatus according to any one of the preceding claims wherein the heating surface of the inner heater (200) is located at a radial distance from the heating surface of the peripheral heater (202) and extends in an area surrounded by the heating surface of the peripheral heater; and
wherein said heating surface of the inner heater (200) is
- a heating surface of annular shape, or
- a continuous heating surface delimited by a single closed contour line, optionally a discoidal or polygonal continuous heating surface, said continuous heating surface occupying substantially all or a majority of said area surrounded by the heating surface of the peripheral heater, or
- a heating surface including a plurality of parallel spaced apart bands connected at ends thereof by connecting portions.

8. A packaging apparatus according to any one of the preceding claims, wherein the peripheral heater (202) comprises or is entirely formed by a first electrically conductive element extending along the heating surface of the peripheral heater; optionally wherein said first electrically conductive element is an electrically conductive annular element, more optionally wherein the first electrically conductive element is an electrically conductive annular flat element; and
wherein the inner heater (200) comprises or is entirely formed by a second electrically conductive element extending along the heating surface of the inner heater; optionally said second conductive element is an electrically conductive annular element, or an electrically conductive annular flat element, or an electrically conductive continuous plate, or an electrically conductive meander element.

9. A packaging apparatus according to the preceding claim, wherein the first electrically conductive element comprises:
- a supporting substrate carried by the upper tool,
- a metallic conductive band fixed to the supporting substrate, and
- an optional protective layer covering the metallic conductive band and defining the heating surface of the peripheral heater;
or:
- a supporting substrate carried by the upper tool,
- an insulating layer in contact with the supporting substrate,
- a conductive layer in the form of a metal-glass mixture in contact with the insulating layer, and
- a protective layer covering the conductive layer and defining the heating surface;
or wherein the first electrically conductive element comprises an electrically conductive carbon structure, and the electrically conductive carbon structure includes or is exclusively formed of one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

10. A packaging apparatus according to the preceding claim, wherein the first electrically conductive element comprises an electrically conductive carbon structure and the first electrically conductive element comprises a structural substrate carrying said carbon structure and at least one protective layer covering the carbon structure on a side opposite that of the structural substrate or said carbon structure is sandwiched between two opposite protective layers, the protective layer opposite the structural substrate defining the heating surface of said peripheral heater;
wherein the carbon structure of the first electrically conductive element of the peripheral heater (202) has a cross section with thickness of at least 5 µm and a width of at least 2mm, more optionally a cross section with thickness of at least 10 µm and a width of at least 5mm; and
wherein the carbon structure of the first electrically conductive element of the peripheral heater (202) has an average electric resistivity higher than 5 Ω•mm²/m, optionally comprised between 15 and 25 Ω•mm²/m.

11. A packaging apparatus according to any one of the preceding three claims, wherein the second electrically conductive element comprises:
- a supporting substrate carried by the upper tool,
- a metallic conductive structure selected in group of: a band, a plate and a meander, said metallic conductive structure being fixed to the supporting substrate, and
- an optional protective layer covering the metallic conductive structure and defining the heating surface of the peripheral heater;
or:
- a supporting substrate carried by the upper tool,
- an insulating layer in contact with the supporting substrate,
- a conductive structure in the form of a metal glass mixture layer taking the shape of a band, a plate or a meander, said conductive structure being in contact with the insulating layer, and
- a protective layer covering the conductive layer and defining the heating surface;
or wherein the second electrically conductive element, optionally in the form of a flat annular or plate or meander shaped element, comprises an electrically conductive carbon structure; the electrically conductive carbon structure includes or is exclusively formed of one or more carbon allotropes in the group of:
- a graphite structure,
- a single or multi-layer graphene structure,
- a fullerene structure, where the carbon atoms are bonded together in spherical, tubular, fiber-like or ellipsoidal formations: in particular the fullerene structure may take the form of carbon nanotubes or carbon nanofibers.

12. A packaging apparatus according to the preceding claim, wherein the second electrically conductive element, optionally in the form of a flat annular or plate or meander shaped element, comprises an electrically conductive carbon structure;
wherein the second electrically conductive element comprises a structural substrate carrying the respective carbon structure and at least one protective layer covering the carbon structure on a side opposite that of the structural substrate, optionally wherein said carbon structure is sandwiched between two opposite protective layers, the protective layer opposite the structural substrate defining the heating surface of said inner heater; for example, the electrically conductive carbon structure of the second electrically conductive element may comprise one or more graphene layers;
wherein the carbon structure of the second electrically conductive element of the inner heater (200) has a cross section with thickness of at least 5 µm and a width of at least 5 mm, more optionally a cross section with thickness of at least 10 µm and a width of at least 10mm; and
wherein the carbon structure of the second electrically conductive element of the inner heater (200) has an average electric resistivity higher than 2Ω•mm²/m, optionally higher than 2Ω•mm2/m

13. A packaging apparatus according to any one of the preceding claims from 8 to 12, wherein the supply unit (300) is an electric supply unit and comprises:
- at least one impulse transformer,
- at least one electric circuitry connecting the impulse transformer to the first electrically conductive element and to the second electrically conductive element;
or
wherein the supply unit (300) is an electric supply unit and comprises:
- at least a first impulse transformer and a first electric circuitry connecting the first impulse transformer to the first electrically conductive element, and
- at least a second impulse transformer and a second electric circuitry connecting the second impulse transformer to the second electrically conductive element,
wherein said control device (100) is configured to act on the electric supply unit (300) to independently supply electric current at a predetermined voltage to said first and, respectively, second electrically conductive elements.

14. A packaging apparatus according to any one of the preceding claims, wherein the apparatus comprises:
- a first temperature sensor configured for detecting a temperature of the heating surface of the peripheral heater (202) and emitting a corresponding first temperature signal correlated to the detected temperature, wherein the first temperature sensor is a contact temperature sensor or a contactless temperature sensor; or
- a first electric sensor, electrically connected or connectable to the carbon structure of the peripheral heater (202) and configured for detecting an electric parameter of said carbon structure and emitting a corresponding electric parameter signal, the electric parameter comprising one of
∘ an electric impedance of a prefixed segment of said carbon structure,
∘ an electric current flowing through said prefixed segment of carbon structure when a prefixed electric voltage is applied at ends of said prefixed segment,
∘ an electric voltage detected at ends of the prefixed segment when a prefixed electric current is imposed to flow through said prefixed segment;
further wherein the apparatus comprises:
- a second temperature sensor for detecting a temperature of the heating surface of the inner heater (200) and emitting a corresponding second temperature signal correlated to the detected temperature, wherein the second temperature sensor is a contact temperature sensor or a contactless temperature sensor; or
- a second electric sensor, electrically connected or connectable to the carbon structure of the inner heater (200) and configured for detecting an electric parameter of said carbon structure and emitting a corresponding electric parameter signal, the electric parameter comprising one of
∘ an electric impedance of a prefixed segment of said carbon structure,
∘ an electric current flowing through said prefixed segment of carbon structure when a prefixed electric voltage is applied at ends of said prefixed segment,
∘ an electric voltage detected at ends of the prefixed segment when a prefixed electric current is imposed to flow through said prefixed segment;
yet further wherein the control device (100) is connected to said first temperature sensor and is configured for:
- receiving said first temperature signal and controlling the supply unit (300) to supply of energy to the peripheral heater (202) based on said first temperature signal and on a desired value for said first temperature, or
the control device (100) is connected to said first electric sensor, and is configured for:
- receiving said electric parameter signal and controlling the supply unit (300) to supply electric energy to the electrically conductive element of the peripheral heater, optionally by regulating voltage applied to the electrically conductive element and/or duration of application of said voltage, based on said electric parameter signal and on a desired value for a temperature of the heating surface of the heater;
and wherein the control device (100) is connected to the second temperature sensor and is configured for:
- receiving said second temperature signal and controlling the supply unit (300) to supply of energy to the inner heater (200) based on said second temperature signal and on a desired value for said second temperature, or
the control device (100) is connected to said second electric sensor, and is configured for
- receiving said electric parameter signal and controlling the supply unit (300) to supply electric energy to the electrically conductive element of the inner heater, optionally by regulating voltage applied to the electrically conductive element and/or duration of application of said voltage, based on said electric parameter signal and on a desired value for a temperature of the heating surface of the heater.

15. A packaging apparatus according to any one of the preceding claims, wherein:
- the upper tool (21) comprises a heating head having a respective active surface,
- the peripheral heater (202) and the inner heater (200) are both carried by said heating head,
- the heating head is configured to take a film sealing position, preferably in correspondence of said second operating condition of the upper and lower tools, wherein at said film sealing position at least the heating surface of the peripheral heater (202) is configured to press against a corresponding top surface of said film portion (18a) and allow heat sealing of the film portion (18a) to the underlying at least one support, and optionally wherein at said heat sealing position the heating surface of said inner heater (200) is configured to contact or be placed at a prefixed distance from the top surface of said film portion,
- the control device (100) being configured for controlling the packaging assembly (8) such that - during each said heating cycle - the heating head keeps said film sealing position at least during said first discrete time interval, preferably until after expiration of said first discrete time interval;
or wherein:
- the upper tool (21) comprises a heating head having a respective active surface,
- the peripheral heater (202) and the inner heater (200) are both carried by said heating head,
- the heating surface of the inner heater (200) and the heating surface of the peripheral heater (202) have both annular shape and form part of said active surface, with the heating surface of the peripheral heater (202) located at a radial distance from and surrounding the heating surface of the inner heater,
- in a position radially internal to the heating surface of the inner heater, the heating head presents a central recess of fixed volume which - when the upper and lower tools are in said second operating condition - extends vertically away from the lower tool (22) to define a space where at least a part of a product located on a support (4) positioned in one of said seats is receivable;
or wherein:
- the upper tool (21) comprises a heating head with a respective active surface,
- the peripheral heater (202) and the inner heater (200) are both carried by said heating head,
- the heating surface of the peripheral heater (202) and the heating surface of the inner heater (200) lays in a common plane with and forming part of said active surface, and
- the heating surface of the peripheral heater (202) is located at a radial distance from and surrounds the heating surface of the inner heater;
or wherein:
- the upper tool (21) comprises a heating head with a respective active surface,
- the peripheral heater (202) and the inner heater (200) are both carried by said heating head,
- the heating surface of the peripheral heater (202) and the heating surface of the inner heater (200) form part of said active surface,
- the heating head includes a central body carrying the inner heater (200) and a peripheral body carrying the peripheral heater (202) and surrounding the central body, the peripheral body and the central body being configured to be relatively movable to form a central recess the volume of which is determined by the relative position of the peripheral body with respect to the central body, said central recess being positioned such that - when the upper and lower tools are in said second operating condition - it extends vertically away from the lower tool (22) to define a space where at least a part of a product located on a support (4) is receivable.

16. Use of an apparatus according to any one of the preceding claims for packaging a product (P) using a tray with a tray base, a tray sidewall and a tray top rim wherein the product is positioned inside the tray and wherein a film (18) of the heat-shrinkable type is heat sealed to the top surface of the tray rim; optionally wherein the inner heater (200) is brought to the second temperature after the peripheral heater (202) contacts the film, with the film (18) being in contact with the support or tray (4), and after the peripheral heater (202) heating surface is brought to the first temperature.

17. Process of packaging a product arranged on a support, using an apparatus according to any one of the preceding claims, the process comprising the following steps:
- positioning one or more supports in correspondence of said one or more seats,
- positioning at least one film portion, in the form of a longitudinal portion of a continuous sheet or in the form of a pre-cut discrete film sheet, above respective one or more supports located in said one or more seats,
- keeping the upper and lower tools in said first operating condition a time sufficient for the supports and for the corresponding film portion (18a) to properly position,
- moving the upper and lower tools in said second operating condition with the said film portion (18a) positioned above the respective support or supports (4),
- heat sealing the film portion (18a) to the support (4), the step of heat sealing including the following sub-steps:
• causing the heating surface of the peripheral heater (202) to contact the film portion top surface of the support or supports (4) located in said seat or seats,
• increasing a temperature of the heating surface of the peripheral heater (202) to a first temperature,
• keeping the heating surface of the peripheral heater (202) at least at the first temperature for a first discrete time interval,
• reducing the temperature of the heating surface of the peripheral heater (202) below said first temperature,
• causing the heating surface of the inner heater (200) to contact or be placed at a prefixed distance from the top surface of said film portion,
• increasing a temperature of the heating surface of the inner heater (200) to a second temperature, keeping the heating surface of the inner heater (200) at least at the second temperature for a second discrete time interval, reducing the temperature of the heating surface of the inner heater (200) below said second temperature,
- positioning the upper and lower tools in said first operating condition,
- moving the number of supports with the tightly fixed film away from the packaging assembly.

## Patentansprüche

1. Verpackungsvorrichtung, umfassend:
eine Verpackungsanordnung (8), welche dazu eingerichtet ist, wenigstens eine Halterung (4) aufzunehmen und eine Folie (18) fest an der Halterung zu fixieren,
wobei die Verpackungsanordnung (8) umfasst:
- ein unteres Werkzeug (22), welches eine vorgegebene Anzahl von Sitzen definiert, welche dazu eingerichtet sind, wenigstens eine Halterung (4) mit einem zu verpackenden Produkt aufzunehmen,
- ein oberes Werkzeug (21), welches dem unteren Werkzeug (22) zugewandt ist und damit zusammenwirkt,
wobei das obere Werkzeug (21) und das untere Werkzeug (22) wenigstens zwischen einem ersten Betriebszustand, in welchem das obere Werkzeug (21) und das untere Werkzeug (22) voneinander beabstandet sind und ein Positionieren wenigstens eines Folienabschnitts (18a) der Folie (18) oberhalb einer oder mehrerer der wenigstens einen Halterung erlauben, und einem zweiten Betriebszustand relativ beweglich sind, in welchem das obere Werkzeug (21) und das untere Werkzeug (22) einander angenähert sind und ein Heißsiegeln des Folienabschnitts (18a) an die an dem einen oder den mehreren Sitzen angeordneten wenigstens eine Halterung (4) erlauben,
- eine innere Heizeinrichtung (200), welche durch das obere Werkzeug (21) getragen ist und eine Heizfläche aufweist, welche dazu eingerichtet ist, wenigstens einen Teil des Folienabschnitts zu erwärmen,
- periphere Heizeinrichtung (202), welche durch das obere Werkzeug (21) getragen ist und in Bezug auf die innere Heizeinrichtung radial außerhalb positioniert ist, wobei die periphere Heizeinrichtung (202) eine Heizfläche aufweist, welche dazu eingerichtet ist, an die wenigstens eine Halterung (4) wenigstens einen peripheren Bereich des Folienabschnitts heißzusiegeln;
eine Versorgungseinheit (300), welche dazu eingerichtet ist, die periphere Heizeinrichtung (202) und die inneren Heizeinrichtung zugeführte Energie zu steuern; und
eine Steuereinrichtung (100), welche auf die Versorgungseinheit (300) wirkt und dazu eingerichtet ist, die Versorgungseinheit (300) anzuweisen und eine Versorgung der peripheren Heizeinrichtung (202) mit elektrischer Energie unabhängig von einer Versorgung der inneren Heizeinrichtung (200) mit Energie zu steuern, wobei die Steuereinrichtung (100) ferner dazu eingerichtet ist, die Versorgungseinheit (300) anzuweisen, einen Heizzyklus auszuführen,
welcher die folgenden Schritte umfasst:
Erhöhen einer Temperatur der Heizfläche der peripheren Heizeinrichtung (202) auf eine erste Temperatur, Halten der Heizfläche der peripheren Heizeinrichtung (202) wenigstens bei der ersten Temperatur für ein erstes diskretes Zeitintervall, Verringern der Temperatur der Heizfläche der peripheren Heizeinrichtung (202) unter die erste Temperatur,
Erhöhen einer Temperatur der Heizfläche der inneren Heizeinrichtung (200) auf eine zweite Temperatur, Halten der Heizfläche der inneren Heizeinrichtung (200) wenigstens bei der zweiten Temperatur für ein zweites diskretes Zeitintervall, Verringern der Temperatur der Heizfläche der inneren Heizeinrichtung (200) unter die zweite Temperatur; optional wobei sich die erste Temperatur von der zweiten Temperatur unterscheidet;
noch ferner wobei die Steuereinrichtung (100) dazu eingerichtet ist, die Versorgungseinheit (300) anzuweisen, eine Ausführung des Heizzyklus mehrere Male aufeinanderfolgend zu wiederholen, wobei während jedes der aufeinanderfolgenden Heizzyklen wenigstens einer der Folienabschnitte an wenigstens eine jeweilige Halterung heißgesiegelt wird.

2. Verpackungsvorrichtung nach Anspruch 1, wobei die Steuereinrichtung (100) dazu eingerichtet ist, die Versorgungseinheit (300) derart zu steuern, dass - während jedes Heizzyklus - die Versorgungseinheit (300) die periphere Heizeinrichtung (202) nur während einer diskreten Zeitspanne mit Energie versorgt, gefolgt von einer Zeitspanne, in welcher die periphere Heizeinrichtung (202) nicht mit Energie versorgt wird, um die Erhöhung zu verursachen und die Heizfläche der peripheren Heizeinrichtung (202) für das erste diskrete Zeitintervall wenigstens bei der ersten Temperatur zu halten und um eine nachfolgende Verringerung der Temperatur der Heizfläche der peripheren Heizeinrichtung (202) unter die erste Temperatur zu verursachen;
und/oder
wobei die Steuereinrichtung (100) dazu eingerichtet ist, die Versorgungseinheit (300) derart zu steuern, dass - während jedes Heizzyklus - die Versorgungseinheit (300) die innere Heizeinrichtung (200) nur während einer diskreten Zeitspanne mit Energie versorgt, gefolgt von einer Zeitspanne, in welcher die innere Heizeinrichtung (200) nicht mit Energie versorgt wird, um die Erhöhung zu verursachen und die Heizfläche der inneren Heizeinrichtung (200) für das zweite diskrete Zeitintervall wenigstens bei der zweiten Temperatur zu halten und um eine nachfolgende Verringerung der Temperatur der Heizfläche der inneren Heizeinrichtung (200) unter die zweite Temperatur zu verursachen.

3. Verpackungsvorrichtung nach Anspruch 1 oder 2, wobei der Heizzyklus derart eingerichtet ist, dass die zweite Temperatur in Bezug auf die erste Temperatur niedriger ist;
wobei die erste Temperatur zwischen 150 °C und 300 °C umfasst ist, optional
wobei die erste Temperatur zwischen 180-240 °C umfasst ist, weiter optional
wobei die erste Temperatur zwischen 200-220 °C umfasst ist; und
wobei die zweite Temperatur zwischen 150 °C und 300 °C umfasst ist, optional
wobei die zweite Temperatur zwischen 180-240 °C, weiter optional wobei die zweite Temperatur zwischen 200-220 °C umfasst ist.

4. Verpackungsvorrichtung nach einem der Ansprüche 1-3, wobei die erste diskrete Zeitspanne eine Dauer aufweist, welche zwischen 0,2 und 5 Sekunden, insbesondere zwischen 0,5 und 1,5 Sekunden, umfasst ist; und
wobei die zweite diskrete Zeitspanne eine Dauer aufweist, welche zwischen 0,2 und 5 Sekunden, insbesondere zwischen 0,5 und 1,5 Sekunden, umfasst ist.

5. Verpackungsvorrichtung nach einem der Ansprüche 1-4, wobei die Steuereinrichtung (100) dazu eingerichtet ist, die Versorgungseinheit (300) anzuweisen, die Temperatur der Heizfläche der peripheren Heizeinrichtung (202) von einer jeweiligen Basislinientemperatur stark auf die erste Temperatur zu erhöhen, wobei mit stark erhöhen gemeint ist, die Temperatur der Heizfläche der peripheren Heizeinrichtung (202) mit einer Temperaturerhöhungsrate über der Zeit von mehr als 1 °C/Millisekunde, optional mehr als 5 °C/Millisekunde, zu erhöhen; und/oder
wobei die Steuereinrichtung (100) dazu eingerichtet ist, die Versorgungseinheit (300) anzuweisen, die Temperatur der Heizfläche der inneren Heizeinrichtung (200) von einer jeweiligen Basislinientemperatur stark auf eine zweite Temperatur zu erhöhen; wobei mit stark erhöhen gemeint ist, die Temperatur der Heizfläche der inneren Heizeinrichtung (200) mit einer Temperaturerhöhungsrate über der Zeit von mehr als 1 °C/Millisekunde, optional mehr als 5 °C/Millisekunde, zu erhöhen;
optional wobei jeder Heizzyklus derart eingerichtet ist, dass das Erhöhen der Temperatur der Heizfläche der inneren Heizeinrichtung (200) auf eine zweite Temperatur nach dem Erhöhen der Temperatur der peripheren Heizeinrichtung (202) auf die erste Temperatur beginnt, wobei der Beginn des zweiten diskreten Zeitintervalls in Bezug auf den Beginn des ersten Zeitintervalls verzögert ist; weiter optional wobei die Dauer des ersten diskreten Zeitintervalls länger als die Dauer des zweiten diskreten Zeitintervalls ist.

6. Verpackungsvorrichtung nach einem der vorhergehenden Ansprüche, wobei:
- die Heizfläche der peripheren Heizeinrichtung (202) eine ringförmige Form aufweist und die Heizfläche der inneren Heizeinrichtung (200) umgibt und,
- wenn sich das obere Werkzeug und das untere Werkzeug in der zweiten Betriebsposition befinden, die periphere Heizeinrichtung (202) dazu eingerichtet ist, ein peripheres Band des Folienabschnitts (18a) zu erwärmen, während die innere Heizeinrichtung (200) dazu eingerichtet ist, wenigstens einen Teil einer inneren Zone des gleichen Folienabschnitts (18a) zu erwärmen, welche radial innerhalb des peripheren Bands angeordnet ist; optional wobei sowohl die Heizfläche der peripheren Heizeinrichtung (202) als auch die Heizfläche der inneren Heizeinrichtung (200) flach sind;
wobei wenigstens, wenn sich das obere und das untere Werkzeug in der zweiten Betriebsposition befinden, die Heizfläche der inneren Heizeinrichtung (200) koplanar zu der Heizfläche der peripheren Heizeinrichtung (202) oder derart eingerückt in Bezug auf die periphere Fläche der peripheren Heizeinrichtung (200) ist, dass, wenn die Heizfläche der peripheren Heizeinrichtung (202) eine obere Fläche des Folienabschnitts kontaktiert, die Heizfläche der inneren Heizeinrichtung (200) um einen vorgegebenen Abstand von der oberen Fläche des gleichen Folienabschnitts beabstandet ist; wobei insbesondere die Einrückung eine leichte Einrückung der Größenordnung von 1 bis 10 mm ist.

7. Verpackungsvorrichtung nach einem der vorhergehenden Ansprüche, wobei die Heizfläche der inneren Heizeinrichtung (200) in einem radialen Abstand von der Heizfläche der peripheren Heizeinrichtung (202) angeordnet ist und sich in einem Bereich erstreckt, welcher durch die Heizfläche der peripheren Heizeinrichtung umgeben ist; und
wobei die Heizfläche der inneren Heizeinrichtung (200) ist:
- eine Heizfläche von ringförmiger Form oder
- eine kontinuierliche Heizfläche, welche durch eine einzelne geschlossene Kontur begrenzt ist, optional eine scheibenförmige oder polygonale kontinuierliche Heizfläche, wobei die kontinuierliche Heizfläche im Wesentlichen alles oder einen Großteil des Bereichs einnimmt, welcher durch die Heizfläche der peripheren Heizeinrichtung umgeben ist, oder
- eine Heizfläche, welche eine Mehrzahl paralleler beabstandeter Bänder umfasst, welche an Enden davon durch Verbindungsabschnitte verbunden sind.

8. Verpackungsvorrichtung nach einem der vorhergehenden Ansprüche, wobei die periphere Heizeinrichtung (202) ein erstes elektrisch leitfähiges Element umfasst oder vollständig dadurch gebildet ist, welches sich entlang der Heizfläche der peripheren Heizeinrichtung erstreckt; optional wobei das erste elektrisch leitfähige Element ein ringförmiges elektrisch leitfähiges Element ist, weiter optional wobei das erste elektrisch leitfähige Element ein ringförmiges, flaches elektrisch leitfähiges Element ist; und
wobei die innere Heizeinrichtung (200) ein zweites elektrisch leitfähiges Element umfasst oder vollständig dadurch gebildet ist, welches sich entlang der Heizfläche der inneren Heizeinrichtung erstreckt; optional wobei das zweite elektrisch leitfähige Element ein ringförmiges elektrisch leitfähiges Element oder ein ringförmiges, flaches elektrisch leitfähiges Element oder eine elektrisch leitfähige kontinuierliche Platte oder ein elektrisch leitfähiges Mäanderelement ist.

9. Verpackungsvorrichtung nach dem vorhergehenden Anspruch, wobei das erste elektrisch leitfähige Element umfasst:
- ein Halterungssubstrat, welches durch das obere Werkzeug getragen ist,
- ein metallisch leitfähiges Band, welches an dem Halterungssubstrat fixiert ist und
- eine optionale Schutzschicht, welche das metallisch leitfähige Band bedeckt und die Heizfläche der peripheren Heizeinrichtung definiert;
oder:
- ein Halterungssubstrat, welches durch das obere Werkzeug getragen ist,
- eine isolierende Schicht in Kontakt mit dem Halterungssubstrat,
- eine leitfähige Schicht in der Form einer Metall-Glas-Mischung in Kontakt mit der isolierenden Schicht und
- eine Schutzschicht, welche die leitfähige Schicht bedeckt und die Heizfläche definiert;
oder wobei das erste elektrisch leitfähige Element eine elektrisch leitfähige Kohlenstoffstruktur umfasst und die elektrisch leitfähige Kohlenstoffstruktur ein oder mehrere Kohlenstoffallotrope umfasst oder ausschließlich daraus gebildet ist, aus der Gruppe aus: - einer Graphitstruktur,
- einer ein- oder mehrschichtigen Graphenstruktur,
- einer Fullerenstruktur, bei welcher die Kohlenstoffatome in kugelförmigen, rohrförmigen, faserähnlichen oder ellipsenförmigen Formationen miteinander verbunden sind: insbesondere kann die Fullerenstruktur die Form von Kohlenstoffnanoröhren oder Kohlenstoffnanofasern annehmen.

10. Verpackungsvorrichtung nach dem vorhergehenden Anspruch, wobei das erste elektrisch leitfähige Element eine elektrisch leitfähige Kohlenstoffstruktur umfasst und wobei das erste elektrisch leitfähige Element ein strukturelles Substrat, welches die Kohlenstoffstruktur trägt, und wenigstens eine Schutzschicht umfasst, welche die Kohlenstoffstruktur auf einer Seite bedeckt, welche der des strukturellen Substrats entgegengesetzt ist, oder wobei die Kohlenstoffstruktur sandwichartig zwischen zwei entgegengesetzten Schutzschichten angeordnet ist, wobei die dem strukturellen Substrat entgegengesetzte Schutzschicht die Heizfläche der peripheren Heizeinrichtung definiert;
wobei die Kohlenstoffstruktur des ersten elektrisch leitfähigen Elements der peripheren Heizeinrichtung (202) einen Querschnitt mit einer Dicke von wenigstens 5 µm und einer Breite von wenigstens 2 mm, weiter optional einen Querschnitt mit einer Dicke von wenigstens 10 µm und einer Breite von wenigstens 5 mm, aufweist; und
wobei die Kohlenstoffstruktur des ersten elektrisch leitfähigen Elements der peripheren Heizeinrichtung (202) einen mittleren elektrischen Widerstand aufweist, welcher höher als 5 Ω · mm²/m ist, optional zwischen 15 und 25 Ω · mm²/m umfasst ist.

11. Verpackungsvorrichtung nach einem der vorhergehenden drei Ansprüche, wobei das zweite elektrisch leitfähige Element umfasst:
- ein Halterungssubstrat, welches durch das obere Werkzeug getragen ist,
- eine metallisch leitfähige Struktur, welche ausgewählt ist aus der Gruppe aus: einem Band, einer Platte und einem Mäander, wobei die metallisch leitfähige Struktur an dem Halterungssubstrat fixiert ist, und
- eine optionale Schutzschicht, welche die metallisch leitfähige Struktur bedeckt und die Heizfläche der peripheren Heizeinrichtung definiert;
oder:
- ein Halterungssubstrat, welches durch das obere Werkzeug getragen ist,
- eine isolierende Schicht in Kontakt mit dem Halterungssubstrat,
- eine leitfähige Struktur in der Form einer Metall-Glas-Mischung-Schicht, welche die Form eines Bands, einer Platte oder eines Mäanders einnimmt, wobei die leitfähige Struktur in Kontakt mit der isolierenden Schicht ist, und
- eine Schutzschicht, welche die leitfähige Schicht bedeckt und die Heizfläche definiert;
oder wobei das zweite elektrisch leitfähige Element, optional in der Form eines flachen, ringförmigen oder Platten- oder Mäanderförmigen Elements, eine elektrisch leitfähige Kohlenstoffstruktur umfasst; wobei die elektrisch leitfähige Kohlenstoffstruktur ein oder mehrere Kohlenstoffallotrope umfasst oder ausschließlich daraus gebildet ist, aus der Gruppe aus:
- einer Graphitstruktur,
- einer ein- oder mehrschichtigen Graphenstruktur,
- einer Fullerenstruktur, bei welcher die Kohlenstoffatome in kugelförmigen, rohrförmigen, faserähnlichen oder ellipsenförmigen Formationen miteinander verbunden sind: insbesondere kann die Fullerenstruktur die Form von Kohlenstoffnanoröhren oder Kohlenstoffnanofasern annehmen.

12. Verpackungsvorrichtung nach dem vorhergehenden Anspruch, wobei das zweite elektrisch leitfähige Element, optional in der Form eines flachen, ringförmigen oder Platten- oder Mäanderförmigen Elements, eine elektrisch leitfähige Kohlenstoffstruktur umfasst;
wobei das zweite elektrisch leitfähige Element ein strukturelles Substrat, welches die jeweilige Kohlenstoffstruktur trägt, und wenigstens eine Schutzschicht umfasst, welche die Kohlenstoffstruktur auf einer Seite bedeckt, welche der des strukturellen Substrats entgegengesetzt ist, optional wobei die Kohlenstoffstruktur sandwichartig zwischen zwei entgegengesetzten Schutzschichten angeordnet ist, wobei die dem strukturellen Substrat entgegengesetzte Schutzschicht die Heizfläche der inneren Heizeinrichtung definiert; zum Beispiel kann die elektrisch leitfähige Kohlenstoffstruktur des zweiten elektrisch leitfähigen Elements eine oder mehrere Graphenschichten umfassen;
wobei die Kohlenstoffstruktur des zweiten elektrisch leitfähigen Elements der inneren Heizeinrichtung (200) einen Querschnitt mit einer Dicke von wenigstens 5 µm und einer Breite von wenigstens 5 mm, weiter optional einen Querschnitt mit einer Dicke von wenigstens 10 µm und einer Breite von wenigstens 10 mm, aufweist; und
wobei die Kohlenstoffstruktur des zweiten elektrisch leitfähigen Elements der inneren Heizeinrichtung (200) einen mittleren elektrischen Widerstand aufweist, welcher höher als 2 Ω · mm²/m ist, optional höher als 2 Ω · mm²/m ist.

13. Verpackungsvorrichtung nach einem der vorhergehenden Ansprüche von 8 bis 12, wobei die Versorgungseinheit (300) eine elektrische Versorgungseinheit ist und umfasst:
- wenigstens einen Impulstransformator,
- wenigstens eine elektrische Schaltung, welche den Impulstransformator mit dem ersten elektrisch leitfähigen Element und dem zweiten elektrisch leitfähigen Element verbindet;
oder
wobei die Versorgungseinheit (300) eine elektrische Versorgungseinheit ist und umfasst:
- wenigstens einen ersten Impulstransformator und eine erste elektrische Schaltung, welche den ersten Impulstransformator mit dem ersten elektrisch leitfähigen Element verbindet, und
- wenigstens einen zweiten Impulstransformator und eine zweite elektrische Schaltung, welche den zweiten Impulstransformator mit dem zweiten elektrisch leitfähigen Element verbindet,
wobei die Steuereinrichtung (100) dazu eingerichtet ist, derart auf die elektrische Versorgungseinheit (300) zu wirken, dass das erste bzw. das zweite elektrisch leitfähige Element unabhängig mit elektrischem Strom mit einer vorbestimmten Spannung versorgt wird.

14. Verpackungsvorrichtung nach einem der vorhergehenden Ansprüche, wobei die Vorrichtung umfasst:
- einen ersten Temperatursensor, welcher dazu eingerichtet ist, eine Temperatur der Heizfläche der peripheren Heizeinrichtung (202) zu erfassen und ein entsprechendes erstes Temperatursignal zu emittieren, welches mit der erfassten Temperatur korreliert, wobei der erste Temperatursensor ein Kontakt-Temperatursensor oder ein kontaktloser Temperatursensor ist; oder
- einen ersten elektrischen Sensor, welcher elektrisch mit der Kohlenstoffstruktur der peripheren Heizeinrichtung (202) verbunden oder verbindbar ist und dazu eingerichtet ist, einen elektrischen Parameter der Kohlenstoffstruktur zu erfassen und ein entsprechendes Signal eines elektrischen Parameters zu emittieren, wobei der elektrische Parameter eines umfasst aus
o einer elektrischen Impedanz eines vorgegebenen Segments der Kohlenstoffstruktur,
∘ einem elektrischen Strom, welcher durch das vorgegebene Segment der Kohlenstoffstruktur fließt, wenn an Enden des vorgegebenen Segments eine vorgegebene elektrische Spannung angelegt wird,
∘ einer elektrischen Spannung, welche an Enden des vorgegebenen Segments erfasst wird, wenn festgelegt wird, dass ein vorgegebener elektrischer Strom durch das vorgegebene Segment fließt;
ferner wobei die Vorrichtung umfasst:
- einen zweiten Temperatursensor zum Erfassen einer Temperatur der Heizfläche der inneren Heizeinrichtung (200) und Emittieren eines entsprechenden zweiten Temperatursignals, welches mit der erfassten Temperatur korreliert, wobei der zweite Temperatursensor ein Kontakt-Temperatursensor oder ein kontaktloser Temperatursensor ist; oder
- einen zweiten elektrischen Sensor, welcher elektrisch mit der Kohlenstoffstruktur der inneren Heizeinrichtung (200) verbunden oder verbindbar ist und dazu eingerichtet ist, einen elektrischen Parameter der Kohlenstoffstruktur zu erfassen und ein entsprechendes Signal eines elektrischen Parameters zu emittieren, wobei der elektrische Parameter eines umfasst aus
∘ einer elektrischen Impedanz eines vorgegebenen Segments der Kohlenstoffstruktur,
∘ einem elektrischen Strom, welcher durch das vorgegebene Segment der Kohlenstoffstruktur fließt, wenn an Enden des vorgegebenen Segments eine vorgegebene elektrische Spannung angelegt wird,
∘ einer elektrischen Spannung, welche an Enden des vorgegebenen Segments erfasst wird, wenn festgelegt wird, dass ein vorgegebener elektrischer Strom durch das vorgegebene Segment fließt;
noch ferner wobei die Steuereinrichtung (100) mit dem ersten Temperatursensor verbunden ist und eingerichtet ist zum:
- Empfangen des ersten Temperatursignals und Steuern der Versorgungseinheit (300) derart, dass die periphere Heizeinrichtung (202) mit Energie versorgt wird, basierend auf dem ersten Temperatursignal und auf einem gewünschten Wert für die erste Temperatur, oder
wobei die Steuereinrichtung (100) mit dem ersten elektrischen Sensor verbunden ist und eingerichtet ist zum:
- Empfangen des Signals des elektrischen Parameters und Steuern der Versorgungseinheit (300) derart, dass das elektrisch leitfähige Element der peripheren Heizeinrichtung mit elektrischer Energie versorgt wird, optional indem eine an das elektrisch leitfähige Element angelegte Spannung und/oder eine Dauer des Anlegens der Spannung reguliert wird, basierend auf dem Signal des elektrischen Parameters und auf einem gewünschten Wert für eine Temperatur der Heizfläche der Heizeinrichtung;
und wobei die Steuereinrichtung (100) mit dem zweiten elektrischen Sensor verbunden ist und eingerichtet ist zum:
- Empfangen des zweiten Temperatursignals und Steuern der Versorgungseinheit (300) derart, dass die innere Heizeinrichtung (200) mit Energie versorgt wird, basierend auf dem zweiten Temperatursignal und auf einem gewünschten Wert für die zweite Temperatur, oder
wobei die Steuereinrichtung (100) mit dem zweiten elektrischen Sensor verbunden ist und eingerichtet ist zum
- Empfangen des Signals des elektrischen Parameters und Steuern der Versorgungseinheit (300) derart, dass das elektrisch leitfähige Element der inneren Heizeinrichtung mit elektrischer Energie versorgt wird, optional indem eine an das elektrisch leitfähige Element angelegte Spannung und/oder eine Dauer des Anlegens der Spannung reguliert wird, basierend auf dem Signal des elektrischen Parameters und auf einem gewünschten Wert für eine Temperatur der Heizfläche der Heizeinrichtung.

15. Verpackungsvorrichtung nach einem der vorhergehenden Ansprüche, wobei:
- das obere Werkzeug (21) einen Heizkopf umfasst, welcher eine jeweilige aktive Fläche aufweist,
- die periphere Heizeinrichtung (202) und die innere Heizeinrichtung (200) beide durch den Heizkopf getragen sind,
- der Heizkopf dazu eingerichtet ist, eine Foliensiegelposition einzunehmen, vorzugsweise im Einklang mit dem zweiten Betriebszustand des oberen und des unteren Werkzeugs, wobei in der Foliensiegelposition wenigstens die Heizfläche der peripheren Heizeinrichtung (202) dazu eingerichtet ist, gegen eine entsprechende obere Fläche des Folienabschnitts (18a) zu drücken und ein Heißsiegeln des Folienabschnitts (18a) an die darunterliegende wenigstens eine Halterung zu erlauben, und optional wobei in der Heißsiegelposition die Heizfläche der inneren Heizeinrichtung (200) dazu eingerichtet ist, die obere Fläche des Folienabschnitts zu kontaktieren oder in einem vorgegebenen Abstand davon platziert zu sein,
- die Steuereinrichtung (100) dazu eingerichtet ist, die Verpackungsanordnung (8) derart zu steuern, dass - während jedes Heizzyklus - der Heizkopf die Foliensiegelposition wenigstens während des ersten diskreten Zeitintervalls, vorzugsweise bis nach einem Ablauf des ersten diskreten Zeitintervalls, hält;
oder wobei:
- das obere Werkzeug (21) einen Heizkopf umfasst, welcher eine jeweilige aktive Fläche aufweist,
- die periphere Heizeinrichtung (202) und die innere Heizeinrichtung (200) beide durch den Heizkopf getragen sind,
- die Heizfläche der inneren Heizeinrichtung (200) und die Heizfläche der peripheren Heizeinrichtung (202) beide eine ringförmige Form aufweisen und einen Teil der aktiven Fläche bilden, wobei die Heizfläche der peripheren Heizeinrichtung (202) in einem radialen Abstand von der Heizfläche der inneren Heizeinrichtung angeordnet ist und diese umgibt,
- in einer Position radial innerhalb der Heizfläche der inneren Heizeinrichtung der Heizkopf eine zentrale Aussparung eines fixierten Volumens darstellt, welches sich - wenn sich das obere und das untere Werkzeug in dem zweiten Betriebszustand befinden - vertikal weg von dem unteren Werkzeug (22) erstreckt, um einen Raum zu definieren, in welchem wenigstens ein Teil eines Produkts aufnehmbar ist, welches auf einer Halterung (4) angeordnet ist, welche in einem der Sitze positioniert ist;
oder wobei:
- das obere Werkzeug (21) einen Heizkopf mit einer jeweiligen aktiven Fläche umfasst,
- die periphere Heizeinrichtung (202) und die innere Heizeinrichtung (200) beide durch den Heizkopf getragen sind,
- die Heizfläche der peripheren Heizeinrichtung (202) und die Heizfläche der inneren Heizeinrichtung (200) in einer gemeinsamen Ebene mit der aktiven Fläche liegen und einen Teil davon bilden, und
- die Heizfläche der peripheren Heizeinrichtung (202) in einem radialen Abstand von der Heizfläche der inneren Heizeinrichtung angeordnet ist und diese umgibt;
oder wobei:
- das obere Werkzeug (21) einen Heizkopf mit einer jeweiligen aktiven Fläche umfasst,
- die periphere Heizeinrichtung (202) und die innere Heizeinrichtung (200) beide durch den Heizkopf getragen sind,
- die Heizfläche der peripheren Heizeinrichtung (202) und die Heizfläche der inneren Heizeinrichtung (200) einen Teil der aktiven Fläche bilden,
- der Heizkopf einen zentralen Körper, welcher die innere Heizeinrichtung (200) trägt, und einen peripheren Körper umfasst, welcher die periphere Heizeinrichtung (202) trägt und den zentralen Körper umgibt, wobei der periphere Körper und der zentrale Körper dazu eingerichtet sind, relativ zueinander beweglich zu sein, um eine zentrale Aussparung zu bilden, deren Volumen durch die relative Position des peripheren Körpers in Bezug auf den zentralen Körper bestimmt ist, wobei die zentrale Aussparung derart positioniert ist, dass - wenn sich das obere und das untere Werkzeug in dem zweiten Betriebszustand befinden - sie sich vertikal weg von dem unteren Werkzeug (22) erstreckt, um einen Raum zu definieren, in welchem wenigstens ein Teil eines Produkts aufnehmbar ist, welches auf einer Halterung (4) angeordnet ist.

16. Verwendung einer Vorrichtung nach einem der vorhergehenden Ansprüche zum Verpacken eines Produkts (P) unter Verwendung einer Schale mit einer Schalenbasis, einer Schalenseitenwand und einem oberen Schalenrand, wobei das Produkt innerhalb der Schale positioniert ist und wobei eine Folie (18) des wärmeschrumpfbaren Typs an die obere Fläche des Schalenrands heißgesiegelt ist; optional wobei die innere Heizeinrichtung (200) auf die zweite Temperatur gebracht wird, nachdem die periphere Heizeinrichtung (202) die Folie kontaktiert hat, wobei die Folie (18) in Kontakt mit der Halterung oder Schale (4) ist, und nachdem die Heizfläche der peripheren Heizeinrichtung (202) auf die erste Temperatur gebracht worden ist.

17. Verfahren zum Verpacken eines auf einer Halterung angeordneten Produkts unter Verwendung einer Vorrichtung nach einem der vorhergehenden Ansprüche, wobei das Verfahren die folgenden Schritte umfasst:
- Positionieren einer oder mehrerer Halterungen im Einklang mit dem einen oder den mehreren Sitzen;
- Positionieren wenigstens eines Folienabschnitts in der Form eines longitudinalen Abschnitts einer kontinuierlichen Bahn oder in der Form einer vorgeschnittenen diskreten Folienbahn oberhalb einer jeweiligen oder mehrerer jeweiliger Halterungen, welche in dem einen oder den mehreren Sitzen angeordnet sind,
- Halten des oberen und des unteren Werkzeugs in dem ersten Betriebszustand für eine Zeit, welche ausreicht, dass die Halterungen und der entsprechende Folienabschnitt (18a) richtig positioniert werden,
- Bewegen des oberen und des unteren Werkzeugs in den zweiten Betriebszustand, wobei der Folienabschnitt (18a) oberhalb der jeweiligen Halterung oder der jeweiligen Halterungen (4) positioniert ist,
- Heißsiegeln des Folienabschnitts (18a) an die Halterung (4), wobei der Schritt des Heißsiegelns die folgenden Unterschritte umfasst:
∘ Verursachen, dass die Heizfläche der peripheren Heizeinrichtung (202) die obere Fläche des Folienabschnitts der Halterung oder der Halterungen (4) kontaktiert, welche in dem Sitz oder den Sitzen angeordnet sind,
∘ Erhöhen einer Temperatur der Heizfläche der peripheren Heizeinrichtung (202) auf eine erste Temperatur,
∘ Halten der Heizfläche der peripheren Heizeinrichtung (202) wenigstens bei der ersten Temperatur für ein erstes diskretes Zeitintervall,
∘ Verringern der Temperatur der Heizfläche der peripheren Heizeinrichtung (202) unter die erste Temperatur,
∘ Verursachen, dass die Heizfläche der inneren Heizeinrichtung (200) die obere Fläche des Folienabschnitts kontaktiert oder in einem vorgegebenen Abstand davon platziert wird,
∘ Erhöhen einer Temperatur der Heizfläche der inneren Heizeinrichtung (200) auf eine zweite Temperatur, Halten der Heizfläche der inneren Heizeinrichtung (200) wenigstens bei der zweiten Temperatur für ein zweites diskretes Zeitintervall, Verringern der Temperatur der Heizfläche der inneren Heizeinrichtung (200) unter die zweite Temperatur,
- Positionieren des oberen und des unteren Werkzeugs in den ersten Betriebszustand,
- Bewegen der Anzahl von Halterungen mit der fest fixierten Folie weg von der Verpackungsanordnung.

## Revendications

1. Appareil d'emballage comprenant :
un ensemble d'emballage (8) conçu pour recevoir au moins un support (4) et pour fixer fermement un film (18) au support, l'ensemble d'emballage (8) comprenant :
- un outil inférieur (22) définissant un nombre prédéfini d'assises conçues pour recevoir ledit au moins un support (4) avec un produit à emballer,
- un outil supérieur (21) faisant face et coopérant avec l'outil inférieur (22),
lesdits outil supérieur (21) et outil inférieur (22) étant relativement mobiles au moins entre un premier état de marche, où l'outil supérieur (21) et l'outil inférieur (22) sont espacés à l'écart l'un de l'autre et permettent le positionnement d'au moins une portion de film (18a) dudit film (18) au-dessus de l'un ou de plusieurs desdits au moins un support, et un second état de marche, où l'outil supérieur (21) et l'outil inférieur (22) sont approchés l'un de l'autre et permettent le thermoscellage de ladite portion de film (18a) à le au moins un support (4) localisé au niveau desdites une ou plusieurs assises,
- un dispositif de chauffage interne (200) porté par l'outil supérieur (21) et ayant une surface chauffante conçue pour chauffer au moins une partie de ladite portion de film,
- un dispositif de chauffage périphérique (202) porté par l'outil supérieur (21) et positionné radialement à l'extérieur par rapport au dispositif de chauffage interne, le dispositif de chauffage périphérique (202) ayant une surface chauffante conçue pour thermosceller au moins une région périphérique de ladite portion de film à le au moins un support (4);
une unité d'alimentation (300) conçue pour commander l'énergie alimentée audit dispositif de chauffage périphérique (202) et audit dispositif de chauffage interne ; et
un dispositif de commande (100) agissant sur l'unité d'alimentation (300) et conçu pour commander l'unité d'alimentation (300) et commander une alimentation d'énergie au dispositif de chauffage périphérique (202) indépendamment d'une alimentation d'énergie au dispositif de chauffage interne (200) ;
ledit dispositif de commande (100) étant en outre conçu pour commander à l'unité d'alimentation (300) d'exécuter un cycle de chauffage comprenant les étapes suivantes :
accroissement d'une température de la surface chauffante du dispositif de chauffage périphérique (202) jusqu'à une première température, maintien de la surface chauffante du dispositif de chauffage périphérique (202) au moins à la première température sur un premier intervalle de temps discret, réduction de la température de la surface chauffante du dispositif de chauffage périphérique (202) en-dessous de ladite première température,
accroissement d'une température de la surface chauffante du dispositif de chauffage interne (200) jusqu'à une seconde température, maintien de la surface chauffante du dispositif de chauffage interne (200) au moins à la seconde température sur un second intervalle de temps discret, réduction de la température de la surface chauffante du dispositif de chauffage interne (200) en-dessous de ladite seconde température ; éventuellement la première température étant différente de la seconde température ;
de plus encore ledit dispositif de commande (100) étant en outre conçu pour commander à l'unité d'alimentation (300) de répéter consécutivement l'exécution dudit cycle de chauffage une pluralité de fois, durant chacun desdits cycles de chauffage consécutifs au moins l'une desdites portions de film étant thermoscellée à au moins un support respectif.

2. Appareil d'emballage selon la revendication 1, ledit dispositif de commande (100) étant conçu pour commander l'unité d'alimentation (300) de sorte que - durant chaque cycle de chauffage - l'unité d'alimentation (300) alimente de l'énergie au dispositif de chauffage périphérique (202) uniquement durant une période de temps discrète suivi d'une période de temps pendant laquelle aucune énergie n'est alimentée au dispositif de chauffage périphérique (202) pour amener l'augmentation et le maintien de la surface chauffante du dispositif de chauffage périphérique (202) au moins à la première température pour le premier intervalle de temps discret, et pour amener une réduction ultérieure de la température de la surface chauffante du dispositif de chauffage périphérique (202) en-dessous de ladite première température ;
et/ou
ledit dispositif de commande (100) étant conçu pour commander l'unité d'alimentation (300) de sorte que - durant chaque cycle de chauffage - l'unité d'alimentation (300) alimente de l'énergie au dispositif de chauffage interne (200) uniquement durant une période de temps discrète suivie d'une période de temps où aucune énergie n'est alimentée au dispositif de chauffage interne (200) pour amener l'augmentation et le maintien de la surface chauffante du dispositif de chauffage interne (200) au moins à la seconde température pour le second intervalle de temps discret, et pour amener une réduction ultérieure de la température de la surface chauffante du dispositif de chauffage interne (200) en-dessous de ladite seconde température.

3. Appareil d'emballage selon la revendication 1 ou 2, le cycle de chauffage étant conçu de sorte que la seconde température est inférieure par rapport à la première température ;
ladite première température étant comprise entre 150°C et 300°C, éventuellement ladite première température étant comprise entre 180-240°C, plus éventuellement ladite première température étant comprise entre 200-220°C ; et ladite seconde température étant comprise entre 150°C et 300°C, éventuellement ladite seconde température étant comprise entre 180-240°C, plus éventuellement ladite seconde température étant comprise entre 200-220°C.

4. Appareil d'emballage selon l'une quelconque des revendications 1 à 3, la première période de temps discrète ayant une durée comprise entre 0,2 et 5 secondes, en particulier entre 0,5 et 1,5 seconde ; et
la seconde période de temps discrète ayant une durée comprise entre 0,2 et 5 secondes, en particulier entre 0,5 et 1,5 seconde.

5. Appareil d'emballage selon l'une quelconque des revendications 1 à 4, le dispositif de commande (100) étant conçu pour commander à l'unité d'alimentation (300) d'accroître brusquement la température de la surface chauffante du dispositif de chauffage périphérique (202) à partir d'une température de ligne de référence respective jusqu'à la première température, par accroissant brusquement il est signifié un accroissement de ladite température de la surface chauffante du dispositif de chauffage périphérique (202) d'un taux d'accroissement de température dans le temps supérieur à 1°C/milliseconde, éventuellement supérieur à 5°C/milliseconde ; et/ou
le dispositif de commande (100) étant conçu pour commander à l'unité d'alimentation (300) d'accroître brusquement la température de la surface chauffante du dispositif de chauffage interne (200) à partir d'une température de ligne de référence respective jusqu'à la seconde température ; par accroissant brusquement il est signifié un accroissement de ladite température de la surface chauffante du dispositif de chauffage interne (200) d'un taux d'accroissement de température dans le temps supérieur à 1°C/milliseconde, éventuellement supérieur à 5°C/milliseconde ;
éventuellement chaque cycle de chauffage étant conçu de sorte que l'accroissement de la température de la surface chauffante du dispositif de chauffage interne (200) jusqu'à une seconde température commence après l'accroissement de la température du dispositif de chauffage périphérique (202) jusqu'à la première température, le début dudit second intervalle de temps discret étant retardé par rapport au début dudit premier intervalle de temps ;
plus éventuellement la durée dudit premier intervalle de temps discret étant plus longue que la durée dudit second intervalle de temps discret.

6. Appareil d'emballage selon l'une quelconque des revendications précédentes :
- la surface chauffante dudit dispositif de chauffage périphérique (202) ayant une forme annulaire et entourant la surface chauffante du dispositif de chauffage interne, et
- lorsque les outils supérieur et inférieur se trouvent dans ladite seconde position de fonctionnement, le dispositif de chauffage périphérique (202) est conçu pour chauffer une bande périphérique de ladite portion de film (18a) tandis que le dispositif de chauffage interne (200) est conçu pour chauffer au moins une partie d'une zone interne de la même portion de film (18a) localisée radialement à l'intérieur de la bande périphérique ; éventuellement à la fois la surface chauffante du dispositif de chauffage périphérique (202) et la surface chauffante du dispositif de chauffage interne (200) étant plates ;
au moins lorsque les outils supérieur et inférieur se trouvent dans ladite seconde position de fonctionnement, la surface chauffante du dispositif de chauffage interne (200) est coplanaire par rapport à la surface chauffante du dispositif de chauffage périphérique (202) ou indentée par rapport à la surface chauffante du dispositif de chauffage périphérique (202) de sorte que lorsque la surface chauffante du dispositif de chauffage périphérique (202) entre en contact avec une surface supérieure de la portion de film, la surface chauffante du dispositif de chauffage interne (200) est espacée à l'écart d'une distance prédéfinie depuis la surface supérieure de la même portion de film ; en particulier l'indentation étant une légère indentation de l'ordre de 1 à 10 mm.

7. Appareil d'emballage selon l'une quelconque des revendications précédentes, la surface chauffante du dispositif de chauffage interne (200) étant localisée à une distance radiale de la surface chauffante du dispositif de chauffage périphérique (202) et s'étendant dans une zone entourée de la surface chauffante du dispositif de chauffage périphérique ; et
ladite surface chauffante du dispositif de chauffage interne (200) étant
- une surface chauffante de forme annulaire, ou
- une surface chauffante continue délimitée par une ligne de contour fermée unique, éventuellement une surface chauffante continue discoïdale ou polygonale, ladite surface chauffante continue occupant sensiblement toute ou une majorité de ladite zone entourée de la surface chauffante du dispositif de chauffage périphérique, ou
- une surface chauffante comprenant une pluralité de bandes parallèles espacées à l'écart raccordées à ses extrémités par des portions de raccordement.

8. Appareil d'emballage selon l'une quelconque des revendications précédentes, le dispositif de chauffage périphérique (202) comprenant ou étant intégralement formé d'un premier élément électriquement conducteur s'étendant le long de la surface chauffante du dispositif de chauffage périphérique ; éventuellement ledit premier élément électriquement conducteur étant un élément annulaire électriquement conducteur, plus éventuellement le premier élément électriquement conducteur étant un élément plat annulaire électriquement conducteur ; et
le dispositif de chauffage interne (200) comprenant ou étant intégralement formé d'un second élément électriquement conducteur s'étendant le long de la surface chauffante du dispositif de chauffage interne ; éventuellement ledit second élément conducteur étant un élément annulaire électriquement conducteur, ou un élément plat annulaire électriquement conducteur, ou une plaque continue électriquement conductrice, ou un élément en méandre électriquement conducteur.

9. Appareil d'emballage selon la revendication précédente, le premier élément électriquement conducteur comprenant :
- un substrat de support porté par l'outil supérieur,
- une bande métallique conductrice fixée au substrat de support, et
- une couche protectrice facultative recouvrant la bande métallique conductrice et définissant la surface chauffante du dispositif de chauffage périphérique ;
ou :
- un substrat de support porté par l'outil supérieur,
- une couche isolante en contact avec le substrat de support,
- une couche conductrice sous la forme d'un mélange métal-verre en contact avec la couche isolante, et
- une couche protectrice recouvrant la couche conductrice et définissant la surface chauffante ;
ou le premier élément électriquement conducteur comprenant une structure carbonée électriquement conductrice, et la structure carbonée électriquement conductrice comprenant ou étant exclusivement formée d'un ou plusieurs allotropes carbonés dans le groupe de :
- une structure graphite,
- une structure graphène mono ou multicouche,
- une structure fullerène, où les atomes de carbone sont liés conjointement en formations sphériques, tubulaires, type fibres ou ellipsoïdales : en particulier la structure fullerène pouvant prendre la forme de nanotubes de carbone ou de nanofibres de carbone.

10. Appareil d'emballage selon la revendication précédente, le premier élément électriquement conducteur comprenant une structure carbonée électriquement conductrice et le premier élément électriquement conducteur comprenant un substrat structurel portant ladite structure carbonée et au moins une couche protectrice recouvrant la structure carbonée sur un côté opposé à celui du substrat structurel ou ladite structure carbonée étant prise en sandwich entre deux couches protectrices opposées, la couche protectrice opposée au substrat structurel définissant la surface chauffante dudit dispositif de chauffage périphérique ;
la structure carbonée du premier élément électriquement conducteur du dispositif de chauffage périphérique (202) ayant une section transversale avec une épaisseur d'au moins 5 µm et une largeur d'au moins 2 mm, plus facultativement une section transversale avec une épaisseur d'au moins 10 µm et une largeur d'au moins 5 mm ; et
la structure carbonée du premier élément électriquement conducteur du dispositif de chauffage périphérique (202) ayant une résistivité électrique moyenne supérieure à 5 Ω•mm²/m, éventuellement comprise entre 15 et 25 Ω•mm²/m.

11. Appareil d'emballage selon l'une quelconque des trois revendications précédentes, le second élément électriquement conducteur comprenant :
- un substrat de support porté par l'outil supérieur,
- une structure conductrice métallique sélectionnée dans un groupe de : une bande, une plaque et un méandre, ladite structure conductrice métallique étant fixée au substrat de support, et
- une couche protectrice facultative recouvrant la structure conductrice métallique et définissant la surface chauffante du dispositif de chauffage périphérique ;
ou :
- un substrat de support porté par l'outil supérieur,
- une couche isolante en contact avec le substrat de support,
- une structure conductrice sous la forme d'une couche de mélange de métal-verre prenant la forme d'une bande, d'une plaque ou d'un méandre, ladite structure conductrice se trouvant en contact avec la couche isolante, et
- une couche protectrice recouvrant la couche conductrice et définissant la surface chauffante ;
ou le second élément électriquement conducteur, éventuellement sous la forme d'un élément mis en forme annulaire plat ou plat ou en méandre, comprenant une structure carbonée électriquement conductrice ; la structure carbonée électriquement conductrice comprenant ou étant exclusivement formée d'un ou plusieurs allotropes carbonés dans le groupe de :
- une structure graphite,
- une structure graphène mono ou multicouche,
- une structure fullerène, où les atomes de carbone sont liés conjointement en formations sphériques, tubulaires, type fibres ou ellipsoïdales : en particulier la structure fullerène pouvant prendre la forme de nanotubes de carbone ou de nanofibres de carbone.

12. Appareil d'emballage selon la revendication précédente, le second élément électriquement conducteur, éventuellement sous la forme d'un élément mis en forme annulaire plat ou plat ou en méandre, comprenant une structure carbonée électriquement conductrice ;
le second élément électriquement conducteur comprenant un substrat structurel portant la structure carbonée respective et au moins une couche protectrice recouvrant la structure carbonée sur un côté opposé à celui du substrat structurel, éventuellement ladite structure carbonée étant prise en sandwich entre deux couches protectrices opposées, la couche protectrice opposée au substrat structurel définissant la surface chauffante dudit dispositif de chauffage interne ; par exemple, la structure carbonée électriquement conductrice du second élément électriquement conducteur pouvant comprendre une ou plusieurs couches de graphène ;
la structure carbonée du second élément électriquement conducteur du dispositif de chauffage interne (200) ayant une section transversale avec une épaisseur d'au moins 5 µm et une largeur d'au moins 5 mm, plus facultativement une section transversale avec une épaisseur d'au moins 10 µm et une largeur d'au moins 10 mm ; et
la structure carbonée du second élément électriquement conducteur du dispositif de chauffage interne (200) ayant une résistivité électrique moyenne supérieure à 2 Ω•mm²/m, éventuellement supérieure à 2 Ω•mm²/m.

13. Appareil d'emballage selon l'une quelconque des revendications précédentes de 8 à 12, l'unité d'alimentation (300) étant une unité d'alimentation électrique et comprenant :
- au moins un transformateur d'impulsion,
- au moins une circuiterie électrique raccordant le transformateur d'impulsion au premier élément électriquement conducteur et au second élément électriquement conducteur ;
ou
l'unité d'alimentation (300) étant une unité d'alimentation électrique et comprenant :
- au moins un premier transformateur d'impulsion et une première circuiterie électrique raccordant le premier transformateur d'impulsion au premier élément électriquement conducteur, et
- au moins un second transformateur d'impulsion et une seconde circuiterie électrique raccordant le second transformateur d'impulsion au second élément électriquement conducteur,
ledit dispositif de commande (100) étant conçu pour agir sur l'unité d'alimentation électrique (300) pour indépendamment alimenter du courant électrique à une tension prédéterminée auxdits premier et, respectivement, second élément électriquement conducteur.

14. Appareil d'emballage selon l'une quelconque des revendications précédentes, l'appareil comprenant :
- un premier capteur de température conçu pour détecter une température de la surface chauffante du dispositif de chauffage périphérique (202) et émettant un premier signal de température correspondant corrélé à la température détectée, le premier capteur de température étant un capteur de température par contact ou un capteur de température sans contact ; ou
- un premier capteur électrique, électriquement raccordé ou raccordable à la structure carbonée du dispositif de chauffage périphérique (202) et conçu pour détecter un paramètre électrique de ladite structure carbonée et émettant un signal de paramètre électrique correspondant, le paramètre électrique comprenant l'un·e
∘ d'une impédance électrique d'un segment prédéfini de ladite structure carbonée,
∘ d'un courant électrique s'écoulant à travers ledit segment prédéfini de structure carbonée lorsqu'une tension électrique prédéfinie est appliquée aux extrémités dudit segment prédéfini,
∘ une tension électrique détectée aux extrémités du segment prédéfini lorsqu'un courant électrique prédéfini est imposé pour s'écouler à travers ledit segment prédéfini ;
en outre l'appareil comprenant :
- un second capteur de température pour détecter une température de la surface chauffante du dispositif de chauffage interne (200) et émettant un second signal de température correspondant corrélé à la température détectée, le second capteur de température étant un capteur de température par contact ou un capteur de température sans contact ; ou
- un second capteur électrique, électriquement raccordé ou raccordable à la structure carbonée du dispositif de chauffage interne (200) et conçu pour détecter un paramètre électrique de ladite structure carbonée et émettant un signal de paramètre électrique correspondant, le paramètre électrique comprenant l'un·e
∘ d'une impédance électrique d'un segment prédéfini de ladite structure carbonée,
∘ d'un courant électrique s'écoulant à travers ledit segment prédéfini de structure carbonée lorsqu'une tension électrique prédéfinie est appliquée aux extrémités dudit segment prédéfini,
∘ d'une tension électrique détectée aux extrémités du segment prédéfini lorsqu'un courant électrique prédéfini est imposé pour s'écouler à travers ledit segment prédéfini ;
encore en outre le dispositif de commande (100) étant raccordé audit premier capteur de température et étant conçu pour :
- recevoir ledit premier signal de température et commander à l'unité d'alimentation (300) d'alimenter de l'énergie au dispositif de chauffage périphérique (202) sur la base dudit premier signal de température et d'une valeur souhaitée pour ladite première température, ou
le dispositif de commande (100) étant raccordé audit premier capteur électrique, et étant conçu pour :
- recevoir ledit signal de paramètre électrique et commander à l'unité d'alimentation (300) d'alimenter de l'énergie électrique à l'élément électriquement conducteur du dispositif de chauffage périphérique, éventuellement en régulant la tension appliquée à l'élément électriquement conducteur et/ou une durée d'application de ladite tension, sur la base dudit signal de paramètre électrique et d'une valeur souhaitée pour une température de la surface chauffante du dispositif de chauffage ;
et le dispositif de commande (100) étant raccordé au second capteur de température et étant conçu pour :
- recevoir ledit second signal de température et commander à l'unité d'alimentation (300) d'alimenter de l'énergie au dispositif de chauffage interne (200) sur la base dudit second signal de température et d'une valeur souhaitée pour ladite seconde température, ou
le dispositif de commande (100) étant raccordé audit second capteur électrique, et étant conçu pour
- recevoir ledit signal de paramètre électrique et commander à l'unité d'alimentation (300) d'alimenter de l'énergie électrique à l'élément électriquement conducteur du dispositif de chauffage interne, éventuellement en régulant la tension appliquée à l'élément électriquement conducteur et/ou une durée d'application de ladite tension, sur la base dudit signal de paramètre électrique et d'une valeur souhaitée pour une température de la surface chauffante du dispositif de chauffage.

15. Appareil d'emballage selon l'une quelconque des revendications précédentes :
- l'outil supérieur (21) comprenant une tête chauffante ayant une surface active respective,
- le dispositif de chauffage périphérique (202) et le dispositif de chauffage interne (200) étant tous les deux portés par ladite tête chauffante,
- la tête chauffante étant conçue pour prendre une position de scellage de film, préférablement en correspondance dudit second état de marche des outils supérieur et inférieur, au niveau de ladite position de scellage de film au moins la surface chauffante du dispositif de chauffage périphérique (202) étant conçue pour presser contre une surface supérieure correspondante de ladite portion de film (18a) et permettre le thermoscellage de la portion de film (18a) à le au moins un support sous-jacent, et éventuellement au niveau de ladite position de thermoscellage la surface chauffante dudit dispositif de chauffage interne (200) étant conçue pour entrer en contact ou être placée à une distance prédéfinie de la surface supérieure de ladite portion de film,
- le dispositif de commande (100) étant conçu pour commander l'ensemble d'emballage (8) de sorte que - durant chaque dit cycle de chauffage - la tête chauffante prend ladite position de scellage de film au moins durant ledit premier intervalle de temps discret, préférablement jusqu'après l'expiration dudit premier intervalle de temps discret ;
ou :
- l'outil supérieur (21) comprenant une tête chauffante ayant une surface active respective,
- le dispositif de chauffage périphérique (202) et le dispositif de chauffage interne (200) étant tous les deux portés par ladite tête chauffante,
- la surface chauffante du dispositif de chauffage interne (200) et la surface chauffante du dispositif de chauffage périphérique (202) ayant toutes les deux une forme annulaire et formant une partie de ladite surface active, avec la surface chauffante du dispositif de chauffage périphérique (202) localisée à une distance radiale, et entourant la surface chauffante, du dispositif de chauffage interne,
- dans une position radialement interne à la surface chauffante du dispositif de chauffage interne, la tête chauffante présentant un renfoncement central de volume fixe qui - lorsque les outils supérieur et inférieur se trouvent dans ledit second état de marche - s'étend verticalement à l'opposé de l'outil inférieur (22) pour définir un espace où au moins une partie d'un produit localisé sur un support (4) positionné dans l'une desdites assises peut être reçue ;
ou :
- l'outil supérieur (21) comprenant une tête chauffante ayant une surface active respective,
- le dispositif de chauffage périphérique (202) et le dispositif de chauffage interne (200) étant tous les deux portés par ladite tête chauffante,
- la surface chauffante du dispositif de chauffage périphérique (202) et la surface chauffante du dispositif de chauffage interne (200) reposant dans un plan commun avec, et formant une partie de, ladite surface active, et
- la surface chauffante du dispositif de chauffage périphérique (202) étant localisée à une distance radiale de, et entourant, la surface chauffante du dispositif de chauffage interne ;
ou :
- l'outil supérieur (21) comprenant une tête chauffante avec une surface active respective,
- le dispositif de chauffage périphérique (202) et le dispositif de chauffage interne (200) étant tous les deux portés par ladite tête chauffante,
- la surface chauffante du dispositif de chauffage périphérique (202) et la surface chauffante du dispositif de chauffage interne (200) formant une partie de ladite surface active,
- la tête chauffante comprenant un corps central portant le dispositif de chauffage interne (200) et un corps périphérique portant le dispositif de chauffage périphérique (202) et entourant le corps central, le corps périphérique et le corps central étant conçus pour être relativement mobiles pour former un renfoncement central dont le volume est déterminé par la position relative du corps périphérique par rapport au corps central, ledit renfoncement central étant positionné de sorte que - lorsque les outils supérieur et inférieur se trouvent dans ledit second état de marche - il s'étend verticalement à l'opposé de l'outil inférieur (22) pour définir un espace où au moins une partie d'un produit localisé sur un support (4) peut être reçue.

16. Utilisation d'un appareil selon l'une quelconque des revendications précédentes pour emballer un produit (P) en utilisant une barquette ayant une base de barquette, une paroi latérale de barquette et un rebord supérieur de barquette, le produit étant positionné à l'intérieur de la barquette et un film (18) du type thermo-rétrécissable étant thermoscellé à la surface supérieure du rebord de barquette ; éventuellement le dispositif de chauffage interne (200) étant porté à la seconde température après que le dispositif de chauffage périphérique (202) entre en contact avec le film, avec le film (18) étant en contact avec le support (4) ou la barquette, et après que la surface chauffante du dispositif de chauffage périphérique (202) est portée à la première température.

17. Procédé d'emballage d'un produit disposé sur un support, utilisant un appareil selon l'une quelconque des revendications précédentes, le procédé comprenant les étapes suivantes :
- positionnement d'un ou plusieurs supports en correspondance desdites une ou plusieurs assises,
- positionnement d'au moins une portion de film, sous la forme d'une portion longitudinale d'une feuille continue ou sous la forme d'une feuille de film discrète prédécoupée, au-dessus des un ou plusieurs supports respectifs localisés dans lesdites une ou plusieurs assises,
- maintien des outils supérieur et inférieur dans ledit premier état de marche sur une durée suffisante pour que les supports et la portion de film (18a) correspondante se positionnent correctement,
- déplacement des outils supérieur et inférieur dans ledit second état de marche avec ladite portion de film (18a) positionnée au-dessus du support ou des supports (4) respectif·s,
- thermoscellage de la portion de film (18a) au support (4), l'étape de thermoscellage comprenant les sous-étapes suivantes :
• le fait d'amener la surface chauffante du dispositif de chauffage périphérique (202) à entrer en contact avec la surface supérieure de portion de film du support ou des supports (4) localisé·s dans ladite assise ou lesdites assises,
• accroissement d'une température de la surface chauffante du dispositif de chauffage périphérique (202) jusqu'à une première température,
• maintien de la surface chauffante du dispositif de chauffage périphérique (202) au moins à la première température sur un premier intervalle de temps discret,
• réduction de la température de la surface chauffante du dispositif de chauffage périphérique (202) en-dessous de ladite première température,
• le fait d'amener la surface chauffante du dispositif de chauffage interne (200) à entrer en contact ou être placée à une distance prédéfinie depuis la surface supérieure de ladite portion de film,
• accroissement d'une température de la surface chauffante du dispositif de chauffage interne (200) jusqu'à une seconde température, maintien de la surface chauffante du dispositif de chauffage interne (200) au moins à la seconde température sur un second intervalle de temps discret, réduction de la température de la surface chauffante du dispositif de chauffage interne (200) en-dessous de ladite seconde température,
- positionnement des outils supérieur et inférieur dans ledit premier état de marche,
- éloignement du nombre de supports avec le film fermement fixé de l'ensemble d'emballage.
